(19) Europäisches Patentamt
European Patent Office
Office européen des brevets

(11) Veröffentlichungsnummer: **0 214 093**
**B1**

(12) **EUROPÄISCHE PATENTSCHRIFT**

(45) Veröffentlichungstag der Patentschrift: **03.01.90**

(51) Int. Cl.[4]: **C09B 62/04**, C09B 62/503, D06P 1/38

(21) Anmeldenummer: **86810348.2**

(22) Anmeldetag: **08.08.86**

(54) **Reaktivfarbstoffe, deren Herstellung und Verwendung.**

(30) Priorität: **14.08.85 CH 3503/85**

(43) Veröffentlichungstag der Anmeldung: **11.03.87 Patentblatt 87/11**

(45) Bekanntmachung des Hinweises auf die Patenterteilung: **03.01.90 Patentblatt 90/1**

(84) Benannte Vertragsstaaten: **BE CH DE FR GB IT LI**

(56) Entgegenhaltungen:
**EP-A- 0 074 928**
**EP-A- 0 085 025**
**EP-A- 0 144 766**
**DE-A- 2 040 620**

(73) Patentinhaber: **CIBA-GEIGY AG, Klybeckstrasse 141, CH-4002 Basel(CH)**

(72) Erfinder: **Tzikas, Athanassios, Dr., Muttenzerstrasse 78, CH-4133 Pratteln(CH)**
Erfinder: **Aeschlimann, Peter, Sandweg 16, CH-4123 Allschwil(CH)**
Erfinder: **Herzig, Paul, Markgräflerstrasse 20, CH-4057 Basel(CH)**

**EP 0 214 093 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikationen, aufweisen.

Für das Färben von Baumwolle nach dem Kaltverweilverfahren werden heute Reaktivfarbstoffe gefordert, die eine ausreichende, der niedrigen Färbetemperatur angepaßte Substantivität haben, und die zugleich eine gute Auswaschbarkeit der nicht fixierten Anteile aufweisen. Sie sollen ferner eine hohe Reaktivität besitzen, so daß nur kurze Verweilzeiten erforderlich sind, und sie sollen insbesondere Färbungen mit hohen Fixiergraden liefern.

Es sind bereits z.B. aus der EP-A 0 085 025 faserreaktive Farbstoffe, enthaltend einen Rest

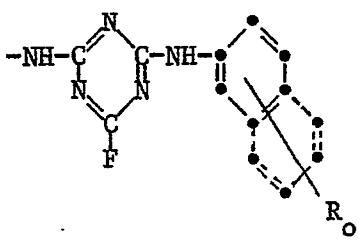

,

worin $R_o$ β-Acetoxyäthylsulfonyl, β-Aethylcarbonyloxyäthylsulfonyl, β-Acetoxyäthylsulfonylmethyl, β-Benzoyloxyäthylsulfonyl, β-Tosyloxyäthylsulfonyl oder β-Methylsulfonyloxyäthylsulfonyl bedeutet und der Benzol- bzw. Naphthalinrest ausser $R_o$ weitere Substituenten enthalten kann, bekannt. Die oben genannten Anforderungen werden jedoch von den bekannten Farbstoffen nur in ungenügendem Masse erfüllt.

Der vorliegenden Erfindung lag die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch die hohe Fixierausbeuten und hohe Fasers-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte Aufgabe gelöst wird.

Gegenstand der Erfindung sind Reaktivfarbstoffe der Formel

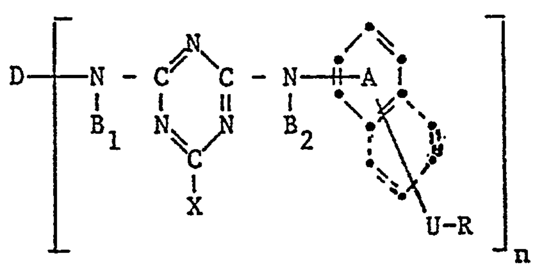

(1) ,

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $B_1$ und $B_2$ unabhängig voneinander Wasserstoff oder Alkyl mit 1 bis 4 Kohlenstoffatomen, das durch Carboxy, Sulfo, Cyan oder Hydroxy substituiert sein kann; X Fluor, Chlor, Brom, Sulfo, Alkylsulfonyl mit 1 bis 4 C-Atomen oder Phenylsulfonyl; U -CO- oder $-SO_2-$; R ein Rest der Formel

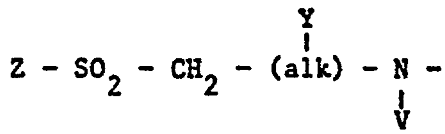 (1a)

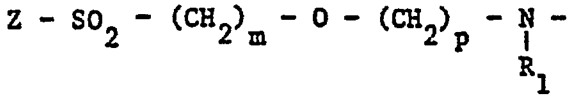 (1b)

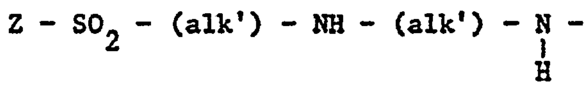 (1c)

oder 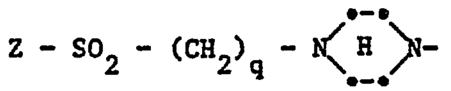 (1d);

Z Sulfatoäthyl-, β-Thiosulfatoäthyl-, β-Phosphatoäthyl-, β-Acetoxyäthyl-, β-Halogenäthyl oder Vinyl; alk ein Polymethylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;

V Wasserstoff oder ein Alkylrest mit 1 bis 4 C-Atomen, der durch Carboxy, Sulfo, Carbamoyl, N-Methyl-, N-Aethyl-, N,N-Dimethyl- oder N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- oder N,N-Diäthylsulfamoyl, Methylsulfonyl, Aethylsulfonyl, Propylsulfonyl, Alkoxygruppen mit 1 bis 2 C-Atomen, Halogen oder Hydroxy substituiert sein kann; oder ein Rest

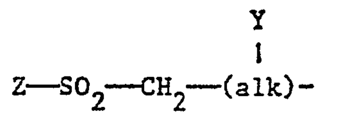 ,

worin Z, alk und Y die angegebenen Bedeutungen haben; $R_1$ Wasserstoff oder $C_{1-6}$-Alkyl; alk' unabhängig voneinander Polymethylenreste mit 2 bis 6 C-Atomen oder deren verzweigte Isomere; n = 1 oder 2, m = 1 bis 6, p = 1 bis 6 und q = 1 bis 6 ist; wobei, falls U $-SO_2-$ ist, V nicht Wasserstoff sein darf; und der Benzol- bzw. Naphthalinrest A weitere Substituenten enthalten kann.

Der Rest D in Formel (1) kann an seinem Grundgerüst die bei organischen Farbstoffen üblichen Substituenten gebunden enthalten.

Als Beispiele für weitere Substituenten im Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $B_1$ bzw. $B_2$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für $B_1$ und $B_2$ seien die folgenden Rest genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $B_1$ bzw. $B_2$ Wasserstoff, Methyl oder Aethyl.

Der als Anion abspaltbare Substituent X ist eine Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfonsäuregruppe. Vorzugsweise ist X Fluor oder Chlor.

Als β-Halogenäthyl kommt für Z insbesondere der β-Chloräthylrest in Betracht. Der Polymethylenrest alk ist vorzugsweise Methylen, Aethylen, Methylmethylen, Propylen oder Butylen. Der Substituent Y ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4. Als weitere Substituenten am Benzol- bzw. Naphthalinrest A kommen die gleichen in Betracht, die weiter oben bei der Erläuterung des Restes D genannt sind.

Der in eckige Klammern eingeschlossene Teil von Formel (1) ist ein Reaktivrest, welcher ein- oder zweimal im Molekül vorhanden sein kann; beide Formalvarianten sind gleich wichtig. Falls n = 2 ist, können die beiden Reaktivreste gleich oder verschieden sein; vorzugsweise sind beide Reste gleich. Der Reaktivrest enthält zwei Substituenten, X und Z, die faserreaktive Abgangsgruppen sind, z.B. für X = F, bzw. enthalten, z.B. wenn Z β-Chloräthyl ist, oder die nach Art von faserreaktiven Abgangsgruppen wirksam werden können, z.B. falls Z Vinyl ist. Unter faserreaktiven Verbindungen sind solche zu verstehen, die mit den Hydroxygruppen der Cellulose, den Amino-, Carboxy, Hydroxy- und Thiolgruppen bei Wolle und Seide, oder mit den Amino- und eventuell Carboxygruppen von synthetischen Polyamiden unter Bildung kovalenter chemischer Bindung zu reagieren vermögen.

Bevorzugte Ausführungsformen der Reaktivfarbstoffe der Formel (1) sind:

a) Reaktivfarbstoffe der Formel (1), worin X Fluor oder Chlor ist.
b) Reaktivfarbstoffe gemäss a), worin Z β-Chloräthyl ist.
c) Reaktivfarbstoffe gemäss b), worin U -CO- ist.

Die unter a) bis c) jeweils nicht genannten Symbole der Formel (1) haben die bei der Erläuterung der Formel (1) angegebenen Bedeutungen. In Betracht zu ziehen sind insbesondere auch Kombinationen von Merkmalen gemäss a) bis c). Bevorzugt sind weiterhin:

d) Reaktivfarbstoffe der Formel (1) oder gemäss a) bis c), worin D der Rest eines Mono- oder Disazofarbstoffes ist.

e) Reaktivfarbstoffe der Formel (1) oder gemäss a) bis c), worin D der Rest eines Metallkomplexazo- oder Formazanfarbstoffes ist.

f) Reaktivfarbstoffe der Formel (1) oder gemäss a) bis c), worin D der Rest eines Anthrachinonfarbstoffes ist.

g) Reaktivfarbstoffe der Formel (1) oder gemäss a) bis c), worin D der Rest eines Phthalocyaninfarbstoffes ist.

h) Reaktivfarbstoffes gemäss e), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

Bevorzugt sind insbesondere:

i) Reaktivfarbstoffe der Formel

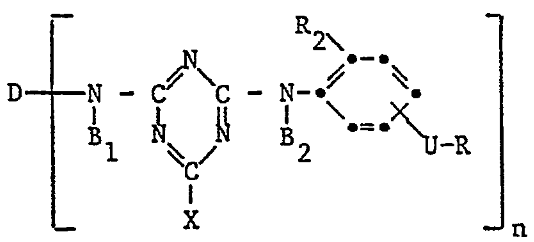

(2) ,

worin $R_2$ Wasserstoff, $C_{1-4}$-Alkyl, $C_{1-4}$-Alkoxy, Halogen, Hydroxy, Carboxy oder Sulfo ist; und D, $B_1$, $B_2$, X, U, R und n die unter Formel (1) angegebenen Bedeutungen haben.

j) Reaktivfarbstoffe gemäss d) oder e), worin D ein Mono- oder Disazofarbstoffrest der Formel

$D_1 - N = N - (M - N = N)_q - K -$ (3a),

$- D_1 - N = N - (M - N = N)_q - K$ (3b),

oder $- D_1 - N = N - (M - N = N)_q - K -$ (3c),

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substitutenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; q = 0 oder 1 ist; und $D_1$, M und K zusammen mindestens zwei Sulfogruppen, vorzugsweise drei oder vier Sulfogruppen, enthalten.

k) Reaktivfarbstoffe gemäss d), worin D ein Disazofarbstoffrest der Formel

$D_1 - N = N - K - N = N - D_2 -$ (4a),

oder $- D_1 - N = N - K - N = N - D_2 -$ (4b),

$D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzylaminogruppen oder Halogenatome, tragen können; und $D_1$, $D_2$ und K zusammen mindestens zwei Sulfogruppen, vorzugsweise drei oder vier Sulfogruppen enthalten.

l) Reaktivfarbstoffe gemäss f), worin D der Rest eines Anthrachinonfarbstoffes der Formel

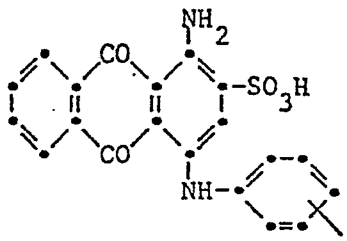

(5)

ist; wobei der Anthrachinonkern durch eine weitere Sulfogruppe und der Phenylenrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

m) Reaktivfarbstoffe gemäss g), worin D der Rest eines Phthalocyaninfarbstoffes der Formel

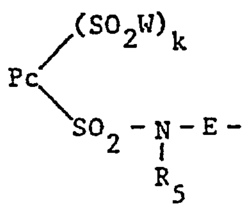

(6) ,

Pc der Rest eines Kupfer- oder Nickelphthalocyanins; W -OH- und/oder $-NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

n) Reaktivfarbstoffe gemäss j), der Formel

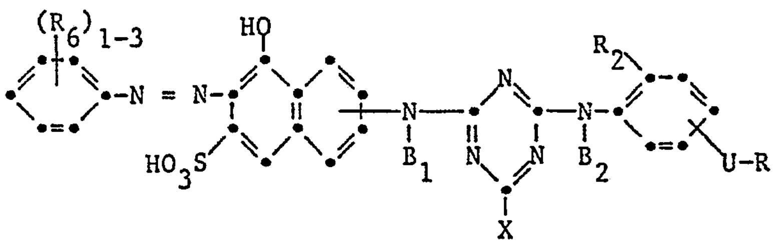

(7) ,

worin $R_6$ für 1 bis 3 Substituenten aus der Gruppe $C_{1-4}$-Alkyl, $C_{1-4}$-Alkoxy, Halogen, Carboxy und Sulfo steht; und $B_1$, $B_2$, X, U, R und $R_2$ die unter Formel (2) angegebenen Bedeutungen haben.

o) Reaktivfarbstoffe gemäss j), der Formel

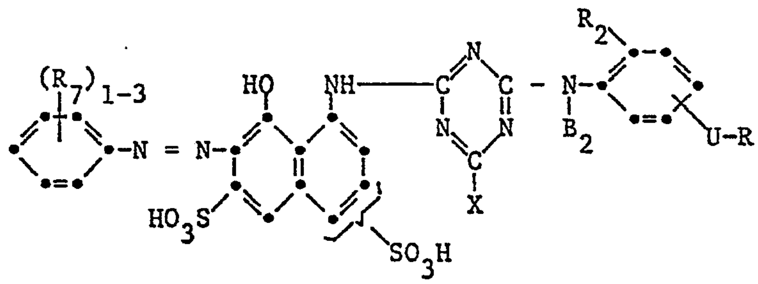

(8) ,

worin $R_7$ für 1 bis 3 Substituenten aus der Gruppe $C_{1-4}$-Alkyl, $C_{1-4}$-Alkoxy, Halogen Carboxy und Sulfo steht; und $B_2$, X, U, R und $R_2$ die unter Formel (2) angegebenen Bedeutungen haben.

p) Reaktivfarbstoffe gemäss j), der Formel

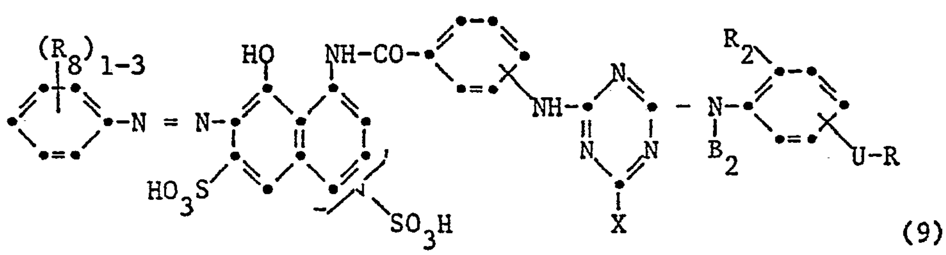

(9) ,

worin $R_8$ für 1 bis 3 Substituenten aus der Gruppe $C_{1-4}$-Alkyl, $C_{1-4}$-Alkoxy, Halogen, Carboxy und Sulfo steht; und $B_2$, X, U, R und $R_2$ die unter Formel (2) angegebenen Bedeutungen haben.

q) Reaktivfarbstoffe gemäss j), der Formel

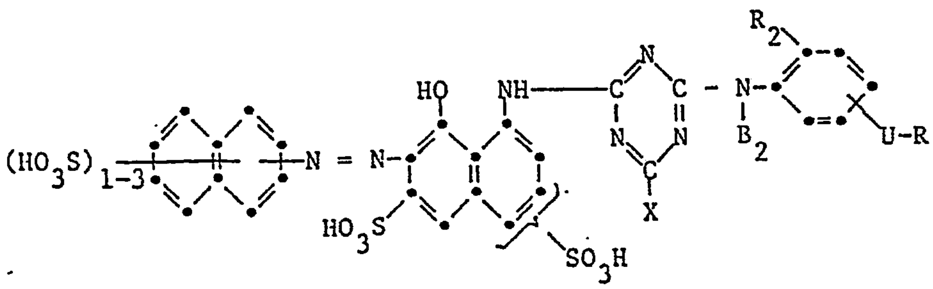

(10) ,

worin $B_2$, X, U, R und $R_2$ die unter Formel (2) angegebenen Bedeutungen haben.

r) Reaktivfarbstoffe gemäss j), der Formel

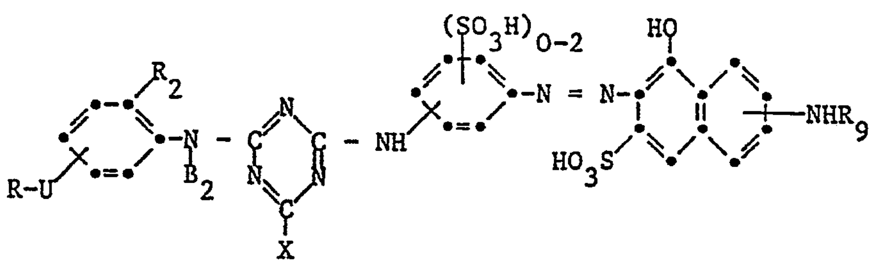

(11) ,

worin $R_9$ Wasserstoff oder $C_{1-4}$-Alkanoyl ist; und $B_2$, X, U, R und $R_2$ die unter Formel (2) angegebenen Bedeutungen haben.

s) Reaktivfarbstoffe gemäss j), der Formel

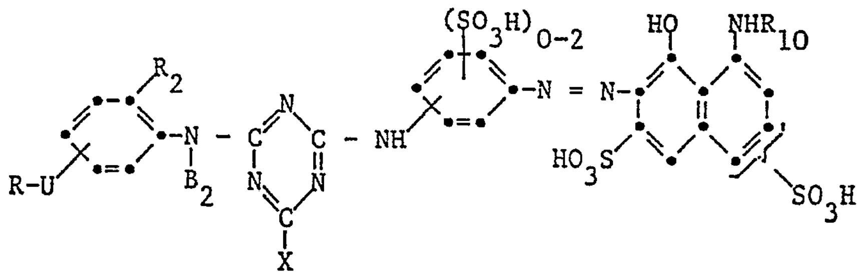

(12) ,

worin $R_{10}$ Wasserstoff, $C_{1-4}$-Alkanoyl oder Benzoyl ist; und $B_2$, X, U, R und $R_2$ die unter Formel (2) angegebenen Bedeutungen haben.

t) Reaktivfarbstoffe gemäss j), der Formel

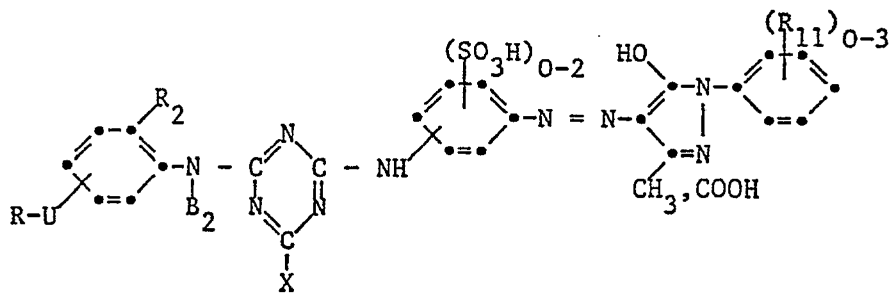

(13) ,

worin $R_{11}$ für 0 bis 3 Substituenten aus der Gruppe $C_{1-4}$-Alkyl, $C_{1-4}$-Alkoxy, Halogen, Carboxy und Sulfo steht; und $B_2$, X, U, R und $R_2$ die unter Formel (2) angegebenen Bedeutungen haben.

u) Reaktivfarbstoffe gemäss j), der Formel

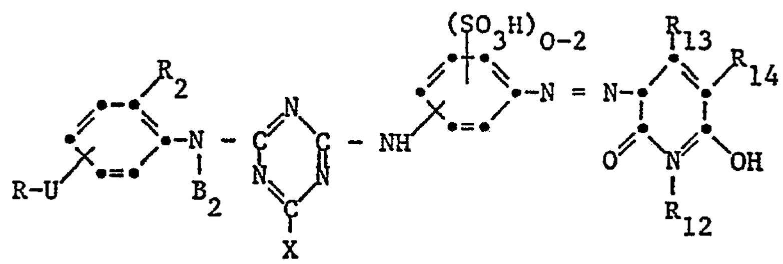

(14) ,

worin $R_{12}$ und $R_{13}$ unabhängig voneinander Wasserstoff, $C_{1-4}$-Alkyl oder Phenyl, und $R_{14}$ Wasserstoff, Cyano, Carbamoyl oder Sulfomethyl ist; und $B_2$, X, U, R und $R_2$ die unter Formel (2) angegebenen Bedeutungen haben.

v) Reaktivfarbstoffe gemäss k), der Formel

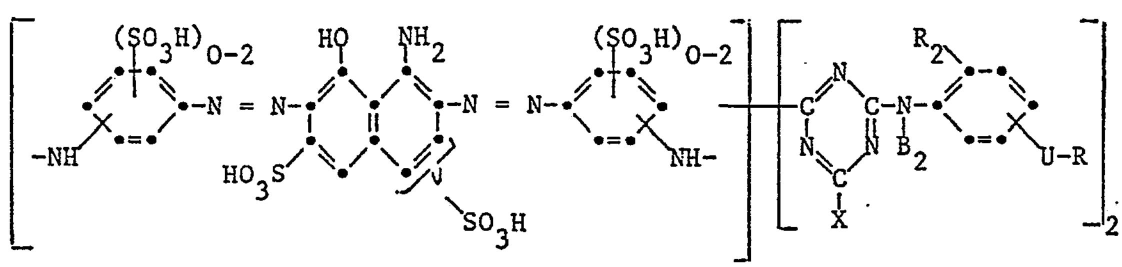

(15) ,

worin $B_2$, X, U, R und $R_2$ die unter Formel (2) angegebenen Bedeutungen haben.

w) Schwermetallkomplexe von Reaktivfarbstoffe der Formeln (1) bis (15); als komplexbildende Schwermetalle kommen vor allem Kupfer, Nickel, Kobalt oder Chrom in Betracht.

Bevorzugt sind insbesondere Verbindungen der Formeln (1) bis (15), worin Z die β-Sulfatoäthyl-, β-Chloräthyl- oder Vinylgruppe ist.

Man erhält die Reaktivfarbstoffe der Formel (1), indem man einen organischen Farbstoff der Formel

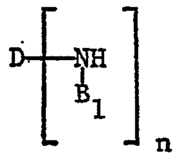

(16)

oder ein Farbstoffvorprodukt, mindestens ein Aequivalent eines s-Triazins der Formel

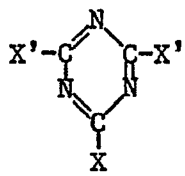

(17),

und mindestens ein Aequivalent eines Amins der Formel

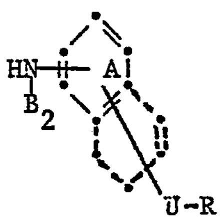

(18)

in beliebiger Folge zu einem Reaktivfarbstoff der Formel (1) umsetzt wobei D, $B_1$, U, $B_2$, n, R und A die unter Formel (1) angegebenen Bedeutungen haben, und X und X' unabhängig voneinander eine der unter Formel (1) für X genannten Bedeutungen haben; oder, im Falle der Verwendung von Farbstoffvorprodukten, die erhaltenen Zwischenprodukte in die gewünschten Endfarbstoffe überführt.

Das molare Verhältnis der Ausgangsstoffe muss der Zusammensetzung des Endprodukts entsprechend gewählt werden, je nachdem ob n=1 oder 2 ist.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass man einen Farbstoff der Formel

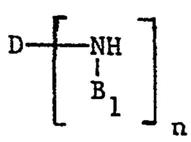

(16)

zunächst mit einem reaktionsfähigen Derivat des s-Triazins der Formel

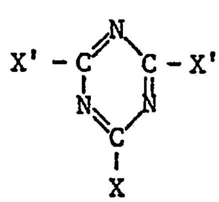

(17)

kondensiert, und die erhaltene Verbindung der Formel

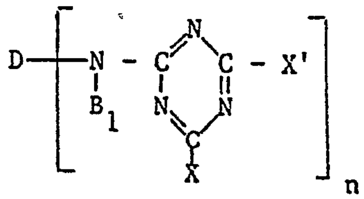

(19)

anschliessend mit einem Amin der Formel

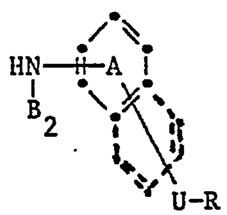

(18)

zu einem Reaktivfarbstoff der Formel (1) kondensiert.

Nach einem abgeänderten Verfahren können Reaktivfarbstoffe der Formel (1) hergestellt werden, indem man eine Komponente dieses Farbstoffes, die einen Rest der Formel

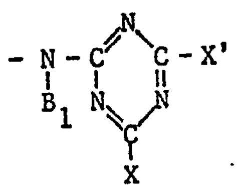

(20)

enthält, worin X und X' die für Formel (17) geltenden Bedeutungen haben, mit einer zur Herstellung des Farbstoffs benötigten zweiten Komponente, die gegebenenfalls einen Rest der Formel (20) enthält, umsetzt, und den so erhaltenen Farbstoff der Formel (19) mit einem Amin der Formel (18) kondensiert.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (18) dem Triazin der Formel (17) und dem organischen Farbstoff der Formel (16) oder einem Vorprodukt zweckmässigerweise zuerst ausgeführt wird, die des Triazins mit der Verbindung der Formel (18) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B durch Veresterung oder eine Additionsreaktion. Beispielsweise kann man einen Farbstoff, worin Z ein Rest $HO\text{-}CH_2CH_2\text{-}$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Z die Gruppe $H_2C{=}CH\text{-}$ ist, und lagert an das Zwischenprodukt Thioschwefelsäure an, wobei ein Rest $HO_3SS\text{-}CH_2CH_2\text{-}$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes in eine Verbindung der Formel (1) oder ein Zwischenprodukt anstelle der Sulfatogruppe, beispielsweise einer Thiosulfatogruppe erfolgt in an sich bekannter Weise. Der Weg der Herstellung über eine Zwischenstufe anstelle der Sulfatogruppe, beispielsweise einer Thiosulfatogruppe erfolgt in an sich bekannter Weise. Der Weg der Herstellung über ein Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzte Farbstoffe sind: Monoazo-, Disazo-, Trisazo-, Metallkomplexazo-, Formazan- und Azomethinfarbstoffe. Grundsätzlich lassen sich die Reaktivfarbstoffe der Formel (1) sämtlicher Farbstoffklässen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste der Formel

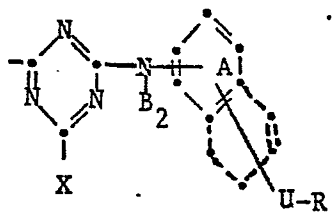

(21)

an die Diazo- oder Kupplungskomponente, oder, falls n = 2 ist, an verschiedene oder gleiche Reste von Ausgangskomponenten, d.h. Diazo- oder Kupplungskomponenten, gebunden. Vorzugsweise sind, für den Fall, dass n=2 ist, die beiden Reaktivreste an je eine Komponente, Diazokomponente oder Kupplungskomponente, gebunden. Die Reaktivfarbstoffe haben dann z.B. die Formeln

$$\text{Ⓡ}-N(R')-D_1-N=N-K \qquad (22)$$

$$D_1-N=N-K-N(R'')-\text{Ⓡ} \qquad (23)$$

und

$$\text{Ⓡ}-N(R')-D_1-N=N-K-N(R'')-\text{Ⓡ} \qquad (24)$$

worin R' und R" unabhängig voneinander die gleiche Bedeutung haben wie $B_1$ in der Formel (1), $D_1$ der Rest einer Diazokomponente, und K der Rest einer Kupplungskomponente ist, und ® einen Reaktivrest der Formel (21) bedeutet.

Falls man von Farbstoffvorprodukten ausgeht, gelangt man zu den Reaktivfarbstoffen der Formel (1), indem man eine Komponente des Farbstoffes der Formel (16), die eine Gruppe-$N(B_1)H$ enthält, und ein Triazin der Formel (17) kondensiert, vorher oder nachher mit einer Verbindung der Formel (18) kondensiert, und mit der anderen Komponente des Farbstoffes der Formel (16) umsetzt. Bei der Herstellung der bevorzugten Azofarbstoffe müssen die Diazokomponenten und die Kupplungskomponente zusammen mindestens eine Aminogruppe -$N(B_1)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem 2,4,6-Trihalogen-triazin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden, Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy- oder Carboxygruppen, enthalten, vor oder gegebenenfalls auch nach der Kondensation mit dem 2,4,6-Trihalogen-triazin der Formel (17) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Organische Farbstoffe der Formel (16)

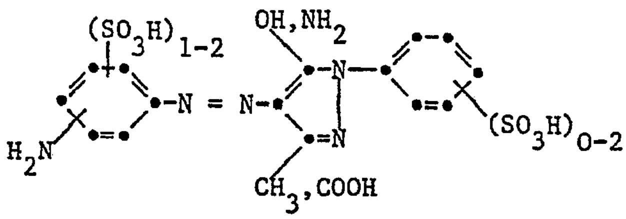

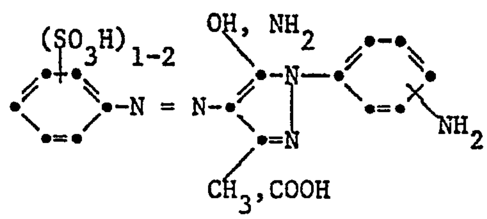

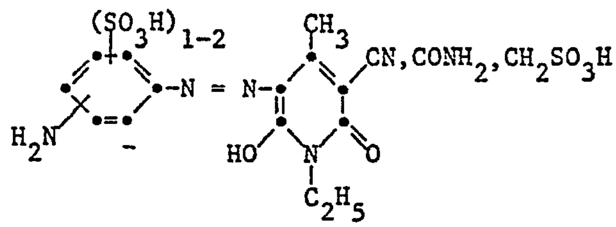

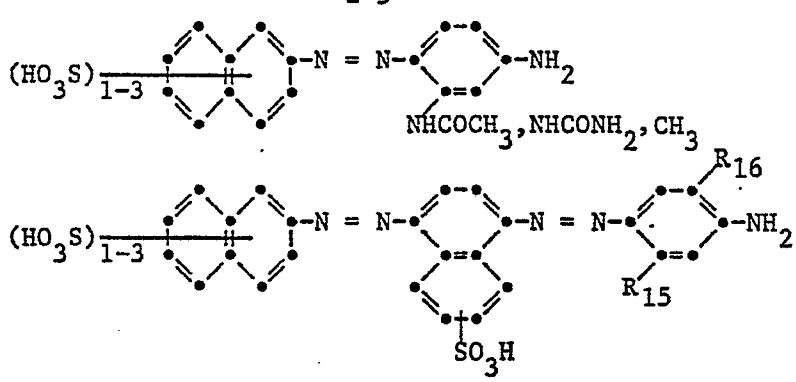

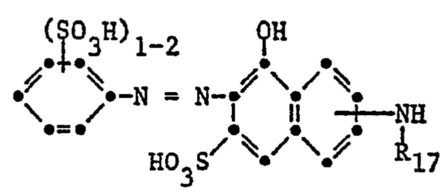

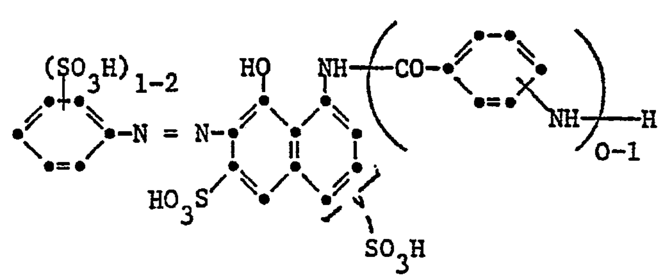

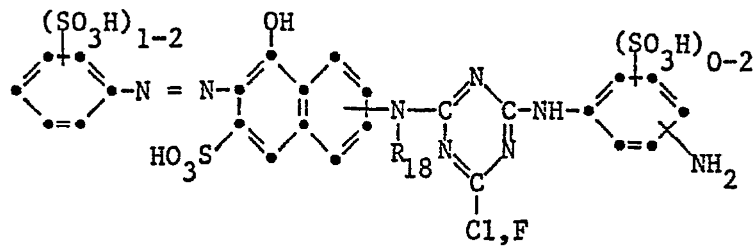

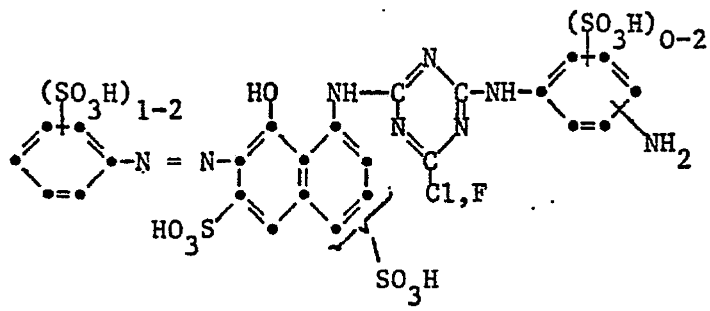

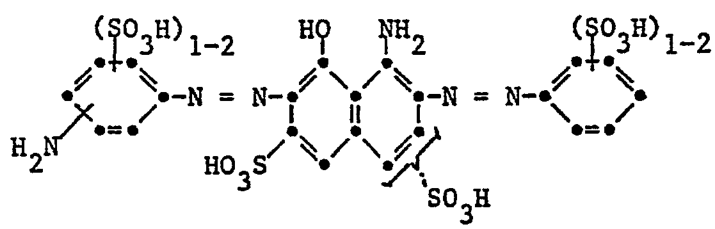

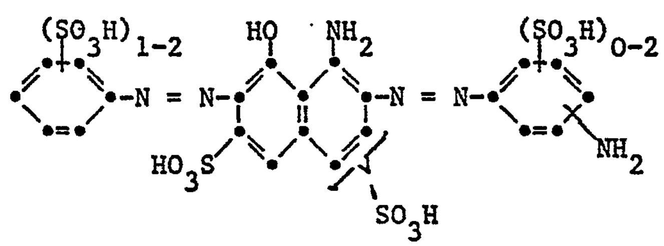

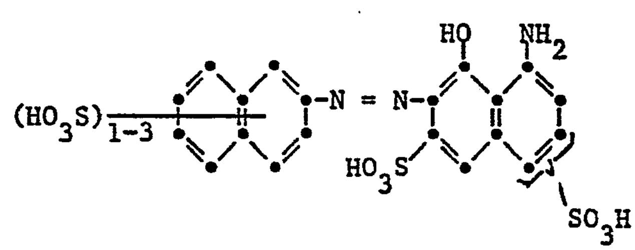

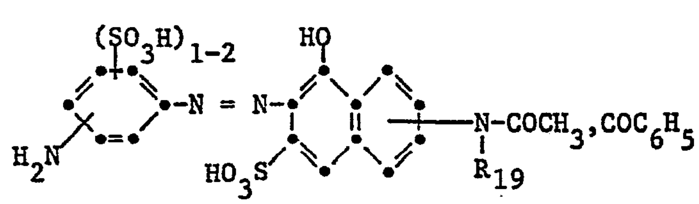

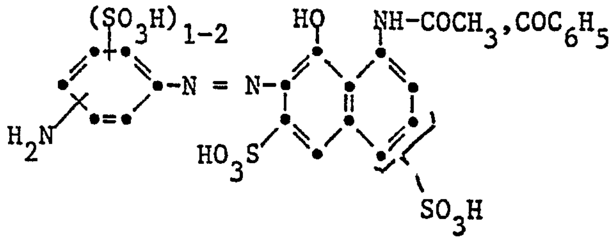

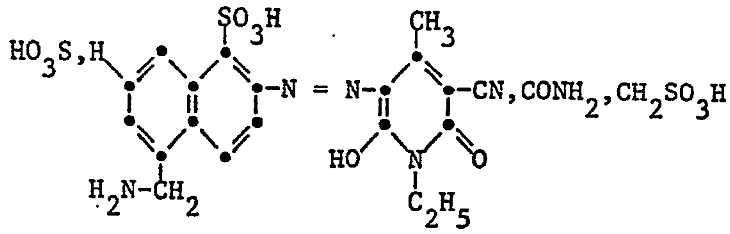

Metallkomplexe von Farbstoffen der Formeln:

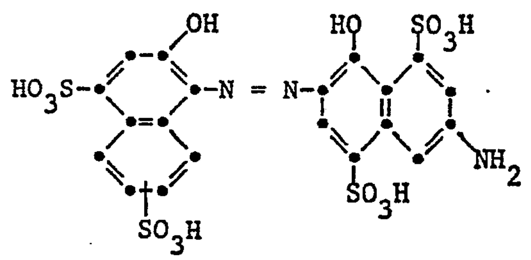

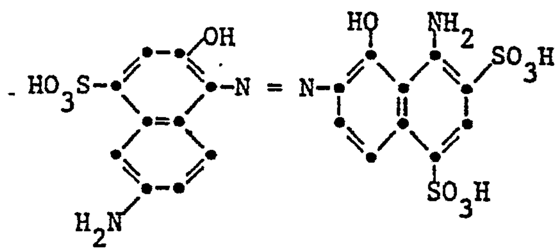

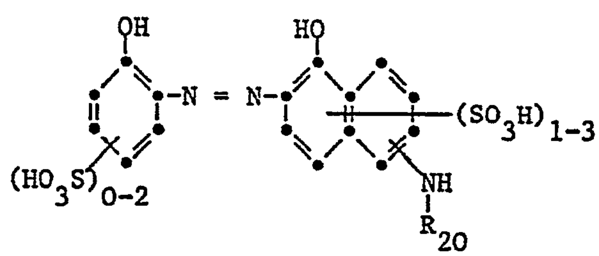

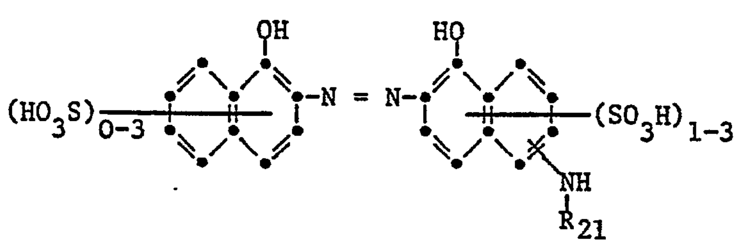

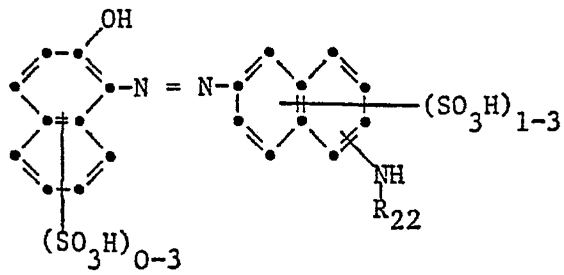

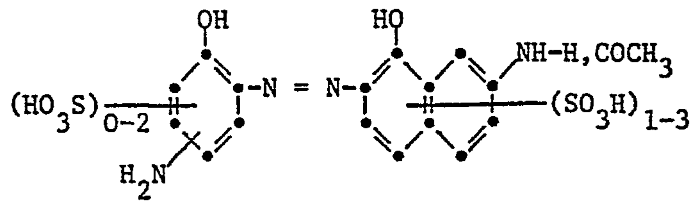

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. die können symmetrisch oder mit beliebigen anderen Liganden unsymmetrisch aufgebaut sein.

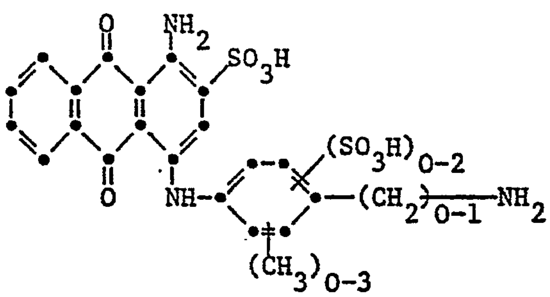

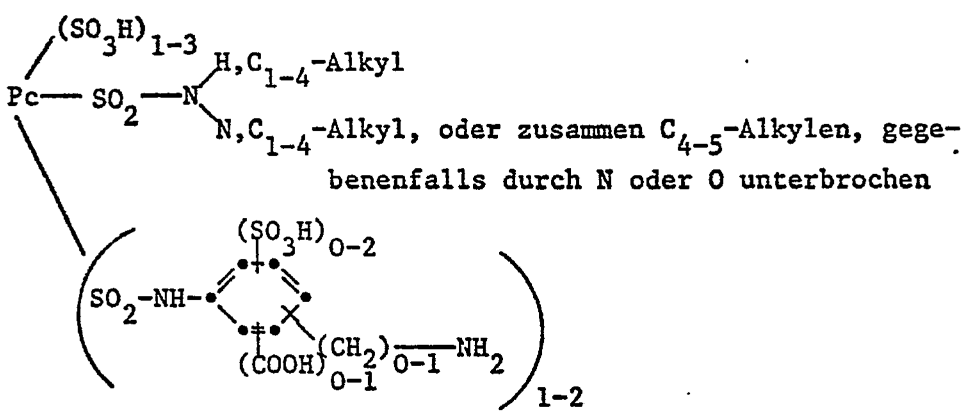


In dieser Formel steht Pc für den Cu- oder Ni-Phthalocyaninrest, die Gesamtzahl der Substituenten am Pc-Gerüst ist 4.

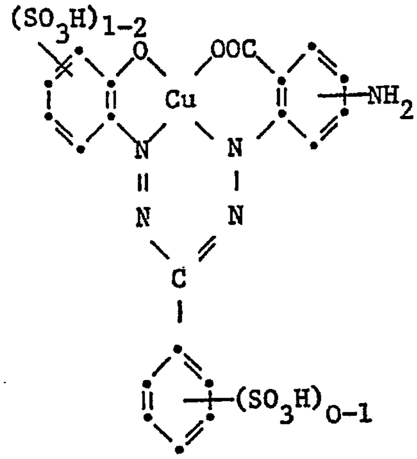

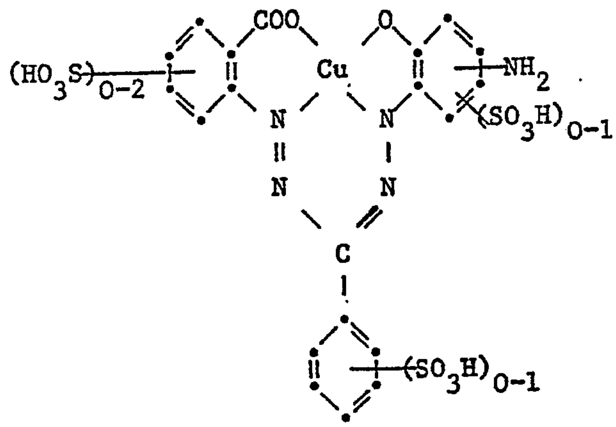

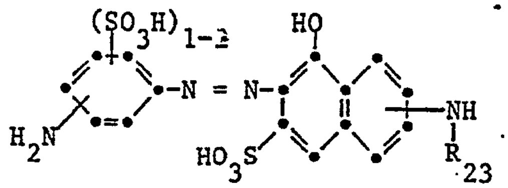

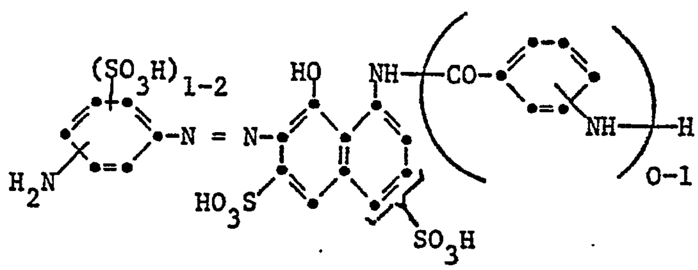

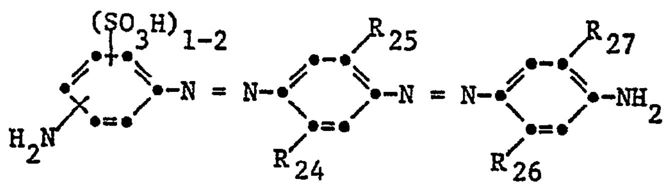

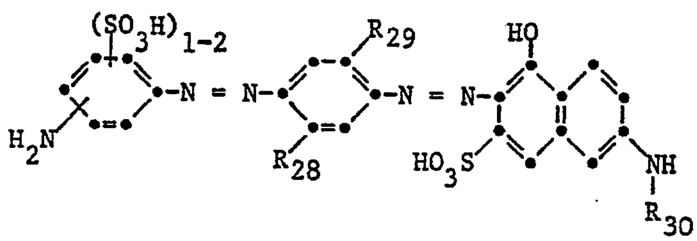

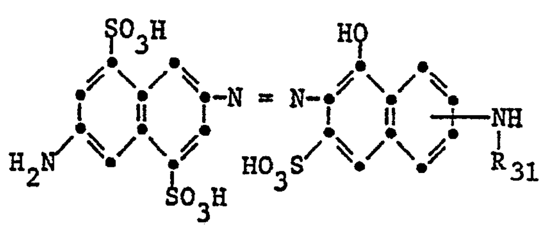

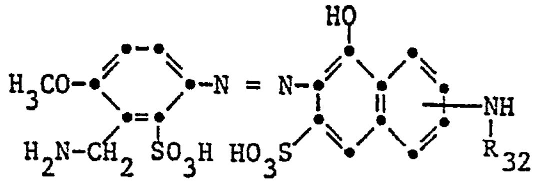

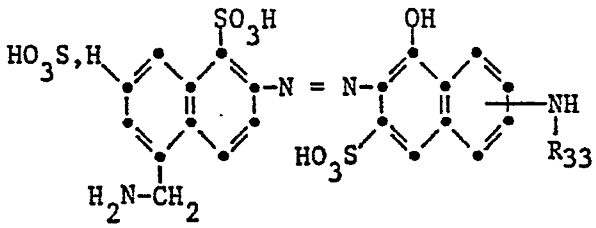

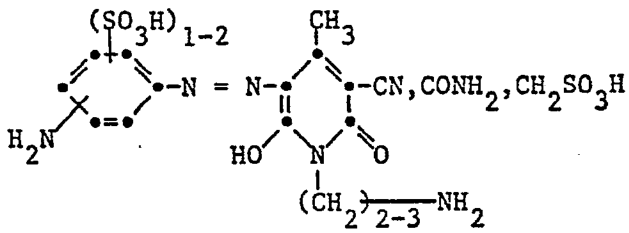

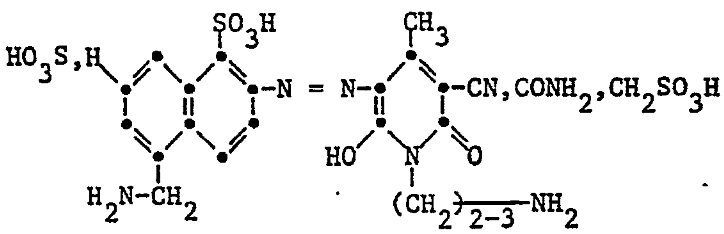

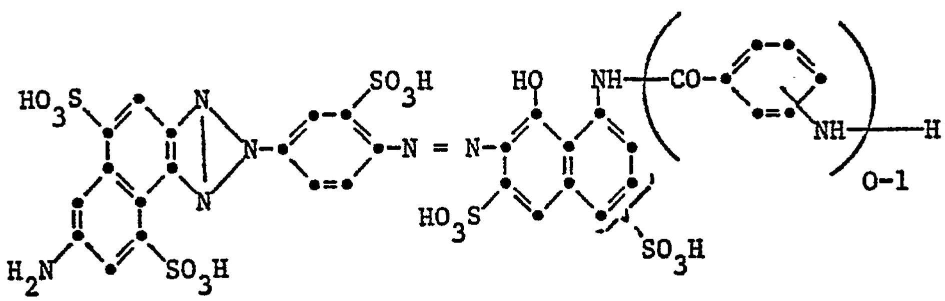

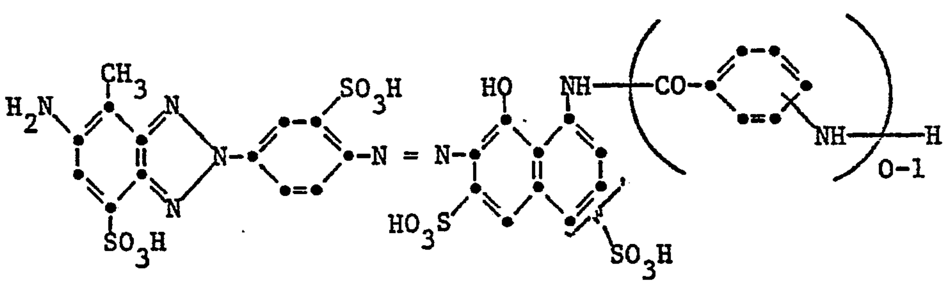

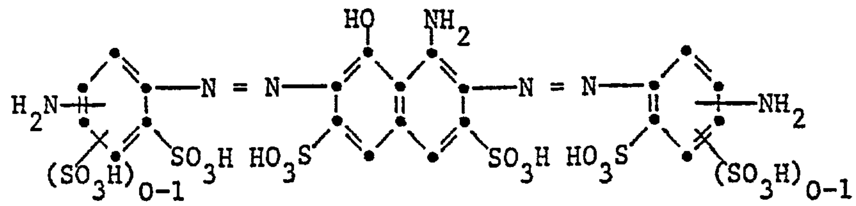

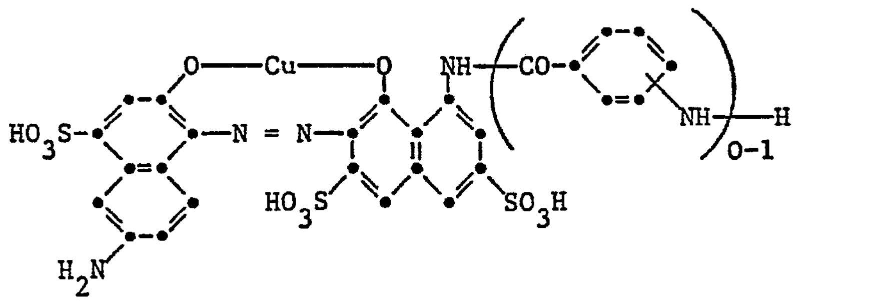

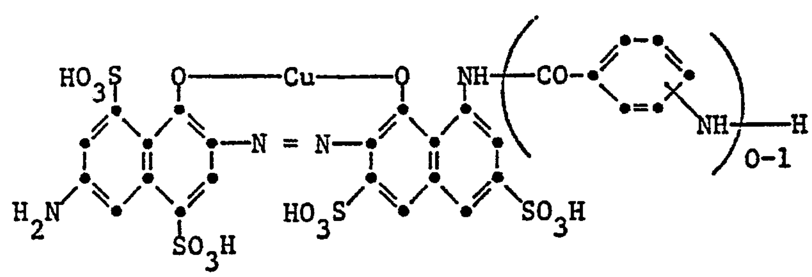

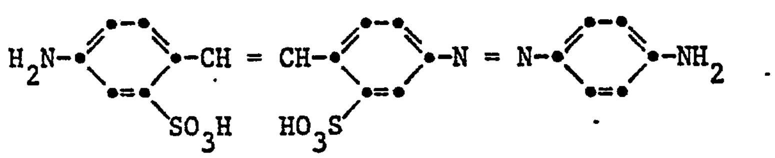

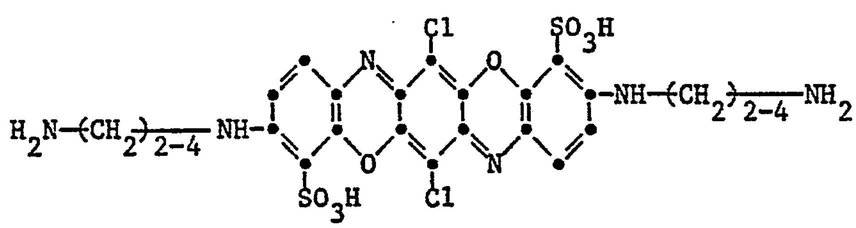

In den oben aufgeführten Formeln bedeuten die Reste $R_{17}$ bis $R_{23}$ und $R_{30}$ bis $R_{33}$ Wasserstoff oder $C_{1-4}$-Alkyl, und die Reste $R_{15}$, $R_{16}$ und $R_{24}$ bis $R_{29}$ Wasserstoff, $C_{1-4}$-Alkyl, $C_{1-4}$-Alkoxy, $C_{1-4}$-Alkanoylamino, Ureido, oder Halogen, wobei die Reste $R_{15}$, $R_{16}$... etc., die zu ein und derselben Formel gehören, voneinander unabhängig sind. Vorzugsweise bedeuten die Reste $R_{17}$ bis $R_{23}$ und $R_{30}$ die $R_{33}$ Wasserstoff, Methyl oder Aethyl, und die Reste $R_{15}$, $R_{16}$ und $R_{24}$ bis $R_{29}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Methoxy, Aethoxy, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert. Als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

Als Diazo- und Kupplungskomponenten seien einzeln genannt:

Diazokomponenten

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxy-benzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-tri fluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2- , -4-, -5-, -6-, -7- oder -8-sulfonsäure, 2-Aminonaphthalin-1-, -3-, -4-, -5-, -6-, -7- oder 8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5- -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-diamino-2,5-dimethylbenzol, 1,4,-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-dichlorbenzidin, 3,3'-dicarboxybenzidin, 3,3'-Dicarboxymethoxy-benzidin, 2,2'-Dimethylbenzidin, 4,2'- Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzoyl-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welche nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8- hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6-bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxpyridon-(2), N-Acetoacetylaminobenzol, 1-(N-acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo-naphthalin-3,6-disulfonsäure, 1-Amino-8-hydroxy-2-(2',5'-disulfonphenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfatoäthylamino-4-methoxybenzol, 1-Amino-3-sulfo-benzylamino-benzol, 1-Amino-3-sulfo-benzylamino-4-chlorbenzol, 1-Amino-3-N,N-di-sulfobenzylaminobenzol.

Triazine der Formel (17)

2,4,6-Trifluor-s-triazin (Cyanurfluorid), 2,4,6,-Trichlor-s-triazin (Cyanurchlorid), 2,4,6-Tribrom-s-triazin (Cyanurbromid).

Verbindungen der Formel (18)

3-Aminobenzoesäure-N'-β-(β'-chloräthylsulfonyl)-äthylamid,
4-Chlor-3-aminobenzoesäure-N'-β-(β'-chloräthylsulfonyl)-äthylamid,
4-Methyl-3-aminobenzoesäure-N'-β-(β'-choräthylsulfonyl)-äthylamid,
4-Methoxy-3-aminobenzoesäure-N'-β-(β'-chloräthylsulfonyl)-äthylamid,
3-Aminobenzoesäure-N'-β-[β'-(β"-chloräthylsulfonyl)-äthyloxy]-äthylamid,
3-Aminobenzoesäure-N'-γ-(β'-chloräthylsulfonyl)-propylamid,
3-Aminobenzoesäure -N'-bis-[β-(β'-chloräthylsulfonyl)-äthyl]-amid,
3-Aminobenzoesäure-N'-bis-[γ-(β'-chloräthylsulfonyl)-propyl]-amid,
3-N-Aethylaminobenzoesäure-N'-β-(β'-chloräthylsulfonyl)-äthylamid,
3-N-Isopropylaminobenzoesäure-N'-β-(β'-chloräthylsulfonyl)-äthylamid,
3-N-Isopropylaminobenzoesäure-N'-γ-(β'-chloräthylsulfonyl)-propylamid,
4-Aminobenzoesäure-N'-β-(β'-chloräthylsulfonyl)-äthylamid,
4-Aminobenzoesäure-N'-β-[β'-(β"-chloräthylsulfonyl)-äthyloxy]-äthylamid,
4-Aminobenzoesäure-N'-γ-(β'-chloräthylsulfonyl)-propylamid,
4-Aminobenzoesäure-N'-bis-[β-(β'-chloräthylsulfonyl)-äthyl]-amid,
4-Aminobenzoesäure-N'-bis-[γ-(β'-chloräthylsulfonyl)-propyl]-amid,
4-N-Aethylaminobenzoesäure-N'-β-(β'-chloräthylsulfonyl)-äthylamid,
4-N-Isopropylaminobenzoesäure-N'-γ-(β'-chloräthylsulfonyl)-propylamid,
4-Aminobenzoesäure-N'-β-(vinylsulfonyl)-äthylamid,
4-Aminobenzoesäure-N'-bis-[β-(vinylsulfonyl)-äthyl]-amid,
4-Aminobenzoesäure-N'-δ -(β'-chloräthylsulfonyl)-butylamid,
4-Chlor-3-aminobenzoesäure-N'-bis-[β-(β'-chloräthylsulfonyl)-äthyl]-amid,
4-Methyl-3-aminobenzoesäure-N'-bis-[β-(β'-chloräthylsulfonyl)-äthyl]-amid,
4-Methoxy-3-aminobenzoesäure-N'-bis-[γ-(β'-chloräthylsulfonyl)-propyl]-amid,

3-Aminobenzoesäure-N'-δ-(β'-Chloräthylsulfonyl)-butylamid,
3-Aminobenzoesäure-N'-β-[β'-(β''-chloräthylsulfonyl)-äthyloxy]-äthylamid,
4-Hydroxy-3-aminobenzoesäure-N'-β-(β'-chloräthylsulfonyl)-äthylamid,
4-Hydroxy-3-aminobenzoesäure-N'-bis-[β-(β'-chloräthylsulfonyl)-äthyl]-amid,
4-Methoxy-3-aminobenzosäure-N'-bis-[β-(β'-chloräthylsulfonyl)-äthyl]-amid,
sowie entsprechende Verbindungen, worin die β-Chloräthylsulfonyl-Gruppe durch β-Sulfatoäthylsulfonyl oder Vinylsulfonyl ersetzt ist; weiterhin kommen in Betracht:
4-Amino-3-sulfobenzoesäure-N'-β-(β'-chloräthylsulfonyl)-äthylamid,
4-Amimo-3-sulfobenzoesäure-N'-β-(β'-sulfatoäthylsulfonyl)-äthylamid,
4-Amino-3-sulfobenzoesäure-N'-β-vinylsulfonyl-äthylamid,
3-Amino-2-sulfobenzoesäure-N'-β-vinylsulfonyl-äthylamid,
3-Amino-4-methoxybenzoesäure-N'-β-(β'-sulfatoäthylsulfonyl)-äthylamid,
4-Amino-3-sulfatobenzoesäure-N'-bis-(β-vinylsulfonyl-äthyl)-amid,
3-Amino-4-methoxybenzoesäure-N'-bis-[β-(β'-sulfatoäthylsulfonyl)-äthyl]-amid,
3-Amino-2-sulfobenzoesäure-N'-bis-(β-vinylsulfonyl-äthyl)-amid,
3-Amino-4-methoxybenzoesäure-N'-(γ-vinylsulfonyl-propyl)piperazid,
4-Amino-3-methoxybenzoesäure-N'-bis(β-vinylsulfonyl-äthyl)-amid,
3-Aminobenzoesäure-N'-β-(β'-vinylsulfonyl-äthylamino)-äthylamid,
3-Amino-4-methylbenzoesäure-N'-(β-vinylsulfonyl-äthyl)-piperazid,
4-Amino-3-sulfobenzoesäure-N'-bis-[β-(β'-sulfatoäthylsulfonyl)-äthyl]-amid,
3-Amino-4-methoxybenzoesäure-N'-bis-(β-vinylsulfonyl-äthyl)amid,
3-Amino-4-methoxybenzoesäure-N'-(β-vinylsulfonyl-äthyl)-amid,
4-Amino-3-sulfobenzoesäure-N'-(γ-vinylsulfonyl-propyl)-piperazid,
4-Amino-3-sulfobenzoesäure-N'-β-(β'-vinylsulfonyl-äthylamino)-äthylamid,
3-Amino-4-methylbenzoesäure-N'-β-(β'-sulfatoäthylsulfonyl)-äthylamid,
4-Amino-3-sulfobenzoesäure-N'-bis-[β-(β'-chloräthylsulfonyl)-äthyl]-amid,
4-Amino-3-sulfobenzoesäure-N'-(β-vinylsulfonyl-äthyl)-piperazid,
4-Amino-3-sulfobenzeosäure-N'-β-(β'-vinylsulfonyl-äthylamino)-äthylamid,
5-Amino-1,3-benzoldicarbonsäure-N',N''-(β-vinylsulfonyl-äthyl)-diamid,
4-Amino-3-sulfobenzoesäure-N'-β-(β'-vinylsulfonyl-äthyloxy)-äthylamid,
ferner analoge Aminobenzoesäureamide oder Aminobenzosulfonsäureamide der folgenden Aminoverbindungen:
β-[β'-(β''-Chloräthylsulfonyl)-äthylamino]-äthylamin,
β-(β'-Vinylsulfonyl-äthylamino)-äthylamin,
β-[β'-(β''-Sulfatoäthylsulfonyl)-α'-methyl-äthylamino]-äthylamin,
β-[β'-(β''-Sulfatoäthylsulfonyl)-α'-methyl-äthylamino]-β-methyläthylamin,
γ-[β'-(β''-Sulfatoäthylsulfonyl)-α'-methyl-äthylamino]-propylamin,
δ-[β'-(β''-Sulfatoäthylsulfonyl)-α'-methyl-äthylamino]-n-butylamin.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation des 2,4,6,-Trihalogen-s-triazins mit den organischen Farbstoffen der Formel (16) bzw. den eine Gruppe -N($B_1$)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (18) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einer Verbindung der Formel (18) kann vor oder nach der Kondensation des Halogentriazins mit einem Farbstoff der Formel (16) geschehen. Die Kondensation des Halogentriazins mit einer Verbindung der Formel (18) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Von besonderer Bedeutung sind ferner die Verbindungen der Formel

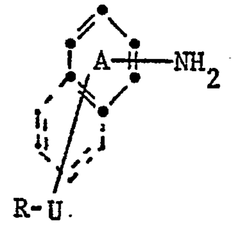

(18)

worin R und U die unter Formel (1) angegebenen Bedeutungen haben.

Die Verbindungen der Formel (18) können hergestellt werden, indem man die entsprechenden Aminobenzoesäure- oder Aminonaphthoesäurechloride bzw. die entsprechenden Sulfonsäurechloride mit Aminen, welche den Resten der Formel (1a) oder (1b) entsprechen, kondensiert; oder man geht von einem Nitrobenzoyl- oder Nitronaphthoylchlorid bzw. -sulfochlorid aus, kondensiert mit dem Amin, und reduziert die Nitrogruppe zur Aminogruppe. Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50° und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide bzw. Sulfonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte überführt werden, in denen die Gruppierung $-SO_2-Z$ die Gruppierung $-SO_2-CH_2-CH_2-O-SO_3H$, $-SO_2-CH_2-CH_2-O-PO_3H_2$, $-SO_2-CH_2-CH_2$-Halogen oder $-SO_2-CH_2-CH_2-O$-Acyl bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxid oder Natriumcarbonat, in entsprechende Verbindungen überführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, die Natriumthiosulfat, mit Dialkylaminen, wie Dimethyl- oder Diäthylamin, oder mit Phenol in Verbindungen überführt werden, in denen die Gruppierung $-SO_2-Z$ die Gruppierung $-SO_2-CH_2-CH_2-S-SO_3H$, $-SO_2-CH_2-CH_2-N(alkyl)_2$ oder

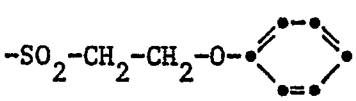

bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

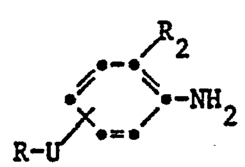

(25)

worin R ein Rest der Formel

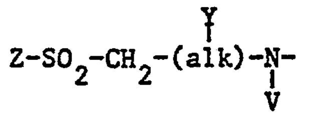 (25a)

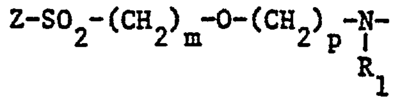 (25b)

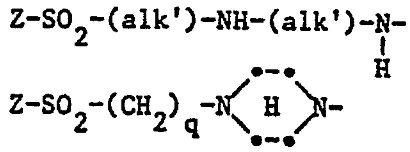 (25c)

oder (25d)

ist; U, Z, alk, A, V, $R_1$, alk', m, p und q die unter Formel (1) angegebenen Bedeutungen haben; und $R_2$ Wasserstoff, $C_{1-4}$-Alkyl, $C_{1-4}$-Alkoxy, Halogen, Hydroxy, Carboxy oder Sulfo ist.

Das bevorzugte Verfahren zur Herstellung der Verbindungen der Formel (25) ist dadurch gekennzeichnet, dass man ein Nitrobenzoylchlorid der Formel

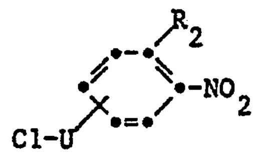 (26)

mit einem Amin der Formel

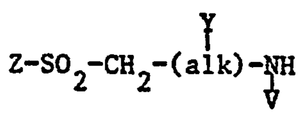 (27)

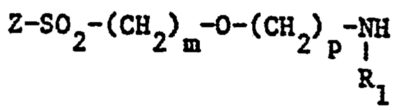 (28)

$Z-SO_2-(alk')-NH-(alk')-NH_2$ (29)

oder 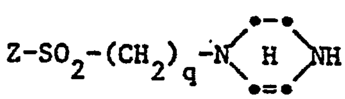 (30)

kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer Abänderung des oben beschriebenen Verfahrens können Verbindungen der Formel (25) auch in der Weise hergestellt werden, dass man ein Nitrobenzoylchlorid der Formel (26) mit einem Amin der Formel

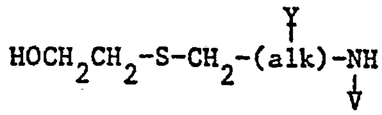 (31)

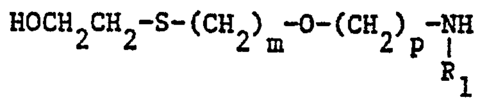 (32)

$HOCH_2CH_2-S-(alk')-NH-(alk')-NH_2$ (33)

oder 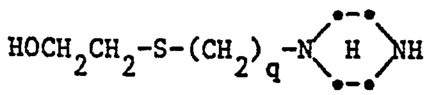 (34).

kondensiert, das Kondensationsprodukt mit elementarem Chlor zu der entsprechenden β-Chloräthylsulfonyl-Verbindung oxydiert und die Nitrogruppe zur Aminogruppe reduziert.

Die Kondensation des Nitrobenzoylchlorids mit den Aminen der Formeln (31) bis (34) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (27) bis (34) können analog dem Verfahren des Beispiels 1 der DE-OS 26 14 550 hergestellt werden.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und hohe Badstabilität aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindung ist in den nachfolgenden Ausführungsbeispielen nicht in allen Fällen beschrieben, sie ergibt sich jedoch ohne weiteres aus der allgemeinen Beschreibung.

Beispiel 1: Eine Lösung von 48,3 Teilen 1-(4'-Sulfophenyl)-3-carboxy-4-(4'-amino-2'-sulfophenylazo)-pyrazolon-5 in 750 Teilen Eiswasser wird bei 0-2°C und ph 5 mit 14 Teilen Cyanurfluorid umgesetzt. Sobald keine freien Aminogruppen mehr nachweisbar sind, werden 30 Teile 4-Aminobenzoesäure-N'-β(β'-chloräthylsulfonyl)-äthylamid-hydrochlorid zugegeben und bei 0-20°C, pH 5-7 umgesetzt. Der nach Fällung mit Kaliumchlorid und schonender Trocknung erhaltene Farbstoff färbt Baumwolle in echten goldgelben Tönen. Er entspricht der Formel

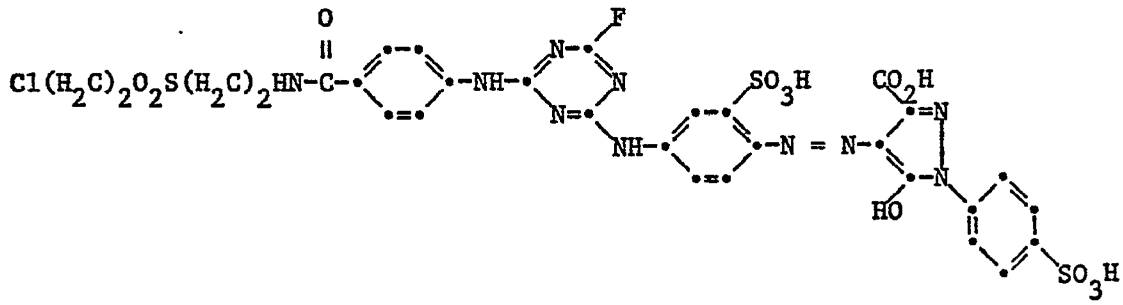

Beispiel 2: Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4'-Sulfophenyl)-3-carboxy-pyrazolon-5 versetzt und bei pH 5-7 gekuppelt. Nach Zugabe einer Lösung von 30 Teilen 4-Aminobenzoesäure-N'-β(β'-chloräthylsulfonyl)-äthylamid wird die Temperatur auf 40°C erhöht und ein pH-Wert von 7,5 eingestellt. Nach beendeter Kondensation wird der Farbstoff mit Kaliumchlorid aus neutraler Lösung abgeschieden und schonend getrocknet. Er färbt Baumwolle in echten gelben Tönen und entspricht der Formel

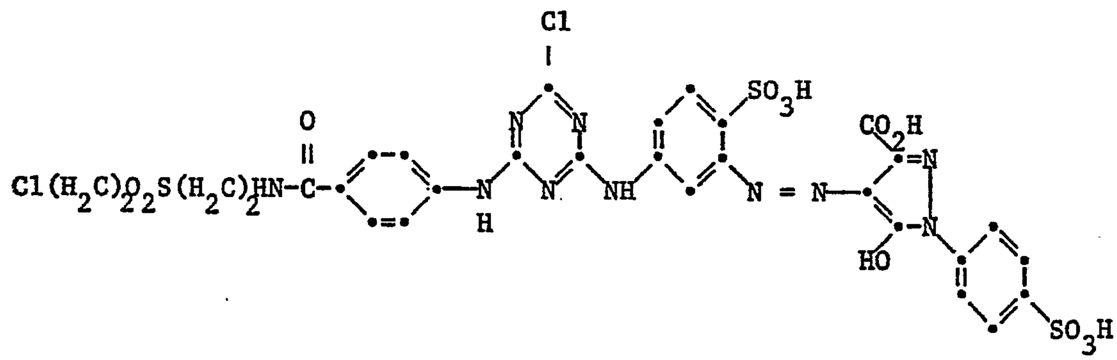

Beispiel 3: Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4'-Sulfophenyl)-3-carboxy-pyrazolon-5 versetzt und bei pH 5-7 gekuppelt. Nach Zugabe einer Lösung von 30 Teilen 3-Aminobenzoesäure-N'-β(β'-chloräthylsulfonyl)-äthylamid wird die Temperatur auf 40°C erhöht und ein pH-Wert von 7,5 eingestellt. Nach beendeter Kondensation wird der Farbstoff mit Kaliumchlorid aus neutraler Lösung abgeschieden und schonend getrocknet. Er färbt Baumwolle in echten gelben Tönen und entspricht der Formel

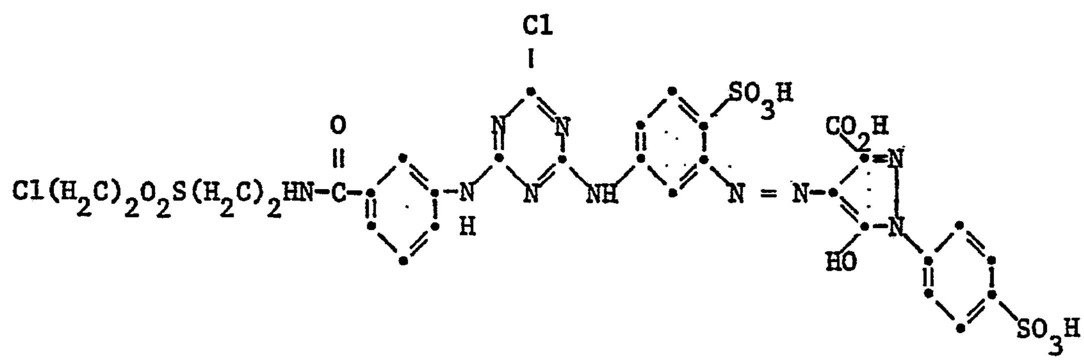

Weitere erfindungsgemässe Farbstoffe sind in Tabelle 1 zusammengefasst, wobei in Spalte I die anstelle von 1,3-Phenylendiamin-4-sulfonsäure verwendete Verbindung, in Spalte II die anstelle von 1-(4'-Sulfophenyl)-3-carboxypyrazolon-5 verwendete Kupplungskomponente, in Spalte III der im Farbstoff vorhandene Reaktivrest T und in Spalte IV die auf Baumwolle erzielte Nuance angegeben ist.

Die in Tabelle 1 und den übrigen Tabellen genannten reaktiven Amine der Formel (18), $T_1$ bis $T_{19}$, sind die folgenden Verbindungen:

$T_1$ 3-Aminobenzoesäure-N'-β-(β'-chloräthylsulfonyl)-äthylamid,
$T_2$ 4-Chlor-3-aminobenzoesäure-N'-β-(β'-chloräthylsulfonyl)-äthylamid,
$T_3$ 4-Methyl-3-aminobenzoesäure-N'-β-(β'-chloräthylsulfonyl)-äthylamid,
$T_4$ 4-Methoxy-3-aminobenzoesäure-N'-β-(β'-chloräthylsulfonyl)-äthylamid,
$T_5$ 3-Aminobenzoesäure-N'-β-[β'-(β"-chloräthylsulfonyl)-äthyloxy]-äthylamid,
$T_6$ 3-Aminobenzoesäure-N'-γ-(β'-chloräthylsulfonyl)-propylamid,
$T_7$ 3-Aminobenzoesäure-N'-bis-[β-(β'-chloräthylsulfonyl)-äthyl]-amid,
$T_8$ 3-Aminobenzoesäure-N'-bis-[γ-(β'-chloräthylsulfonyl)-propyl]-amid,
$T_9$ 3-N-Aethylaminobenzoesäure-N'-β-(β'-chloräthylsulfonyl)-äthylamid,
$T_{10}$ 3-N-Isopropylaminobenzoesäure-N'-β-(β'-chloräthylsulfonyl)-äthylamid,
$T_{11}$ 3-N-Isopropylaminobenzoesäure-N'-γ-(β'-chloräthylsulfonyl)-propylamid,
$T_{12}$ 4-Aminobenzoesäure-N'-β-(β'-chloräthylsulfonyl)-äthylamid,
$T_{13}$ 4-Aminobenzoesäure-N'-β-([β'-β"-chloräthylsulfonyl)-äthyloxy]-äthylamid,
$T_{14}$ 4-Aminobenzoesäure-N'-γ-(β'-chloräthylsulfonyl)-propylamid,
$T_{15}$ 4-Aminobenzoesäure-N'-bis-[β-(β'-chloräthylsulfonyl)-äthyl]-amid,
$T_{16}$ 4-Aminobenzoesäure-N'-bis-[γ-(β'-chloräthylsulfonyl)-propyl]-amid,
$T_{17}$ 4-N-Aethylaminobenzoesäure-N'-β-(β'-chloräthylsulfonyl)-äthylamid,
$T_{18}$ 4-N-Isopropylaminobenzoesäure-N'-β-(β'-chloräthylsulfonyl)-äthylamid,
$T_{19}$ 4-N-Isopropylaminobenzoesäure-N'-γ-(β'-chloräthylsulfonyl)-propylamid.

Tabelle 1

| Bsp. | I | II | III | IV |
|---|---|---|---|---|
| 4 | 1,3-Diaminobenzol-4-sulfonsäure | 1-(2'-Methyl-4'-sulfophenyl)-3-carboxypyrazolon-5 | $T_2$ | gelb |
| 5 | dito | 1-Naphthol-3,6-disulfonsäure | $T_3$ | orange |
| 6 | dito | 1-Naphthol-3,8-disulfonsäure | $T_4$ | scharlach |
| 7 | dito | 1-Naphthol-4,8-disulfonsäure | $T_5$ | gelbst. rot |
| 8 | dito | 1-Naphthol-7-(3'-sulfophenyl)-amino-3-sulfonsäure | $T_6$ | braun |
| 9 | dito | dito | $T_{13}$ | dito |
| 10 | dito | 1-Ethyl-2-hydroxy-4-methyl-5-aminocarbonylpyridon-2 | $T_{14}$ | gelb |
| 11 | dito | 1-(4'-Sulfophenyl)-3-carboxy-pyrazolon-5 | $T_9$ | dito |
| 12 | dito | dito | $T_{10}$ | dito |
| 13 | dito | dito | $T_{11}$ | dito |
| 14 | dito | dito | $T_{17}$ | dito |
| 15 | 1,4-Diaminobenzol-2,5-disulfonsäure | 2-iso-Propoxy-4,5-dihydroxy-pyrimidin | $T_{18}$ | dito |
| 16 | 1,3-Diaminobenzol-4,6-disulfonsäure | 1-Phenyl-3-carboxypyrazolon-5 | $T_{19}$ | dito |
| 17 | 1,3-Diaminobenzol-4-sulfonsäure | 1,4-Dimethyl-6-oxy-2-pyridon-3-sulfonsäure | $T_1$ | grüngelb |
| 18 | dito | 1-Ethyl-4-methyl-6-oxy-2-pyridon-3-carbonamid | $T_1$ | dito |
| 19 | dito | dito | $T_7$ | dito |
| 20 | dito | dito | $T_8$ | dito |
| 21 | 1,4-Diaminobenzol-6-sulfonsäure | dito | $T_{12}$ | dito |
| 22 | 1,4-Diaminobenzol-6-sulfonsäure | 1-Butyl-4-methyl-6-oxy-2-pyridon-3-carbonamid | $T_1$ | grüngelb |
| 23 | 1,3-Diaminobenzol-4-sulfonsäure | 1-Ethyl-4-methyl-6-oxy-2-pyridon-3-methansulfonsäure | $T_1$ | dito |
| 24 | dito | dito | $T_{15}$ | dito |
| 25 | dito | dito | $T_{16}$ | dito |

Beispiel 26: 30,3 Teile 2-Aminonaphthalin-4,8-disulfonsäure werden salzsauer diazotiert und auf 15 Teile 3-Acetylaminoanilin gekuppelt. Nach Acylierung mit 19 Teilen fein dispergierten Cyanurchlorids wird bei 20°C,pH 6-7, mit 30 Teilen 4-Aminobenzoesäure-N'-β(β'-chloräthylsulfonyl)-äthylamid umgesetzt und mit Kaliumchlorid ausgesalzen. Der nach schonender Trocknung erhaltente Farbstoff färbt Baumwolle in echten rotstichig gelben Tönen an und entspricht der Formel

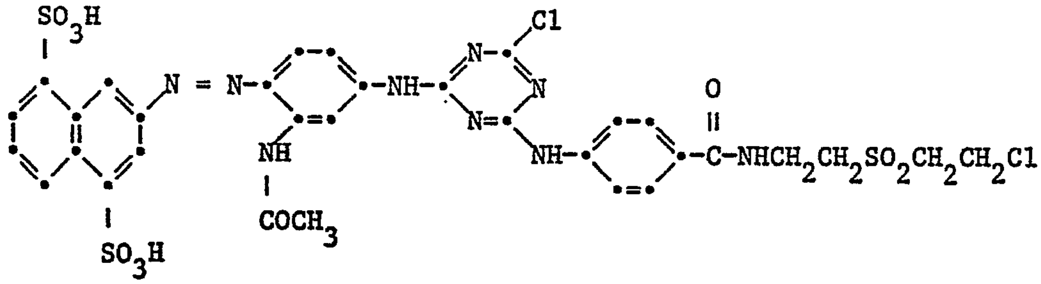

Beispiel 27: 30,3 Teile 2-Aminonaphthalin-4,8-disulfonsäure werden salzsauer diazotiert und auf 15 Teile 3-Acetylaminoanilin gekuppelt. Nach Acylierung mit 14 Teilen Cyanurfluorid bei 0°-2°C, pH 6-7, wird bei 20°C,pH 6-7, mit 30 Teilen 4-Aminobenzoesäure-N'-β(β'-chloräthylsulfonyl)-äthylamid umgesetzt und mit Kaliumchlorid ausgesalzen. Der nach schonender Trocknung erhaltene Farbstoff färbt Baumwolle in echten rotstichig gelben Tönen an und entspricht der Formel

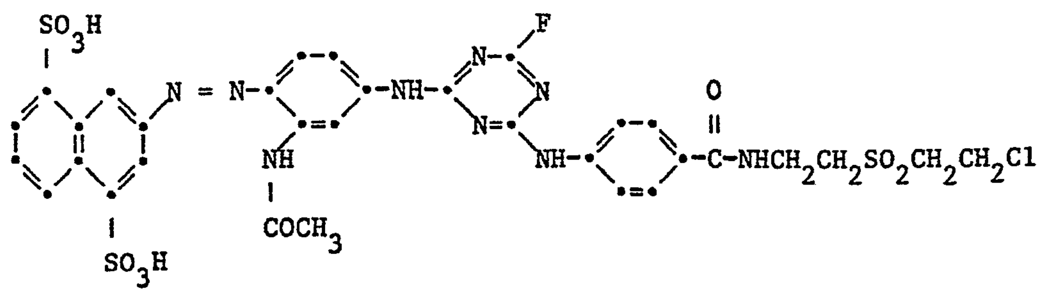

Beispiel 28: Zur neutralen Lösung von 30,5 Teilen des Trinatriumsalzes des durch Kupplung von diazotierter 2-Aminonaphthalin-3,6,8-trisulfonsäure mit 3-Aminophenylharnstoff in essigsaurem Milieu erhaltenen Aminoazofarbstoffes in 500 Teilen Wasser gibt man bei 0°C 7 Teile Cyanurfluorid, wobei durch ständige Zugabe von 2n Natriumhydroxydlösung ein pH-Wert von 6 bis 6,5 aufrechterhalten wird.

Anschliessend werden 15 Teile 3-Aminobenzoesäure-N'-β(β'-chloräthylsulfonyl)-äthylamid-hydrochlorid zugegeben und bei 0-20°C pH 6-7 umgesetzt. Die Kondensation wird fortgesetzt bis chromatographisch kein Ausgangsfarbstoff mehr nachweisbar ist. Der entstandene Farbstoff der Formel

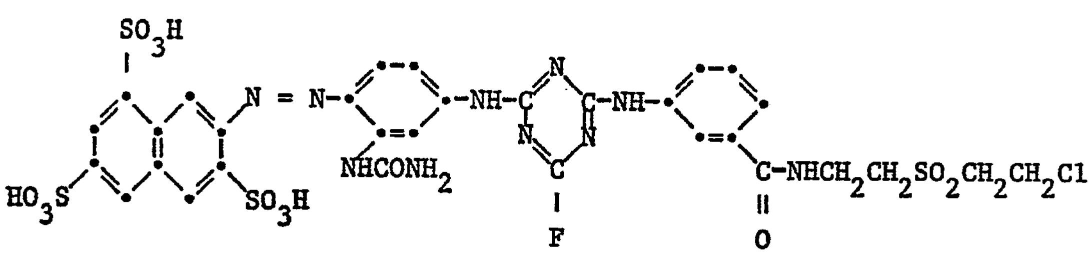

wird mit Natriumchlorid ausgesalzen, abgesaugt, gewaschen und im Vakuum getrocknet. Er färbt Cellulosematerialien in sehr echten rotstichigen Gelbtönen.

Beispiel 29: Zur neutralen Lösung von 30,5 Teilen des Trinatriumsalzes des durch Kupplung von diazotierter 2-Aminonaphthalin-3,6,8-trisulfonsäure mit 3-Aminophenylharnstoff in essigsaurem Milieu erhaltenen Aminoazofarbstoffes in 500 Teilen Wasser gibt man bei 0°C 7 Teile Cyanurchlorid, wobei durch ständige Zugabe von 2n Natriumhydroxydlösung ein pH-Wert von 6 bis 6,5 aufrechterhalten wird.

Anschliessend werden 15 Teile 3-Aminobenzoesäure-N'-β(β'-chloräthylsulfonyl)-äthylamid-hydrochlorid zugegeben und bei 0-20°C pH 6-7 umgesetzt. Die Kondensation wird fortgesetzt bis chromatographisch kein Ausgangsfarbstoff mehr nachweisbar ist. Der entstandene Farbstoff der Formel

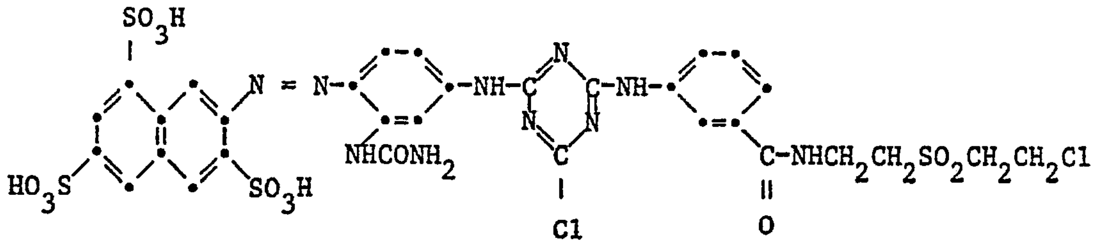

wird mit Natriumchlorid ausgesalzen, abgesaugt, gewaschen und im Vakuum getrocknet. Er färbt Cellulosematerialien in sehr echten rotstichigen Gelbtönen.

Beispiel 30: Zur neutralen Lösung von 30,5 Teilen des Trinatriumsalzes des durch Kupplung von diazotierter 2-Aminonaphthalin-3,6,8-trisulfonsäure mit 3-Aminophenylharnstoff in essigsaurem Milieu erhaltenen Aminoazofarbstoffes in 500 Teilen Wasser gibt man bei 0°C 7 Teile Cyanurfluorid, wobei durch ständige Zugabe von 2n Natriumhydroxydlösung ein pH-wert von 6 bis 6,5 aufrechterhalten wird.

Anschliessend werden 15 Teile 4-Aminobenzoesäure- N'-β(β'-chloräthylsulfonyl)-äthylamid-hydrochlorid zugegeben und bei 0-20°C pH 6-7 umgesetzt. Die Kondensation wird fortgesetzt bis chromatographisch kein Ausgangsfarbstoff mehr nachweisbar ist. Der entstandene Farbstoff der Formel

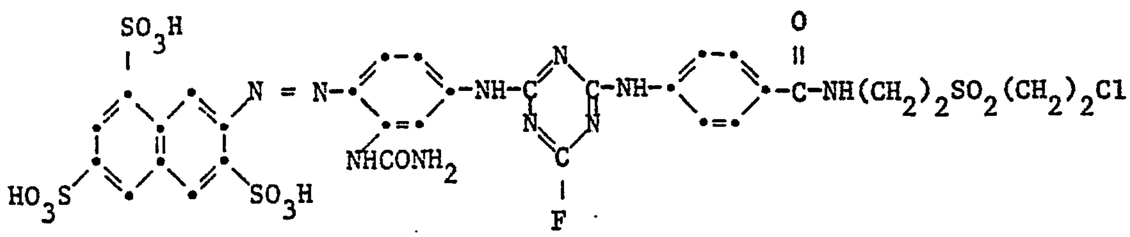

wird mit Natriumchlorid ausgesalzen, abgesaugt, gewaschen und im Vakuum getrocknet. Er färbt Cellulosematerialien in sehr echten rotstichigen Gelbtönen.

Weitere erfindungsgemässse Farbstoffe sind in Tabelle 2 aufgeführt, wobei in Spalte I die anstelle von 2-Aminonaphthalin-3,6,8-trisulfonsäure verwendete Diazokomponente, in Spalte II die statt-3-Aminophenylharnstoff verwendete Kupplungskomponente, in Spalte III das verwendete reaktive Amin und in Spalte IV der auf Baumwolle erzielte Farbton angegeben ist.

Tabelle 2

| Bsp. | I | II | III | IV |
|---|---|---|---|---|
| 31 | 2-Aminonaphthalin-6,8-disulfonsäure | 3-Acetylaminoanilin | $T_5$ | goldgelb |
| 32 | dito | 3-Pivaloylaminoanilin | $T_1$ | dito |
| 33 | 2-Aminonaphthalin-3,6,8-trisulfonsäure | 3-Aminophenylharnstoff | $T_{13}$ | dito |
| 34 | dito | dito | $T_{14}$ | dito |
| 35 | dito | dito | $T_5$ | dito |
| 36 | dito | dito | $T_6$ | dito |
| 37 | dito | N-Phenyl-N'-(3-aminophenyl)-harnstoff | $T_1$ | dito |
| 38 | dito | N-(3-Aminophenyl)-N'-methyl-harnstoff | $T_{12}$ | dito |
| 39 | 2-Aminonaphthalin-4,8-disulfonsäure | N-Cyclohexyl-N'-(3-aminophenyl)-harnstoff | $T_1$ | goldgelb |
| 40 | dito | dito | $T_{12}$ | dito |
| 41 | dito | 3-Methylsulfonylaminoanilin | $T_1$ | dito |
| 42 | 2-Aminonaphthalin-1,6-disulfonsäure | 3-Aminophenylharnstoff | $T_1$ | dito |
| 43 | dito | N-(3-Aminophenyl)-N'-methyl-harnstoff | $T_{12}$ | dito |
| 44 | 2-Aminonaphthalin-1,5-disulfonsäure | 3-Acetylaminoanilin | $T_1$ | dito |
| 45 | dito | dito | $T_{12}$ | dito |
| 46 | 2-Aminonaphthalin-4,6,8-trisulfonsäure | Anilin | $T_5$ | dito |
| 47 | dito | N-Methylanilin | $T_1$ | dito |
| 48 | dito | 3-Amino-toluol | $T_1$ | dito |
| 49 | dito | 3-Amino-anisol | $T_1$ | dito |
| 50 | dito | 2-Amino-4-acetaminotoluol | $T_1$ | dito |
| 51 | dito | 2-Amino-4-acetaminoanisol | $T_1$ | dito |
| 52 | 2-Aminonaphthalin-5,7-disulfonsäure | 3-Amino-4-methoxytoluol | $T_1$ | dito |
| 53 | dito | 3-Toluidin | $T_1$ | dito |
| 54 | dito | 1-Naphthylamin-8-sulfonsäure | $T_1$ | dito |
| 55 | 2-Aminonaphthalin-1,6-disulfonsäure | 2-Amino-toluol | $T_1$ | dito |
| 56 | dito | 2-Amino-anisol | $T_1$ | dito |
| 57 | dito | 2,5-Dimethylanilin | $T_{12}$ | dito |
| 58 | dito | 2-Methoxy-5-methylanilin | $T_{12}$ | dito |
| 59 | Anilin-2,5-disulfonsäure | 2,5-Dimethoxyanilin | $T_1$ | dito |
| 60 | Anilin-2,5-disulfonsäure | o-Phenetidin | $T_{12}$ | goldgelb |
| 61 | dito | m-Phenetidin | $T_5$ | dito |
| 62 | dito | 1-Naphthylamin-5-sulfonsäure | $T_3$ | dito |
| 63 | dito | 1-Naphthylamin-7-sulfonsäure | $T_4$ | dito |

Beispiel 64: 50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0-5°C abgekühlt. Bei dieser Temperatur werden 14,2 Teile Cyanurfluorid innert 20 Minuten zugetropft, wobei der pH der Reaktionslösung durch gleichzeitige Zugabe von 2n Natriumhydroxidlösung bei 6 bis 6,5 gehalten wird. Nach Zusatz von 30 Teilen 4-Aminobenzoesäure-N'-β(β'-chloräthylsulfonyl)-äthylamidhydrochlorid in 100 ml Wasser wird die Temperatur auf 20-25°C erhöht und der pH bei 5,5 bis 6,5 gehalten. Reaktionsdauer ca. 2 Stunden.

Zur Abscheidung des Farbstoffes wird die neutrale Lösung mit 10 % Natriumchlorid 10 % Kaliumchlorid versetzt und filtriert. Die erhaltene Paste wird im Vakuum bei 40-50°C getrocknet. Der so hergestellte Reaktivfarbstoff hat die folgende Konstitution:

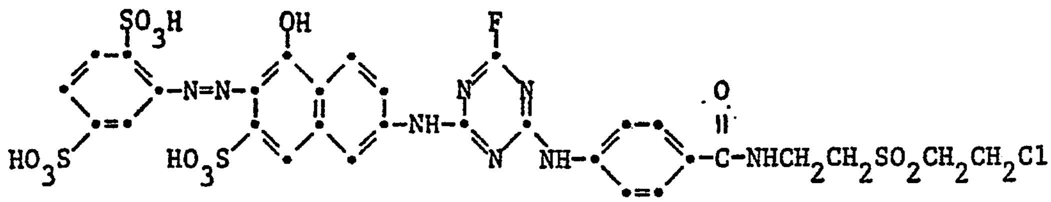

Beispiel 65: 50,3 Teile des Farbstoffs 2-Amino-5-hydroxy-6-(2,5,-disulfonylbenzolazo)-naphthalin-7-sulfonsäure werden in 800 ml Wasser neutral gelöst und die Lösung auf 0-5°C abgekühlt. Bei dieser Temperatur werden 14,2 Teile Cyanurfluorid innert 20 Minuten zugetropft, wobei der pH der Reaktionslösung durch gleichzeitige Zugabe von 2n Natriumhydroxidlösung bei 6 bis 6,5 gehalten wird. Nach Zusatz von 30 Teilen 3-Aminobenzoesäure-N'-β(β'-chloräthylsulfonyl)-äthylamidhydrochlorid in 100 ml Wasser wird die Temperatur auf 20-25°C erhöht und der pH bei 5,5 bis 6,5 gehalten. Reaktionsdauer ca. 2 Stunden.

Zur Abscheidung des Farbstoffes wird die neutrale Lösung mit 10 % Natriumchlorid und 10 % Kaliumchlorid versetzt und filtriert. Die erhaltene Paste wird im Vakuum bei 40-50°C getrocknet. Der so hergestellte Reaktivfarbstoff hat die folgende Konstitution:

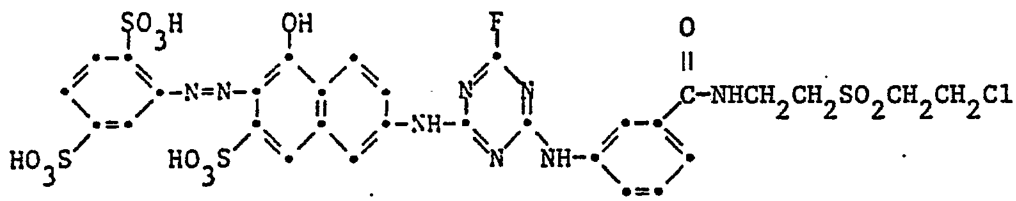

Beispiel 66: 50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0-5° abgekühlt. Bei dieser Temperatur werden 18,4 Teile Cyanurchlorid innert 20 Minuten zugetropft, wobei der pH der Reaktionslösung durch gleichzeitige Zugabe von 2n Natriumhydroxidlösung bei 6 bis 6,5 gehalten wird. Nach Zusatz von 30 Teilen 4-Aminobenzoesäure-N'-β(β'-chloräthylsulfonyl)-äthylamidhydrochlorid in 100 ml Wasser wird die Temperatur auf 20-25°C erhöht und der pH bei 5,5 bis 6,5 gehalten. Reaktionsdauer ca. 2 Stunden.

Zur Abscheidung des Farbstoffes wird die neutrale Lösung mit 10 % Natriumchlorid und 10 % Kaliumchlorid versetzt und filtriert. Die erhaltene Paste wird im Vakuum bei 40-50°C getrocknet. Der so hergestellte Reaktivfarbstoff hat die folgende Konstitution:

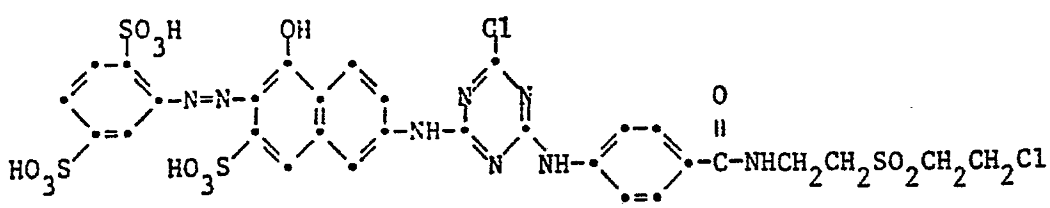

Der zur Herstellung des erfindungsgemässen Farbstoffs benötigte Ausgangsfarbstoff 2-Amino-5-hydroxy-6-(2',5'-disulfophenylazo)-naphthalin-7-sulfonsäure kann wie folgt erhalten werden:

50,6 Teile 2-Amino-benzol-1,4-disulfonsäure werden in 120 Teilen Wasser neutral gelöst und wie üblich diazotiert. Hierauf lässt man die Diazoverbindung bei 0-5°C zu einer Mischung von 56,2 Teilen 2-Acetamino-5-naphthol-7-sulfonsäure, welche in 300 Teilen Wasser neutral gelöst wurden, 25 Teilen Natriumhydrogencarbonat und 150 Teilen Eis hinzulaufen. Der pH-Wert beträgt zunächst 6,5 und steigt nach längerem Rühren auf 7,5-7,8. Nach Beendigung der Kupplung gibt man 60 Teile 10-normale Natronlauge hinzu und erwärmt zu Verseifung der Acetaminogruppe 2 Stunden auf 90°. Die alkalische Lösung des orangen Zwischenfarbstoffes wird mit etwa 22 Teilen 10-normaler Salzsäure neutral gestellt, mit 20% Natriumchlorid und 15% Kaliumchlorid versetzt, einige Zeit gerührt und filtriert.

Weitere erfindungsgemässe Farbstoffe sind in Tabelle 3 aufgeführt, wobei in Spalte I die anstelle von 2-Aminobenzol-1,4-disulfonsäure verwendete Diazokomponente, in Spalte II die statt 2-Acetamino-5-naphthol-7-Sulfonsäure verwendete Kupplungskomponente, in Spalte III das verwendete reaktive Amin und in Spalte IV der auf Baumwolle erzielte Farbton angegeben ist.

Tabelle 3

| Bsp. | I | II | III | IV |
|---|---|---|---|---|
| 67 | 2-Naphthylamin-6,8-disulfonsäure | 2-Amino-5-hydroxynaphthalin-7-sulfonsäure | $T_1$ | scharlach |
| 68 | dito | dito | $T_{12}$ | dito |
| 69 | 2-Naphthylamin-5,7-disulfonsäure | dito | $T_1$ | dito |
| 70 | dito | dito | $T_{12}$ | dito |
| 71 | 2-Naphthylamin-4,7-disulfonsäure | dito | $T_1$ | orange (rotstichig) |
| 72 | dito | dito | $T_{19}$ | dito |
| 73 | 2-Naphthylamin-3,7-disulfonsäure | dito | $T_{12}$ | dito |
| 74 | 2-Naphthylamin-3,6-disulfonsäure | dito | $T_1$ | dito |
| 75 | 2-Naphthylamin-7-sulfonsäure | dito | $T_{14}$ | dito |
| 76 | 2-Naphthylamin-1,7-disulfonsäure | dito | $T_{12}$ | dito |
| 77 | Anilin | dito | $T_1$ | orange |
| 78 | Amino-toluol-3,5-disulfonsäure | dito | $T_{12}$ | dito |
| 79 | 4-Amino-phenetol-1,3-sulfonsäure | dito | $T_{12}$ | scharlach |
| 80 | 4-Amino-anisol-1,3-sulfonsäure | dito | $T_1$ | dito |
| 81 | 4-Amino-anisol-2-sulfonsäure | dito | $T_{14}$ | dito |
| 82 | 2-Naphthylamin-1,5-disulfonsäure | 2-Amino-5-hydroxynaphthalin-7-sulfonsäure | $T_1$ | orange |
| 83 | dito | dito | $T_5$ | dito |
| 84 | dito | dito | $T_6$ | dito |
| 85 | dito | dito | $T_4$ | dito |
| 86 | dito | dito | $T_3$ | dito |
| 87 | 2-Naphthylamin-1,5-disulfonsäure | 2-Amino-5-hydroxynaphthalin-7-sulfonsäure | $T_2$ | orange |
| 88 | dito | dito | $T_{12}$ | dito |
| 89 | dito | dito | $T_{13}$ | dito |
| 90 | dito | dito | $T_{14}$ | dito |
| 91 | 2-Naphthylamin-3,6,8-trisulfonsäure | dito | $T_1$ | scharlach |
| 92 | dito | dito | $T_{12}$ | dito |
| 93 | dito | dito | $T_5$ | dito |
| 94 | dito | dito | $T_6$ | dito |
| 95 | dito | dito | $T_{12}$ | dito |
| 96 | 2-Naphthylamin-4,6,8-trisulfonsäure | dito | $T_1$ | orange |
| 97 | dito | dito | $T_{12}$ | dito |
| 98 | dito | dito | $T_5$ | dito |
| 99 | dito | dito | $T_{14}$ | dito |
| 100 | 2-Naphthylamin-1,5,7-trisulfonsäure | dito | $T_1$ | dito |
| 101 | dito | dito | $T_{19}$ | dito |

Tabelle 3 (Fortsetzung)

| Bsp. | I | II | III | IV |
|---|---|---|---|---|
| 102 | 4-Amino-1,3-dimethyl-benzol-5-sulfonsäure | 2-Amino-5-hydroxynaphthalin-7-sulfonsäure | $T_1$ | orange |
| 103 | 3-Chlor-2-amino-toluol-5-sulfonsäure | dito | $T_{12}$ | dito |
| 104 | 4-Amino-toluol-3-sulfon-säure | dito | $T_1$ | dito |
| 105 | 2-Aminobenzolsulfon-säure | dito | $T_1$ | dito |
| 106 | 3-Aminobenzolsulfon-säure | dito | $T_{14}$ | dito |
| 107 | 4-Aminobenzolsulfon-säure | dito | $T_5$ | dito |
| 108 | 2-Naphthylamin-1,5-disulfonsäure | 2-Amino-8-hydroxynaphthalin-7-sulfonsäure | $T_1$ | scharlach |
| 109 | 2-Naphthylamino-6,8-disulfonsäure | dito | $T_{12}$ | rot |
| 110 | 2-Aminobenzol-1,4-disulfonsäure | dito | $T_1$ | scharlach |
| 111 | dito | dito | $T_{12}$ | dito |
| 112 | dito | dito | $T_5$ | dito |
| 113 | dito | dito | $T_6$ | dito |
| 114 | dito | dito | $T_{14}$ | dito |

Beispiel 115: 47 Teile der bekannten Aminodisazoverbindung der Formel

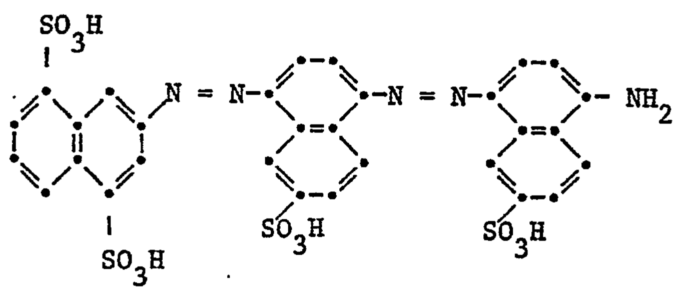

werden in 300 Volumenteilen Wasser bei pH 6,5 gelöst und bei 0-5°C mit 10 Teilen Cyanurchlorid umgesetzt. Das entstandene Produkt wird anschliessend mit 16 Teilen 4-Aminobenzoesäure-N'-β(β'-chloräthylsulfonyl)äthylamind-hydrochlorid bei pH 6-7 und 20-25°C zur Reaktion gebracht. Nach der Fällung mit 80 Teilen Kaliumchlorid erhält man den Farbstoff der Formel

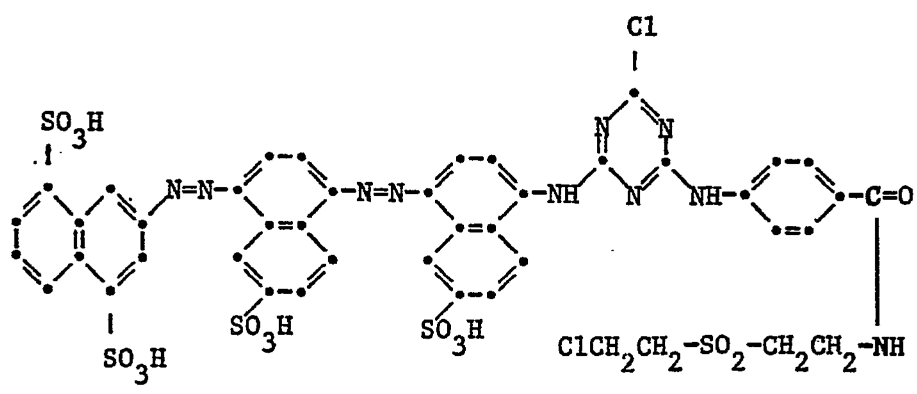

der Baumwolle in echten rötlich-braunen Tönen färbt.

In gleicher Weise wurden die folgenden Aminodisazofarbstoffe zu braunen Reaktivfarbstoffen umgesetzt.

| Bsp. | Aminodisazofarbstoff | Farbton auf BW |
|---|---|---|
| 116 | 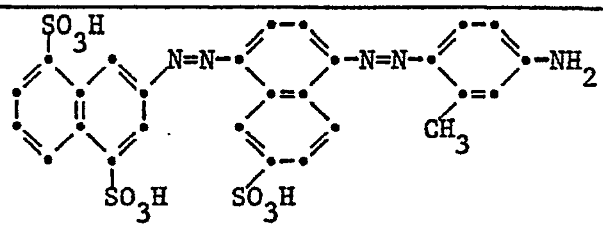 | braun |
| 117 | 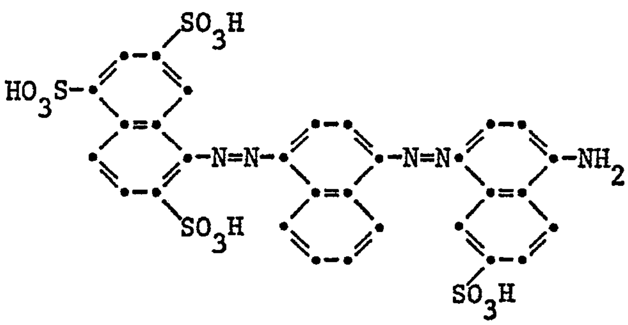 | rotbraun |
| 118 | 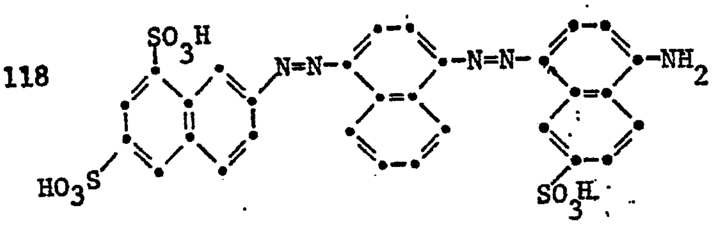 | dito |
| 119 | 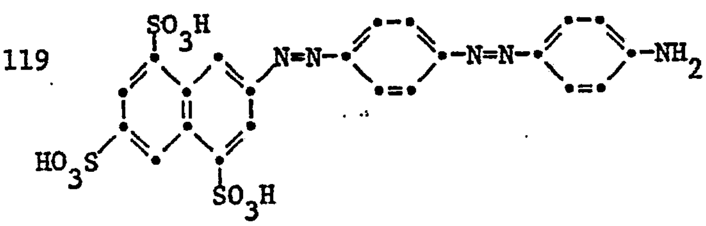 | orangebraun |
| 120 | 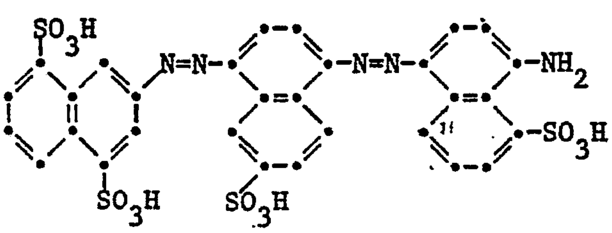 | rotbraun |

Beispiel 121: Das Kondensationsprodukt von Metaminsäure und Cyanurchlorid wird in bekannter Weise diazotiert und bei pH 7–7,5 auf die Kupplungskomponente der Formel

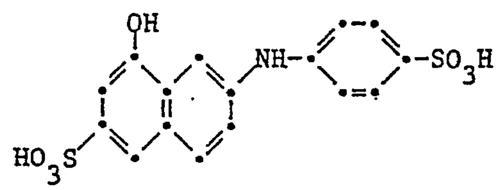

gekuppelt. Anschliessend wird bei pH 6–7 mit 3-Aminobenzoesäure-N'-β(β'-chloräthylsulfonyl)äthylamid-hydrochlorid umgesetzt und der gebildete Farbstoff mit Kaliumchlorid ausgefällt. Man erhält einen Farbstoff der Formel

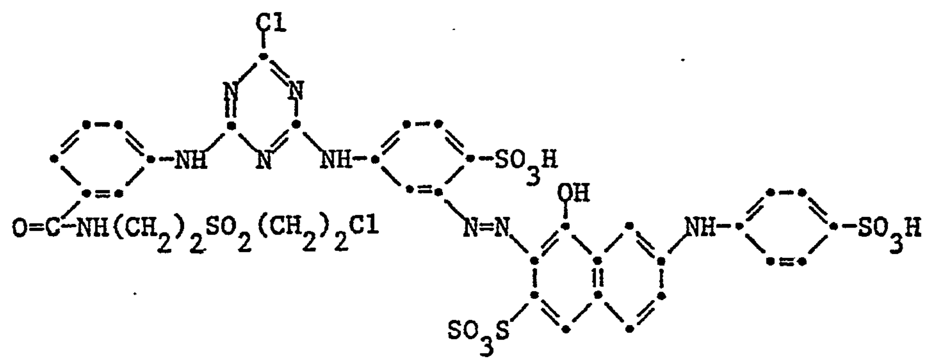

der Baumwolle in echten Brauntönen färbt.

Beispiel 122: 95 Teile Cyanurchlorid werden in bekannter Weise mit 1-Amino-8-hydroxynaphthalin-3,6-disulfonsäure in Wasser umgesetzt. Zu diesem Produkt wird eine frisch diazotierte Lösung von 1-Aminobenzol-2-sulfonsäure gegeben und der pH-Wert auf 4–4,5 eingestellt. Nach beendeter Kupplung werden 155 Teile 4-Aminobenzoesäure-N'-β(β'-chloräthylsulfonyl)äthylamid-hydrochlorid zugegeben und bei pH 7–7,5 und 35°C zur Reaktion gebracht. Nach Aussalzen mit KCl erhält man 420 Teile des Farbstoffs der Formel

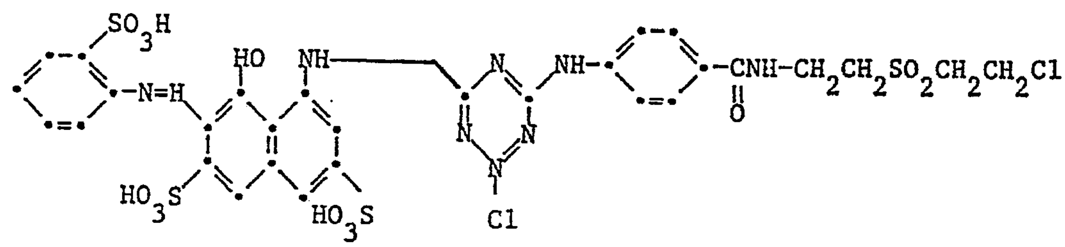

der Baumwolle in leuchtend roten, echten Tönen färbt.

Beispiel 123: 16 Teile 1-Amino-8-hydroxynaphthalin-3,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid bei. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 15 Teile 3-Aminobenzoesäure-N'-β(β'-chloräthylsulfonyl)äthylamid-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bei 0 bis 10°C mit 15 Teilen diazotierter 2-Aminonaphthalin-1,5-disulfonsäure gekuppelt. Bei einem End-pH von 6,5 bis 7 wird der Farbstoff der Formel

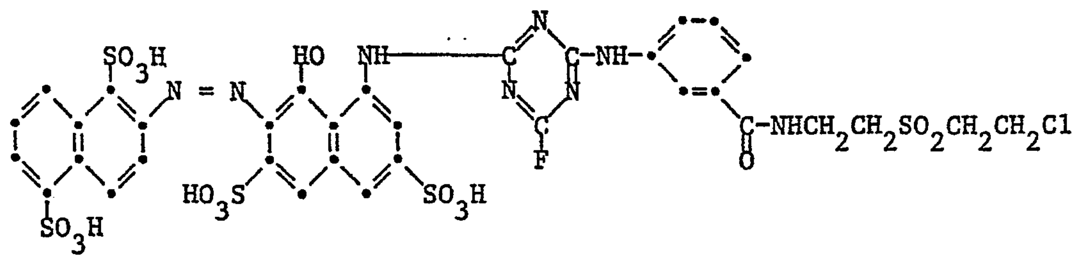

mit Natriumchlorid ausgesalzen, filtriert, gewaschen und im Vakuum getrocknet. Er stellt ein dunkelrotes Pulver dar und färbt Baumwolle und regenerierte Cellulose in blaustichigen Rottönen von guter Nass-, Reib- und Lichtechtheit.

Beispiel 124: 16 Teile 1-Amino-8-hydroxynaphthalin-3,6-disulfonsäure werden in 400 Teilen Wasser neutral gelöst. Man stellt die Reaktionslösung auf einen pH-Wert von 4,5 und trofpt bei 0 bis 3°C unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 15 Teile 4-Aminobenzoesäure-N'-β(β'-chloräthylsulfonyl)äthylamid-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bie 0 bis 10°C mit 9 Teilen diazotierter 2-Aminobenzolsulfonsäure gekuppelt. Bei einem End-pH von 6,5 bis 7 wird der Farbstoff der Formel

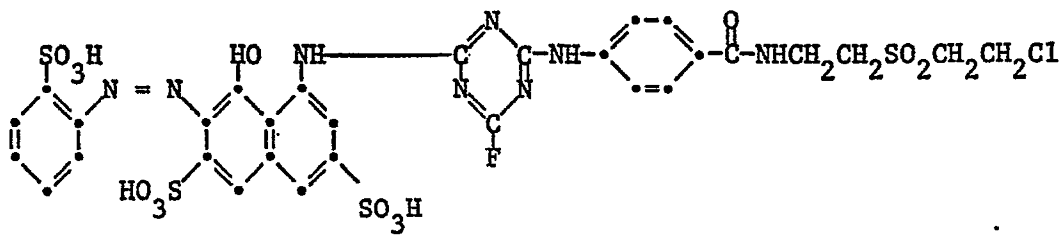

mit Natriumchlorid ausgesalzen, filtriert, gewaschen und im Vakuum getrocknet. Er stellt ein dunkelrotes Pulver dar und färbt Baumwolle und regenerierte Cellulose in gelbstichigen Rottönen von guter Nass-, Reib- und Lichtechtheit.

Beispiel 125: 16 Teile 1-Amino-8-hydroxynaphthalin-3,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 15 Teile 4-Aminobenzoesäure-N'-β(β'-chloräthylsulfonyl)äthylamid-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bei 0 bis 10°C mit 15 Teilen diazotierter 2-Amino-naphthalin-1,5-disulfonsäure gekuppelt. Bei einem End-pH von 6,5 bis 7 wird der Farbstoff der Formel

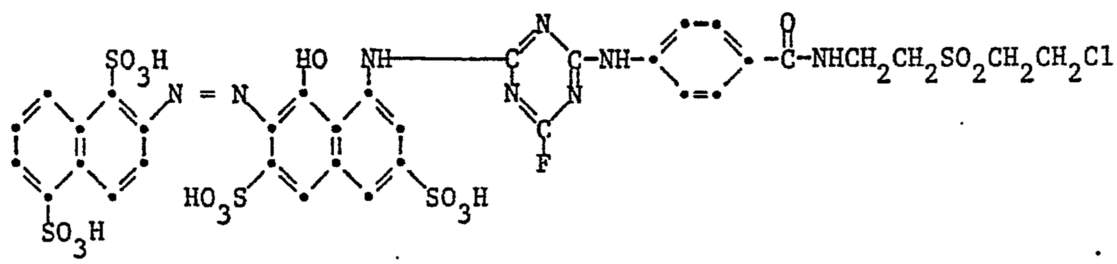

mit Natriumchlorid ausgesalzen, filtriert, gewaschen und im Vakuum getrocknet. Er stellt ein dunkelrotes Pulver dar und färbt Baumwolle und regenerierte Cellulose in blaustichigen Rottönen von guter Nass-, Reib- und Lichtechtheit.

Beispiel 126: 16 Teile 1-Amino-8-hydroxynaphthalin-4,6-disulfonsäure werden in 400 Teilen Wasser neutral gelöst. Man stellt die Reaktionslösung auf einen pH-Wert von 4,5 und tropft bei 0 bis 3° unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-4,6-disulfonsäure mehr nachweisbar ist, werden 15 Teile 3-Aminobenzoesäure-N'-β(β'-chloräthylsulfonyl)äthylamid-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bei 0 bis 10°C mit 11 Teilen diazotierter 2-Aminobenzolsulfonsäure gekuppelt. Bei einem End-pH von 6,5 bis 7 wird der Farbstoff der Formel

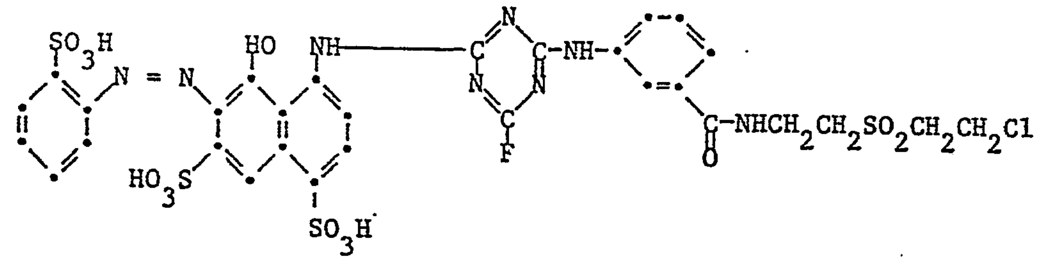

mit Natriumchlorid ausgesalzen, filtriert, gewaschen und im Vakuum getrocknet. Er stellt ein dunkelrotes Pulver dar und färbt Baumwolle und regenerierte Cellulose in gelbstichigen Rottönen von guter Naß-, Reib- und Lichtechtheit.

Beispiel 127: 16 Teile 1-Amino-8-hydroxynaphthalin-4,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-4,6-disulfonsäure mehr nachweisbar ist, werden 15 Teile 4-Aminobenzoesäure-N'-β(β'-chloräthylsulfonyl)äthylamid-hydrochlorid in 50 Teilen Wasser zugegeben. Man lässt die Temperatur auf 20 bis 25°C steigen und hält den pH-Wert der Reaktionslösung bei 4 bis 4,5. Nach beendigter Kondensation wird das Farbstoffzwischenprodukt bei 0 bis 10°C mit 9 Teilen diazotierter 2-Aminobenzolsulfonsäure gekuppelt. Bei einem End-pH von 6,5 bis 7 wird der Farbstoff der Formel

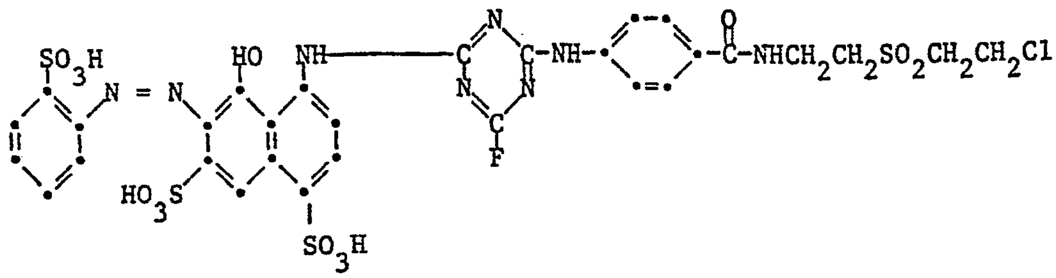

mit Natriumchlorid ausgesalzen, filtriert, gewaschen und im Vakuum getrocknet. Er stellt ein dunkelrotes Pulver dar und färbt Baumwolle und regenerierte Cellulose in gelbstichigen Rottönen von guter Nass-, Reib- und Lichtechtheit.

Weitere erfindungsgemässe Farbstoffe sind in Tabelle 4 aufgeführt, wobei in Spalte I die anstelle von Anilin-2-sulfonsäure verwendete Diazokomponente, in Spalte II die statt 1-Amino-8-hydroxynaphthalin-4,6-disulfonsäure verwendete Kupplungskomponente, in Spalte III das verwendete reaktive Amin und in Spalte IV der auf Baumwolle erzielte Farbton angegeben ist.

Tabelle 4

| Bsp. | I | II | III | IV |
|---|---|---|---|---|
| 128 | Anilin | 1-Amino-8-hydroxynaphthalin-3,6-disulfonsäure | $T_5$ | rot |
| 129 | dito | dito | $T_6$ | dito |
| 130 | dito | dito | $T_{14}$ | dito |
| 131 | o-Chloranilin | dito | $T_{13}$ | dito |
| 132 | m-Toluidin | dito | $T_{10}$ | dito |
| 133 | 1-Amino-4-methoxy-benzol-2-sulfonsäure | dito | $T_{12}$ | blaustichig rot |
| 134 | 1-Amino-4-phenoxy-benzol-2-sulfonsäure | dito | $T_2$ | dito |
| 135 | 4-Ethoxyanilin | dito | $T_3$ | dito |
| 136 | p-Anisidin | dito | $T_4$ | dito |
| 137 | 1-Amino-4-methylbenzol-2-sulfonsäure | 1-Amino-8-hydroxynaphthalin-3,6-disulfonsäure | $T_5$ | blaustichig rot |
| 138 | Anilin-4-sulfonsäure | dito | $T_6$ | rot |
| 139 | Anilin-3-sulfonsäure | dito | $T_9$ | dito |
| 140 | 2-Naphthylamin-1,5-disulfonsäure | dito | $T_{11}$ | dito |
| 141 | 2-Naphthylamin-4,8-disulfonsäure | dito | $T_{18}$ | dito |
| 142 | 1-Naphthylamin-4-sulfonsäure | dito | $T_1$ | dito |
| 143 | 1-Naphthylamin-6-sulfonsäure | dito | $T_{12}$ | dito |
| 144 | 2-Naphthylamin-1-sulfonsäure | dito | $T_{14}$ | dito |
| 145 | Anilin | 1-Amino-8-hydroxynaphthalin-4,6-disulfonsäure | $T_5$ | scharlach |
| 146 | dito | dito | $T_6$ | dito |
| 147 | dito | dito | $T_{14}$ | dito |
| 148 | o-Chloranilin | dito | $T_{13}$ | dito |
| 149 | m-Toluidin | dito | $T_{10}$ | dito |
| 150 | 1-Amino-4-methoxy-benzol-2-sulfonsäure | dito | $T_{12}$ | rot |
| 151 | 1-Amino-4-phenoxy-benzol-2-sulfonsäure | dito | $T_2$ | dito |
| 152 | 4-Ethoxyanilin | dito | $T_3$ | dito |
| 153 | p-Anisidin | dito | $T_4$ | dito |
| 154 | 1-Amino-4-methylbenzol-2-sulfonsäure | dito | $T_5$ | dito |
| 155 | Anilin-4-sulfonsäure | dito | $T_6$ | gelbstichig rot |
| 156 | Anilin-3-sulfonsäure | 1-Amino-8-hydroxynaphthalin-4,6-disulfonsäure | $T_9$ | gelbstichig rot |
| 157 | 2-Naphthylamin-1,5-disulfonsäure | dito | $T_{11}$ | rot |
| 158 | 2-Naphthylamin-4,8-disulfonsäure | dito | $T_{18}$ | dito |
| 159 | 1-Naphthylamin-4-sulfonsäure | dito | $T_1$ | dito |
| 160 | 1-Naphthylamin-6-sulfonsäure | dito | $T_{12}$ | dito |

Tabelle 4 (Fortsetzung)

| Bsp. | I | II | III | IV |
|---|---|---|---|---|
| 161 | 2-Naphthylamin-1-sulfonsäure | 1-Amino-8-hydroxynaphthalin-4,6-disulfonsäure | $T_{14}$ | rot |
| 162 | N-Naphthylamin-2,5-disulfonsäure | dito | $T_1$ | dito |
| 163 | dito | dito | $T_{12}$ | dito |
| 164 | 2-Naphthylamin-5-sulfonsäure | 1-Amino-8-hydroxynaphthalin-3,6-disulfonsäure | $T_1$ | dito |
| 165 | 2-Naphthylamin-6-sulfonsäure | dito | $T_{12}$ | dito |
| 166 | dito | dito | $T_5$ | dito |
| 167 | Anilin-2-sulfonsäure | dito | $T_1$ | dito |
| 168 | dito | 1-Amino-8-hydroxynaphthalin-4-sulfonsäure | $T_{12}$ | dito |
| 169 | dito | dito | $T_1$ | dito |
| 170 | dito | 2-Amino-8-hydroxynaphthalin-6-sulfonsäure | $T_1$ | dito |
| 171 | Anilin | 1-Amino-8-hydroxynaphthalin-2,4-disulfonsäure | $T_1$ | dito |

Beispiel 172: Eine Suspension des nach üblicher Methode hergestellten Aminoazofarbstoffs der Formel

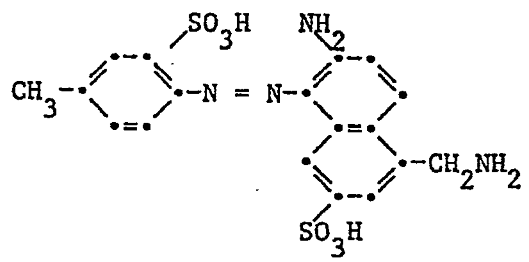

wird in Wasser bei pH 2–3 und 0–5°C mit 1 Äquivalent Cyanurchlorid in der üblichen Art umgesetzt. Anschließend wird bei pH 6–7,1 Chlor des Triazinylrestes ausgetauscht gegen 3-Aminobenzoesäure-N'-β(β'-chloräthylsulfonyl)äthylamid-hydrochlorid.

Der gebildete Farbstoff der Formel

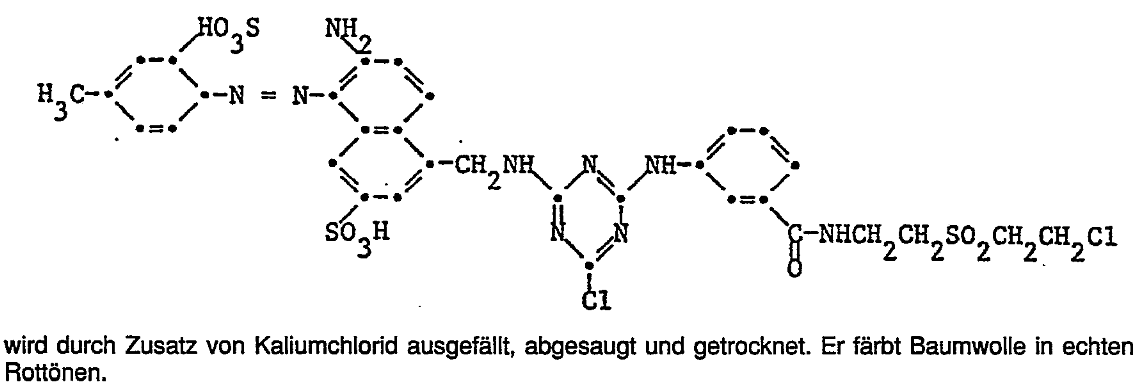

wird durch Zusatz von Kaliumchlorid ausgefällt, abgesaugt und getrocknet. Er färbt Baumwolle in echten Rottönen.

Beispiel 173: Das Kondensationsprodukt von 1,3-Diaminobenzol-6-sulfonsäure mit Cyanurchlorid wird auf übliche Weise diazotiert und auf 1-Acetylamino-8-hydroxy-3,6-disulfonsäure gekuppelt. Nach Austausch eines Chlors gegen 4-Aminobenzoesäure-N'-β(β'-chloräthylsulfonyl)äthylamid-hydrochlorid wie in Beispiel 1 beschrieben, erhält man einen Farbstoff der Formel

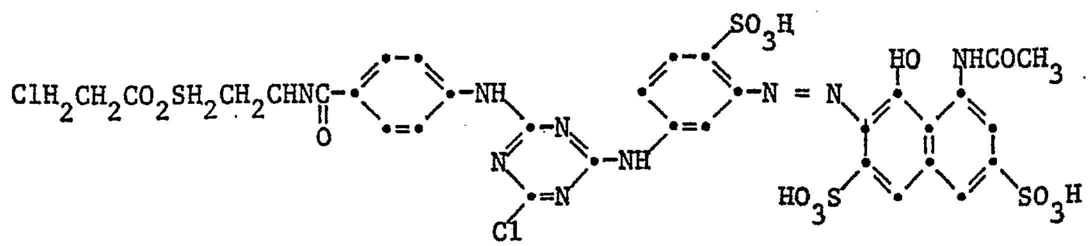

der Baumwolle in brillanten echten Rottönen färbt.

Beispiel 174: 3-Amino-acetanilid-4-sulfonsäure wird auf übliche Weise diazotiert und auf 1-Benzoylamino-8-hydroxynaphthalin-3,6-disulfonsäure gekuppelt, anschliessend die Acetylgruppe alkalisch selektiv hydrolysiert. Das Chromophor wird nun wie in Beispiel 1 beschrieben mit 2,4,6-Trifluor-1,3,5-triazin umgesetzt. Nach Austausch eines Fluors gegen den Rest des 3-Aminobenzoesäure-N'-β(β'-chloräthylsulfonyl)äthylamid-hydrochlorids erhält man einen Farbstoff der Formel

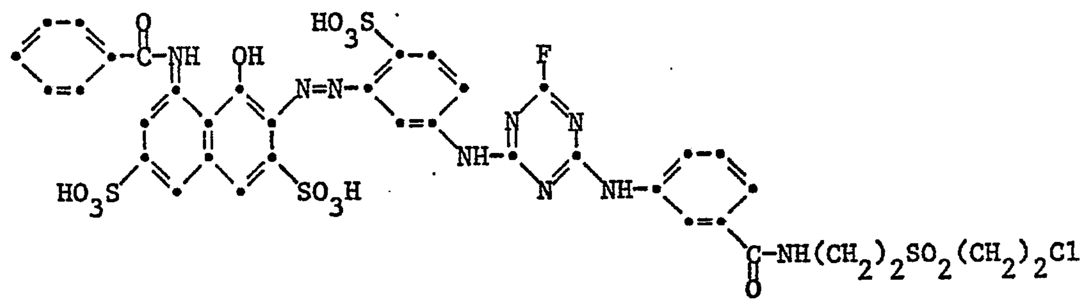

der Baumwolle in brillanten echten Rottönen färbt.

Weitere Farbstoffe, die den Reaktivrest an der Diazokomponente tragen sind im folgenden zusammengestellt.

Unter I sind Diaminoverbindungen zusammengestellt, die anstelle von 1,3-Diaminobenzol-6-sulfonsäure eingesetzt werden können, unter II sind die verwendeten Kupplungskomponenten und unter III die eingesetzten reaktiven Amine aufgelistet.

Bei den Beispielen 182 bis 185 sowie 187 erfolgt in Abwandlung der in Beispiel 173 angegebenen Vorschrift zuerst die Diazotierung und Kupplung der Komponente I und anschliessend die Umsetzung mit Cyanurfluorid und Benzoesäurederivat.

Tabelle 5

| Bsp. | I | II | III | Farbton auf BW |
|---|---|---|---|---|
| 175 | 1,3-Diaminobenzol-2,6-disulfonsäure | 1-Benzoylamino-8-hydroxy-naphthalin-3,6-disulfonsäure | $T_5$ | rot |
| 176 | dito | 1-Benzoylamino-8-hydroxy-naphthalin-4,6-disulfonsäure | $T_6$ | dito |
| 177 | dito | N-(8-Hydroxynaphthalin-3,6-disulfonsäure)-N'-cyclohexyl-harnstoff | $T_{14}$ | dito |
| 178 | dito | 1-Hydroxynaphthalin-4,8-disulfonsäure | $T_1$ | dito |
| 179 | dito | 1-Hydroxynaphthalin-4-sulfon-säure | $T_{12}$ | dito |
| 180 | dito | dito | $T_2$ | dito |
| 181 | 1,4-Diaminobenzol-6-sulfonsäure | 1-Acetylamino-8-hydroxy-naphthalin-3,6-disulfonsäure | $T_{13}$ | blaustichiges rot |
| 182 | 2-Amino-5-aminomethy-lennaphthalin-1-sulfon-säure | dito | $T_1$ | dito |
| 183 | dito | dito | $T_{12}$ | dito |
| 184 | dito | 1-Benzylamino-8-hydroxy-naphthalin-3,6-disulfonsäure | $T_1$ | dito |
| 185 | dito | 1-Benzylamino-8-hydroxy-naphthalin-4,6-disulfonsäure | $T_1$ | dito |
| 186 | 1,3-Diamino-2-methyl-benzol-5-sulfonsäure | dito | $T_{12}$ | dito |
| 187 | 3-Amino-N-methylbenzyl-amin-4-sulfonsäure | 1-Benzoylamino-8-hydroxy-naphthalin-4,6-disulfonsäure | $T_{14}$ | dito |
| 188 | 1,4-Diaminobenzol-2,5-Disulfonsäure | 1-Benzoylamino-8-hydroxy-naphthalin-3,6-disulfonsäure | $T_1$ | dito |
| 189 | dito | dito | $T_{12}$ | dito |

Beispiel 190: Das Kondensationsprodukt von 1,3-Diaminobenzol-6-sulfonsäure mit Cyanurchlorid wird auf übliche Weise diazotiert und auf 1-Dichlortriazinylamino-8-hydroxynaphthalin-3,6-disulfonsäure gekuppelt. Nach Austausch von zwei Chlor gegen zwei Mol 4-Aminobenzoesäure-N'-β(β'-chloräthylsulfonyl)äthylamid-hydrochlorid erhält man einen Farbstoff der Formel

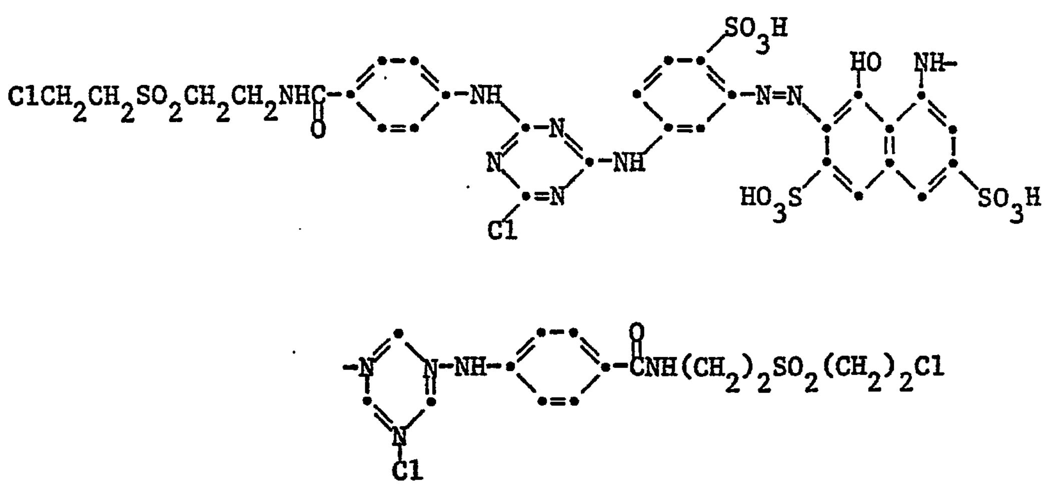

der Baumwolle in brillanten echten Rottönen färbt.

Beispiel 191

Eine Lösung von 37 Teilen 1-Amino-4-β-(β'-Chloräthyl-sulfonyl)-äthylaminocarbonyl-benzol-2-sulfonsäure in 350 Teilen Eiswasser wird bei 0 - 2°C und pH 6 - 6,5 mit 14 Teilen Cyanurfluorid umgesetzt. Sobald keine freien Aminogruppen mehr nachweisbar sind, werden 18,8 Teile 1,3-Phenylendiamin-4-sulfonsäure in 100 Teilen Wasser zugegeben und bei 0 - 10°C, pH 5 - 7 umgesetzt. Die salzsauer gestellte Kondensationslösung wird wie üblich diazotisiert und bei 0 - 10°C und pH 7,0 zu einer Lösung von 28,4 Teilen 1-Phenyl-3-carboxypyrazolon-4'-sulfonsäure in 200 Teilen Wasser gegeben und gekuppelt. Der gelbe Monoazofarbstoff wird anschliessend mit Natriumchlorid ausgesalzen, abgesaugt, gewaschen und im Vakuum bei 45°C getrocknet. Der isolierte Farbstoff der Formel

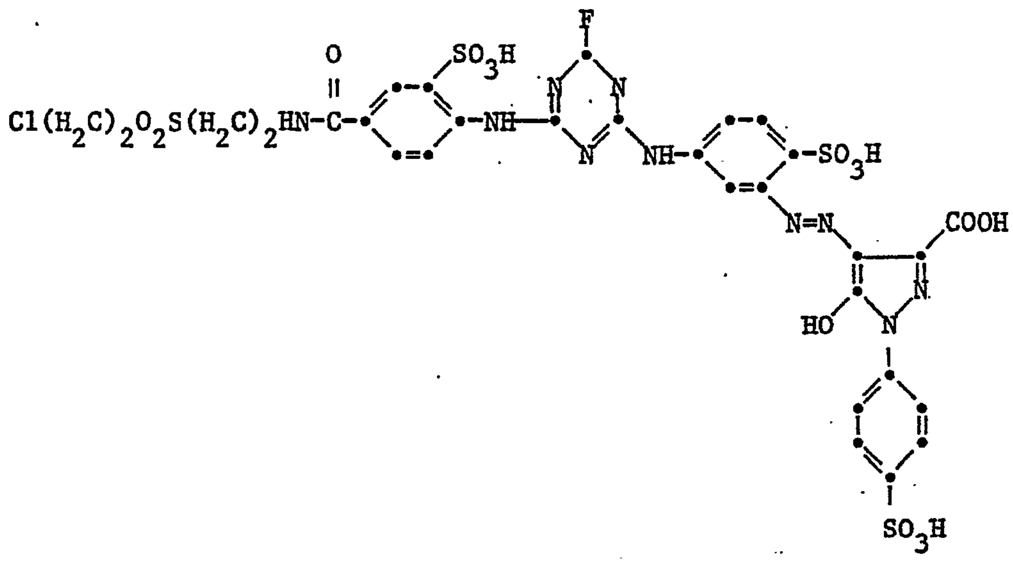

färbt Baumwolle in echten grünstichigen Gelbtönen.

Beispiel 192: 26 Teile des bekannten Farbstoffs der Formel

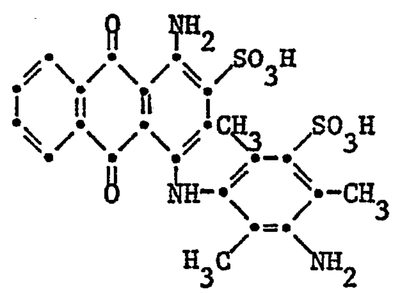

werden bei 0-5°C und pH 2-3 in Wasser mit 10 Teilen Cyanurchlorid umgesetzt und anschliessend mit 16 g 3-Aminobenzoesäure-N'-β(β'-chloräthylsulfonyl)äthylamid-hydrochlorid zur Reaktion gebracht (Temperatur 20–25°C; pH 6,0–7,0). Der gebildete Farbstoff der Formel

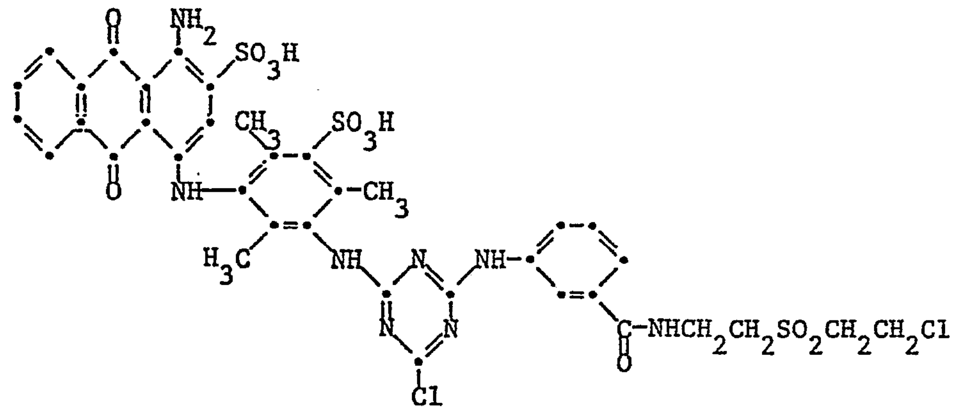

läßt sich durch Aussalzen mit Kaliumchlorid gewinnen und färbt Baumwolle vor allem im Druckverfahren in leuchtend blauen, sehr lichtechten Tönen.

Beispiel 193: 26 Teile des bekannten Farbstoffs der Formel

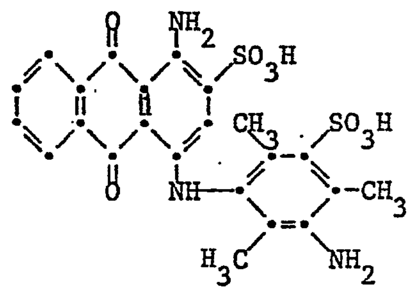

werden bei 0–2°C und pH 4–5 in Wasser mit 7,5 Teilen Cyanurfluorid umgesetzt und anschließend mit 16 g 4-Aminobenzoesäure-N'-β(β'-chloräthylsulfonyl)äthylamid-hydrochlorid zur Reaktion gebracht (Temperatur 0–20°C; pH 4–6). Der gebildete Farbstoff der Formel

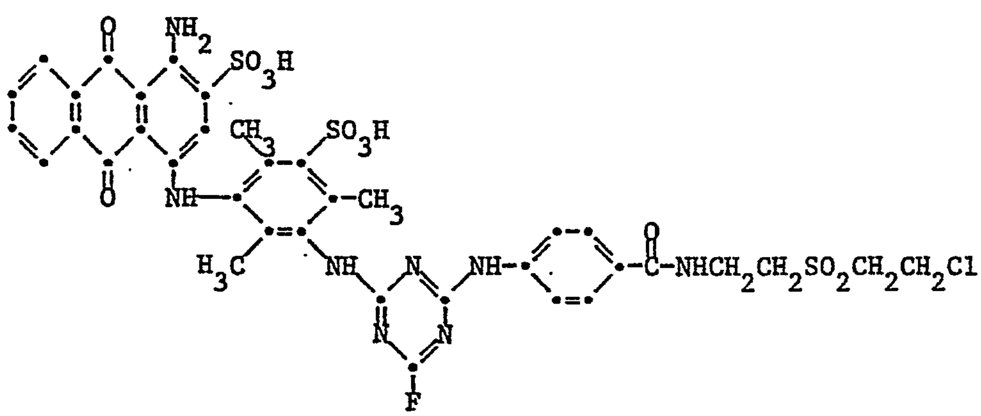

läßt sich durch Aussalzen mit Kaliumchlorid gewinnen und färbt Baumwolle vor allem im Druckverfahren in leuchtend blauen, sehr lichtechten Tönen.

In analoger Weise wurden die folgenden Reaktivfarbstoffe hergestellt, wobei unter I die Ausgangsaminoanthrachinonfarbstoffe und unter II das reaktive Amin aufgeführt ist.

| Bsp. | I | II | Farbton auf BW |
|---|---|---|---|
| 194 | 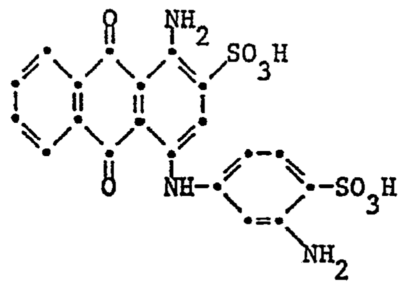 | $T_1$ | grünstichiges Blau |
| 195 | dito | $T_{12}$ | dito |
| 196 | dito | $T_5$ | dito |
| 197 | dito | $T_6$ | dito |
| 198 | 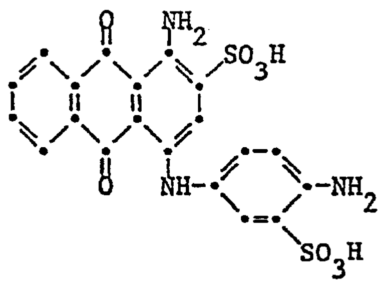 | $T_{14}$ | dito |
| 199 | dito | $T_{13}$ | dito |
| 200 | 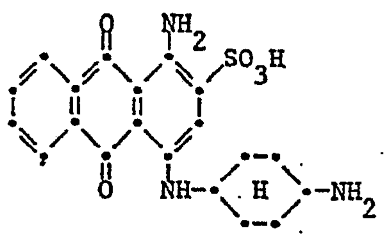 | $T_1$ | dito |
| 201 | dito | $T_{12}$ | dito |

| Bsp. | I | II | Farbton auf BW |
|---|---|---|---|
| 202 | 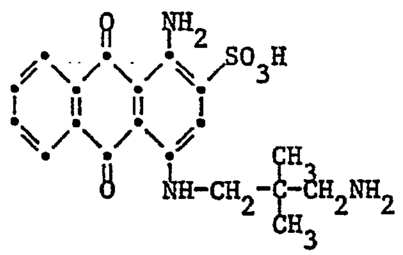 | $T_1$ | blau |
| 203 | 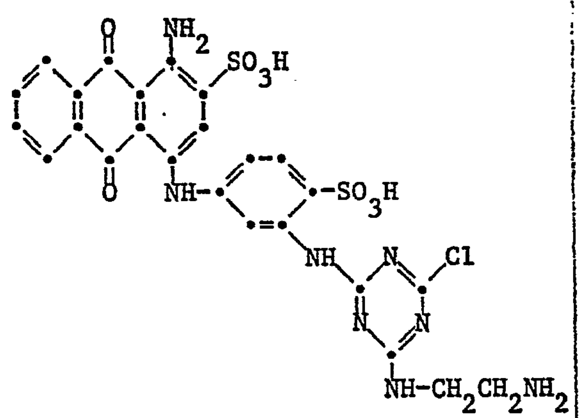 | $T_{12}$ | dito |
| 204 | 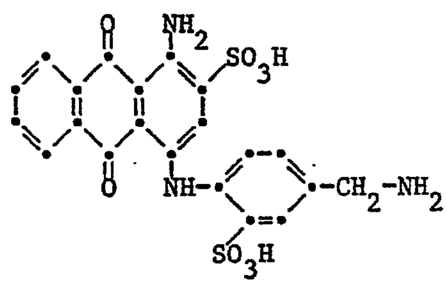 | $T_{12}$ | dito |
| 205 | 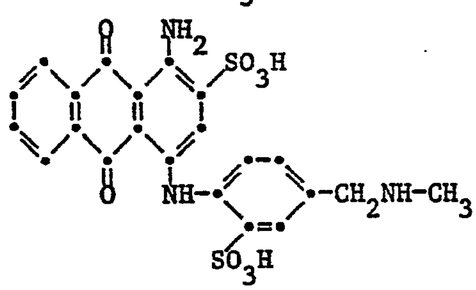 | $T_1$ | dito |

Beispiel 206: 64,8 Teile des bekannten Farbstoffs der Formel

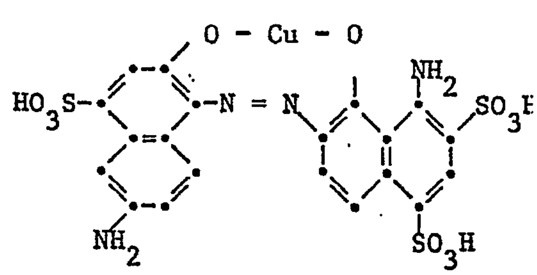

werden in 700 Teilen Wasser angerührt mit 19 Teilen Cyanurchlorid bei 0-5°C/pH 2-3 umgesetzt und schliesslich mit 30 Teilen 4-Aminobenzoesäure-N'-β(β'-chloräthylsulfonyl)äthylamid-hydrochlorid bei pH 6-7/20°C zur Reaktion gebracht. Der Farbstoff wird durch Sprühtrocknung der Lösung gewonnen. Man erhält 90 Teile des Farbstoffs der Formel

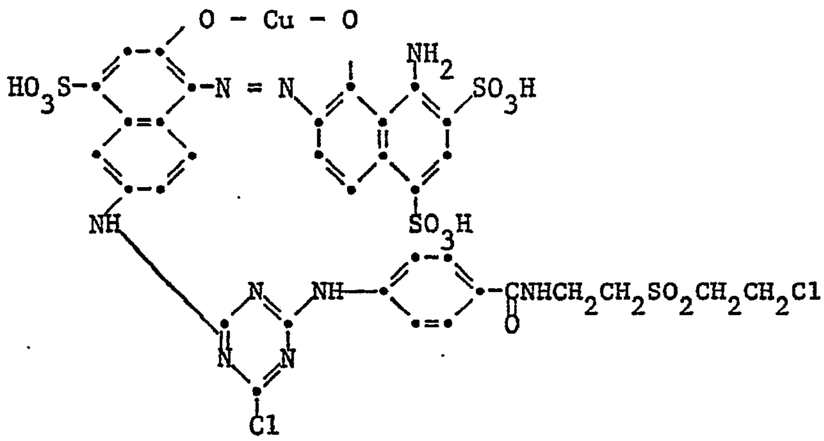

Beispiel 207: 64,8 Teile des bekannten Farbstoffs der Formel

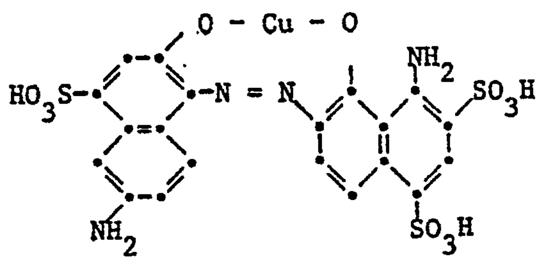

werden in 700 Teilen Wasser angerührt mit 14 Teilen Cyanurfluorid bei 0-2°C/pH 4-5 umgesetzt und schliesslich mit 30 Teilen 3-Aminobenzoesäure-N'-β(β'-chloräthylsulfonyl)äthylamid-hydrochlorid bei pH 6-7/0-20°C zur Reaktion gebracht. Der Farbstoff wird durch Sprühtrocknung der Lösung gewonnen. Man erhält 90 Teile des Farbstoffs der Formel

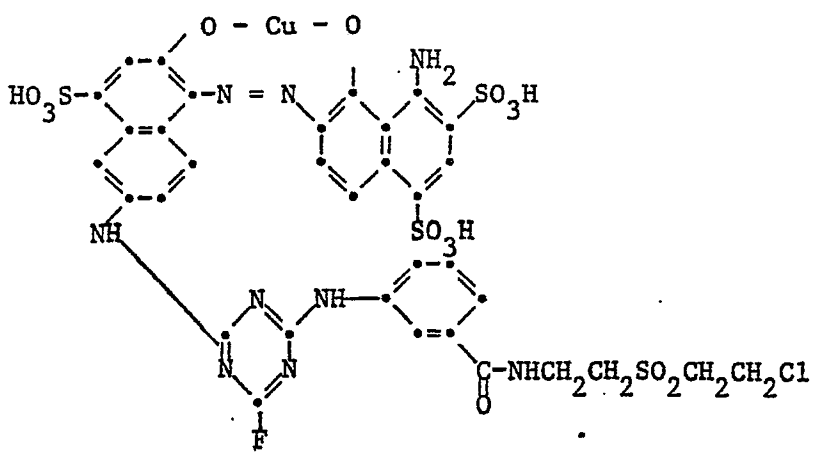

In analoger Weise und nach an sich bekannten Methoden wurden die neuen Farbstoffe der allgemeinen Formel

Chromophor – Cy – T
|
Hal

synthetisiert und in der folgenden Tabelle zusammengefasst.

| Bsp. | Chromophor | T | Farbe |
|---|---|---|---|
| 208 | 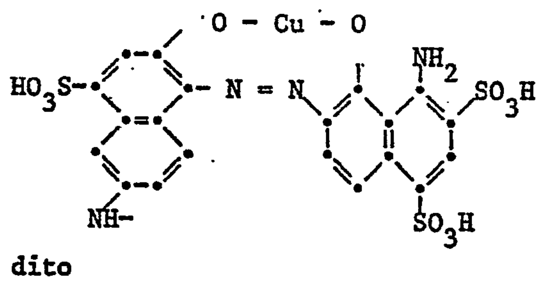 | $T_1$ | blau |
| 209 | dito | $T_{12}$ | dito |
| 210 | dito | $T_6$ | dito |
| 211 | 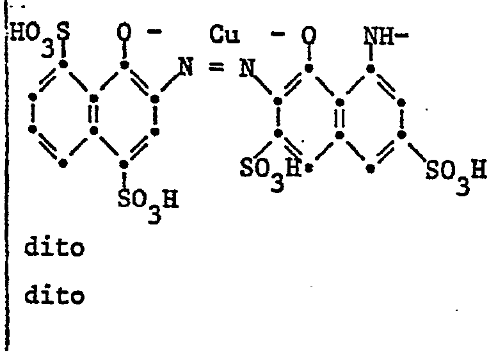 | $T_5$ | dito |
| 212 | dito | $T_{12}$ | dito |
| 213 | dito | $T_{14}$ | dito |

| Bsp. | Chromophor | T | Farbe |
|---|---|---|---|
| 214 | 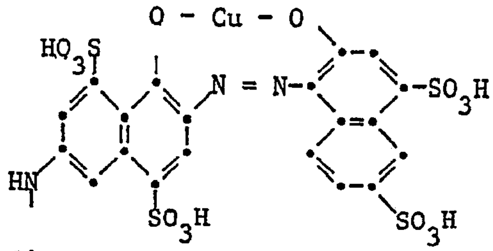 | $T_1$ | blau |
| 215 | dito | $T_{12}$ | dito |
| 216 | 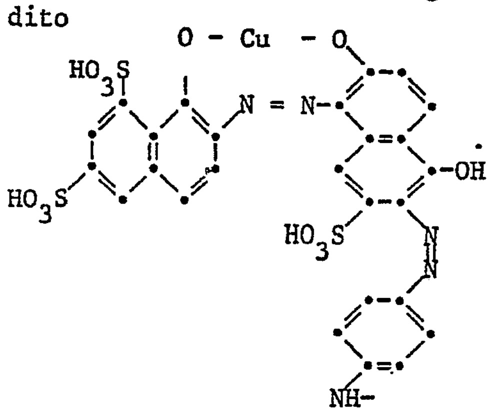 | $T_1$ | marineblau |
| 217 | 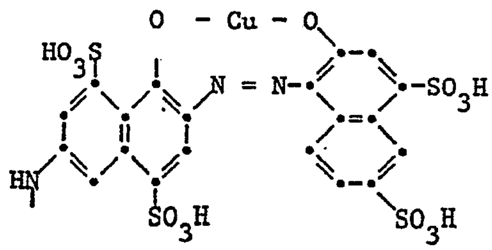 | $T_{12}$ | blau |
| 218 | 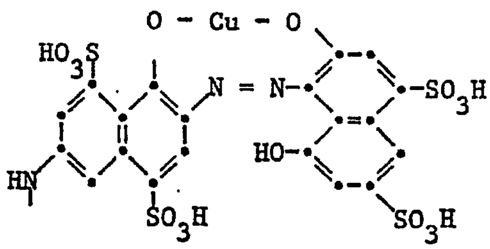 | $T_6$ | dito |
| 219 | 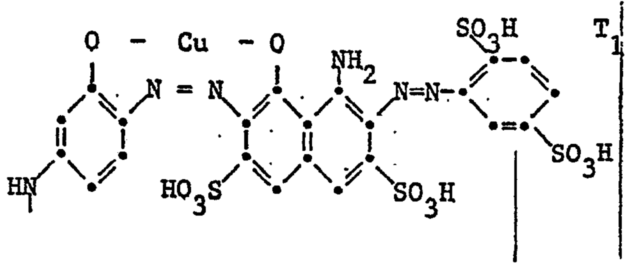 | $T_1$ | marineblau |

| Bsp. | Chromophor | T | Farbton |
|---|---|---|---|
| 220 | 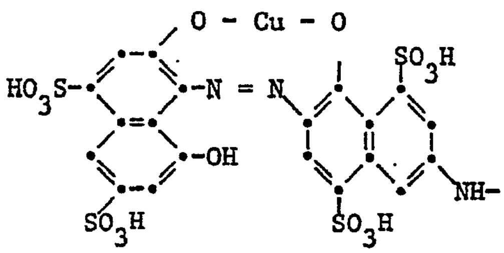 | $T_{12}$ | marineblau |
| 221 | 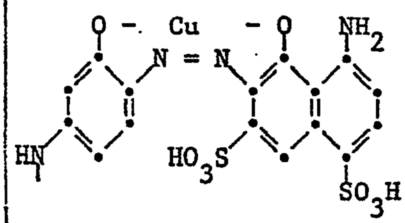 | $T_3$ | blau |
| 222 | 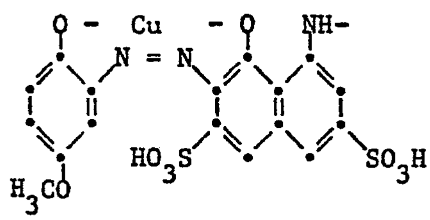 | $T_1$ | marineblau |
| 223 | 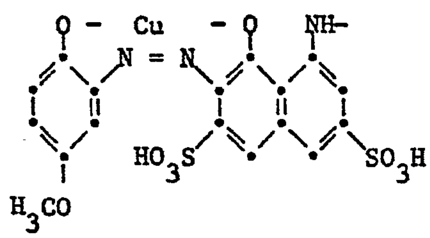 | $T_{12}$ | dito |
| 224 | 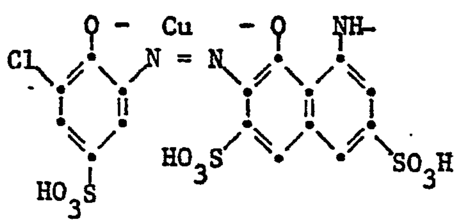 | $T_1$ | violett |

| Bsp. | Chromophor | T | Farbton |
|---|---|---|---|
| 225 | 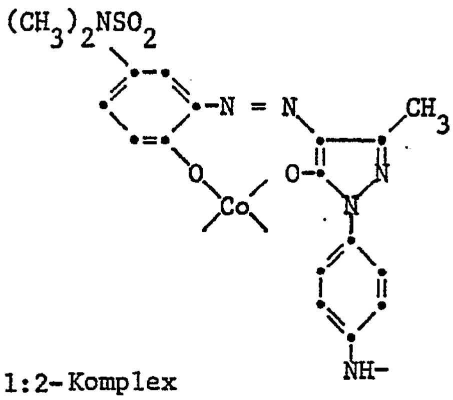 1:2-Komplex | $T_1$ | braun |
| 226 | 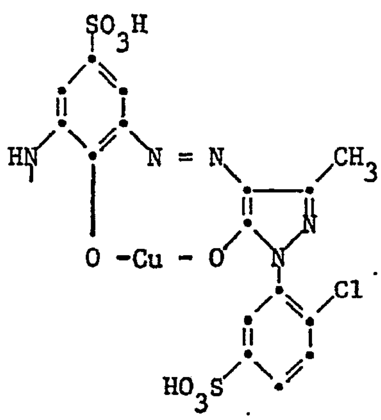 | $T_{11}$ | dito |
| 227 | 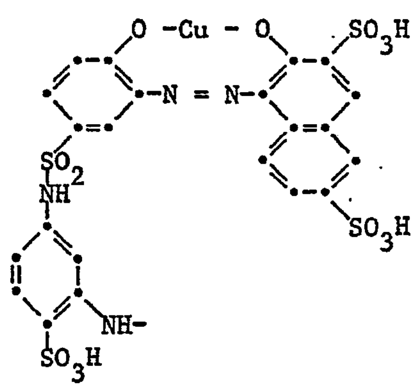 | $T_4$ | rot |
| 228 | 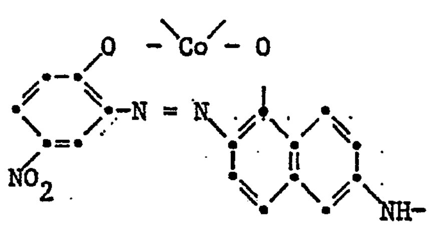 1:2-Komplex | $T_3$ | rubinrot |

| Bsp. | Chromophor | T | Farbton |
|---|---|---|---|
| 229 | 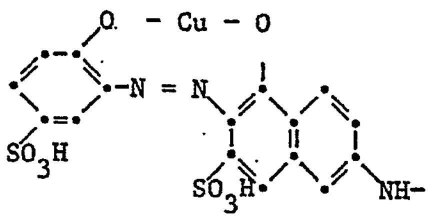 | $T_7$ | rot |
| 230 | 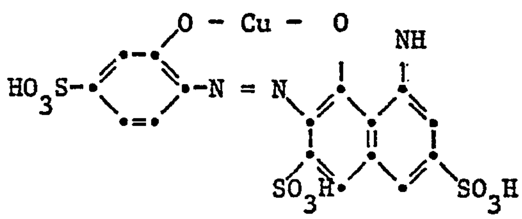 | $T_8$ | violett |
| 231 | 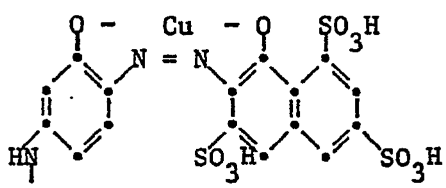 | $T_1$ | violett |
| 232 | 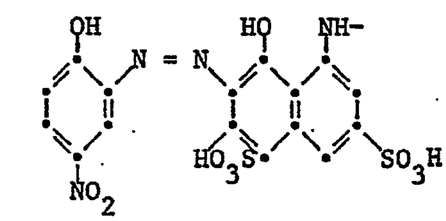<br>Mischung der Co- und Cr-1:2-Komplexe | $T_{12}$ | schwarz |
| 233 | 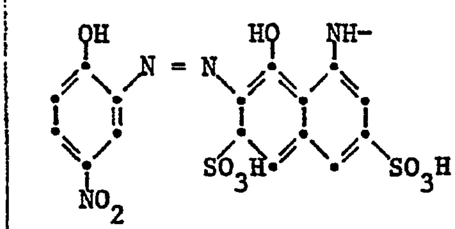<br>Mischung der Co- und Cr-1:2-Komplexe | $T_1$ | schwarz |

| Bsp. | Chromophor | T | Farbton |
|---|---|---|---|
| 234 | 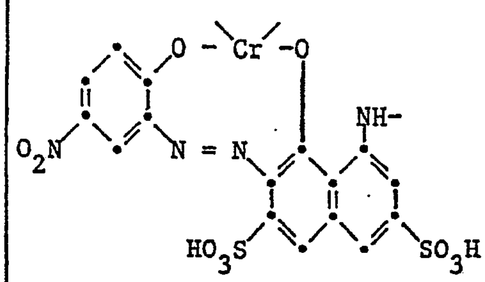<br>1:2-Komplex | $T_1$ | grau |
| 235 | 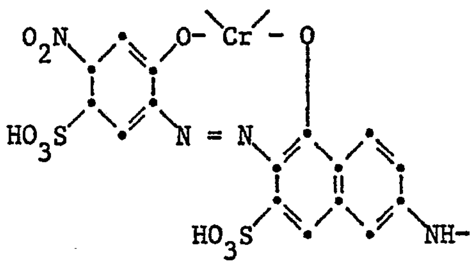<br>1:2-Komplex | $T_{12}$ | schwarzgrau |
| 236 | 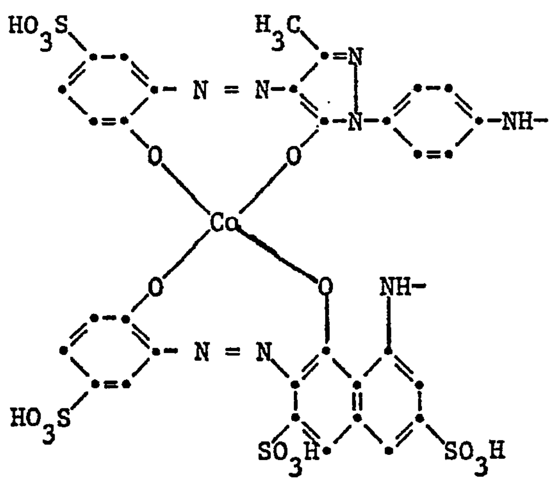 | $T_1$ | braun |

| Bsp. | Chromophor | T | Farbton |
|---|---|---|---|
| 237 | 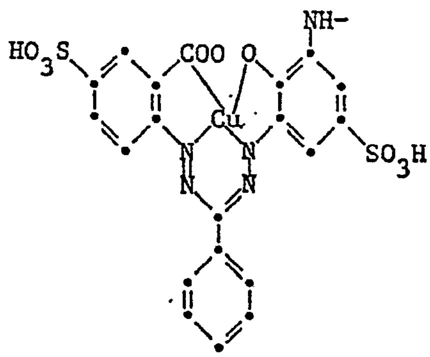 | $T_1$ | blau |
| 238 | dito | $T_{12}$ | dito |
| 239 | dito | $T_6$ | dito |
| 240 | 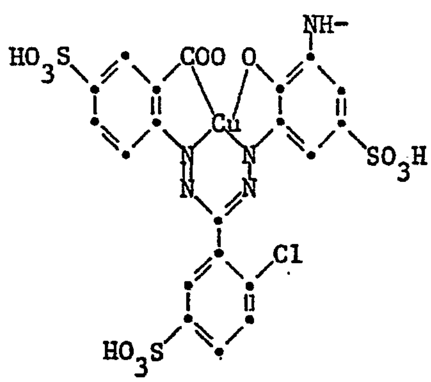 | $T_5$ | dito |
| 241 | 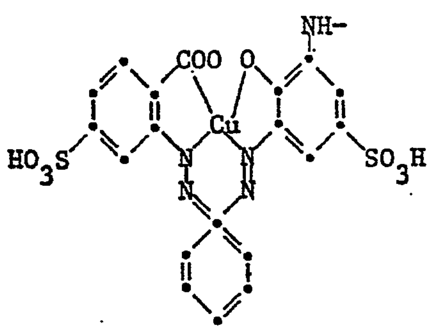 | $T_1$ | dito |

| Bsp. | Chromophor | T | Farbton |
|---|---|---|---|
| 242 | 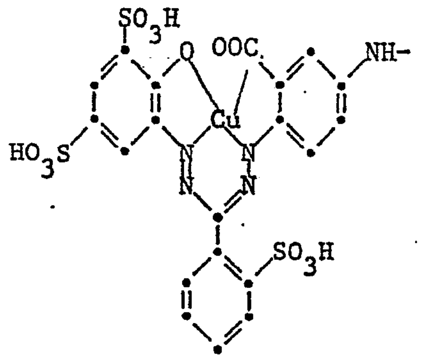 | $T_1$ | blau |
| 243 | 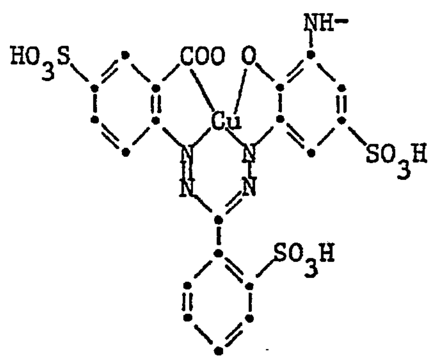 | $T_{12}$ | dito |
| 244 | dito | $T_1$ | dito |
| 245 | dito | $T_{12}$ | dito |
| 246 | 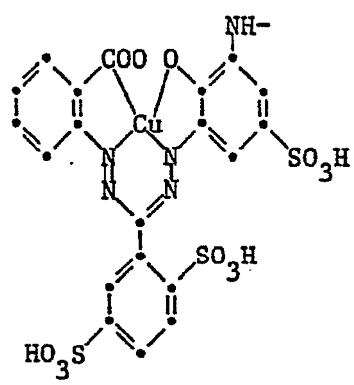 | $T_1$ | dito |

| Bsp. | Chromophor | T | Farbton |
|---|---|---|---|
| 247 | 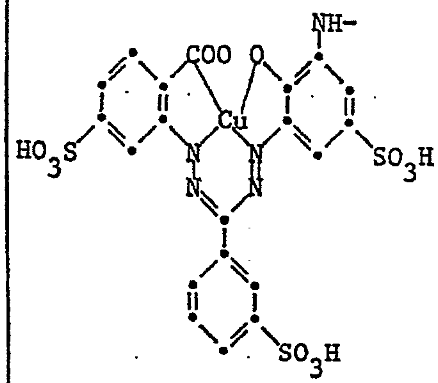 | $T_{12}$ | blau |
| 248 | 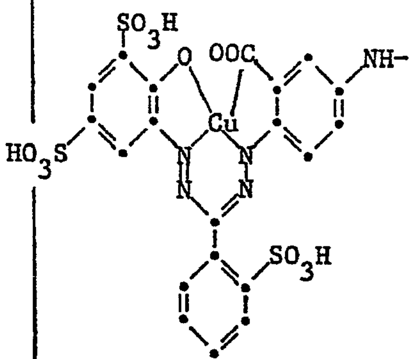 | $T_{12}$ | dito |
| 249 | 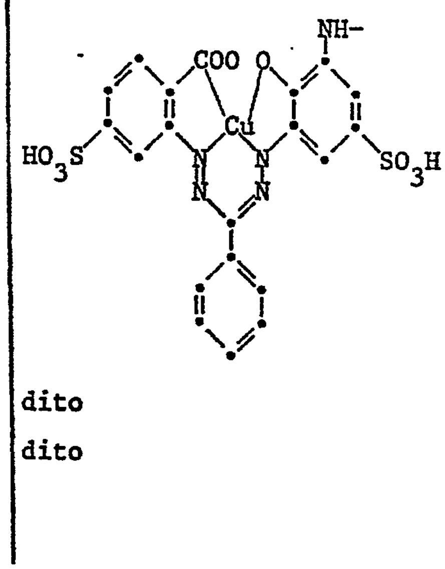 | $T_1$ | dito |
| 250 | dito | $T_{12}$ | dito |
| 251 | dito | $T_6$ | dito |

| Bsp. | Chromophor | T | Farbton |
|---|---|---|---|
| 252 | 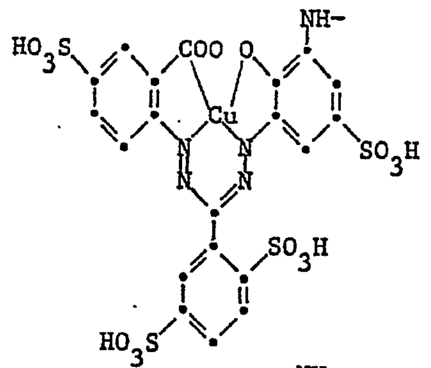 | $T_6$ | blau |
| 253 | 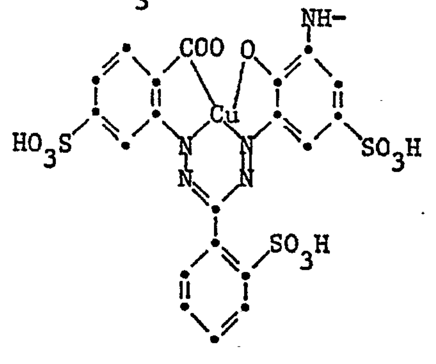 | $T_5$ | dito |
| 254 | 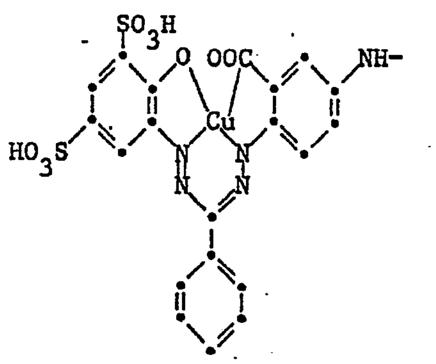 | $T_1$ | dito |

Beispiel 255: Zu 17,3 Teilen salzsauer diazotierter Anilin-4-sulfonsäure werden bei 5°C 31,6 Teile einer Suspension von 1-Amino-8-hydroxynaphthalin-3,6-disulfonsäure in 300 Teilen Wasser gegeben. Man kuppelt über Nacht bei pH 1-2 und fügt anschliessend 38,6 Teile einer Suspension von salzsauer diazotiertem primärem Kondensationsprodukt aus Cyanurchlorid und 1,3-Phenylendiamin-4-sulfonsäure zu. Durch Zugabe von 17,8 Teilen Natriumcarbonat wird schwach sauer ausgekuppelt; anschliessend wird eine Lösung von 30 Teilen 3-Aminobenzoesäure-N'-β(β'-chloräthylsulfonyl)äthylamid-hydrochlorid zugefügt und bei 20-30°C und einem pH-Wert von 7-7,5 kondensiert. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der in Beispiel 255 genannte Farbstoff entspricht der Formel

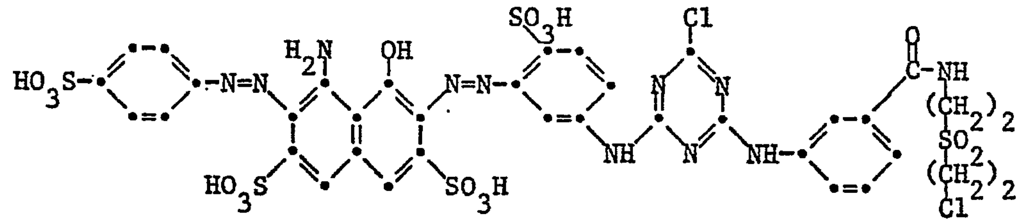

Beispiel 256: Zu 17,3 Teilen salzsauer diazotierter Anilin-4-sulfonsäure werden bei 5°C 31,6 Teilen einer Suspension von 1-Amino-8-hydroxynaphthalin-3,6-disulfonsäure in 300 Teilen Wasser gegeben. Man kuppelt über Nacht bei pH 1-2 und fügt anschliessend 21,6 Teile einer Suspension von salzsauer diazotiertem 3-Amino-acetanilid-4-sulfonsäure zu. Durch Zugabe von 17,8 Teilen Natriumcarbonat wird schwach sauer ausgekuppelt; anschliessend alkalisch 2 Stunden lang bei 80°C hydrolysiert. Das Chromophor wird isoliert und bei 0-2°C/pH6-7; mit 14 Teilen Cyanurfluorid kondensiert. Danach gibt man 30 Teile 4-Aminobenzoesäure-N'-β(β'-chloräthylsulfonyl)äthylamid-hydrochlorid zu und kondensiert bei 0-20°C/pH 6-7, 2 Stunden lang. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der in Beispiel 256 genannte Farbstoff entspricht der Formel

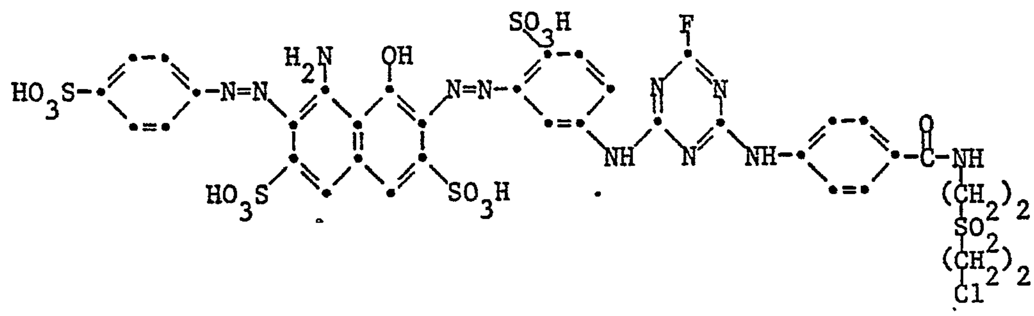

Analoge erfindungsgemässe Farbstoffe sind in Tabelle 6 zusammengefasst, wobei in Spalte I die zur sauren Kupplung verwendete Diazokomponente in Spalte II die zur Kupplung in neutraler oder alkalischer Lösung verwendete Diazokomponente, in Spalte III das reaktive Amin und in Spalte IV der auf Baumwolle erzielte Farbton angegeben sind.

Tabelle 6

| Bsp. | I | II | III | IV |
|---|---|---|---|---|
| 257 | 2-Chlor-4-sulfoanilin | 1,3-Phenylendiamin-4-sulfonsäure | $T_1$ | Marineblau |
| 258 | 2-Chlor-4,6-disulfoanilin | dito | $T_{12}$ | rotstichig Marineblau |
| 259 | 4-Chlor-2-sulfoanilin | 1,4-Phenylendiamin-5-sulfonsäure | $T_1$ | dito |
| 260 | 2-Naphthylamin-1,5-disulfonsäure | dito | $T_{12}$ | grünstichig Marineblau |
| 261 | 4-Alkylsulfonylanilin | 1,3-Phenylendiamin-2,4-disulfonsäure | $T_{14}$ | rotstichig Marineblau |
| 262 | 2-Methyl-4,6-disulfoanilin | dito | $T_6$ | dito |
| 263 | 2-Naphthylamin-3,6,8-trisulfonsäure | 1,4-Phenylendiamin-2,5-disulfonsäure | $T_1$ | grünstichig Marineblau |
| 264 | 3-(4',6'-Difluortriazinyl)-amino-6-sulfoanilin | 1,3-Phenylendiamin-4-sulfonsäure | $T_{12}$ | rotstichig Marineblau |
| 265 | 3-(4',6'-Dichlortriazinyl)-amino-6-sulfoanilin | dito | $T_1$ | dito |
| 266 | Anilin | dito | $T_{12}$ | dito |

Beispiel 267: 48 Teile des sekundären Kondensationsproduktes aus 1,3-Phenylendiamin-4-sulfonsäure, Cyanurchlorid und 4-Aminosäure-N'-β(β'-chloräthylsulfonyl)äthylamid-hydrochlorid werden salzsauer diazotiert in essigsaurer Lösung auf eine Suspension von 30,8 Teilen 1-Amino-8-hydroxy-naphthalin-3,6-disulfonsäure in 300 Teilen Wasser gekuppelt. Zu dem roten Monoazofarbstoff werden anschließend 17,3 Teile salzsauer diazotierte Anilin-4-sulfonsäure gegeben und neutral zum Disazofarbstoff gekuppelt. Der Farbstoff wird durch Zugabe von Kaliumchlorid abgeschieden und schonend getrocknet. Man erhält ein schwarzes Pulver, das Baumwolle in rotstichig, marineblauen Tönen mit guter Echtheit färbt.

Der in Beispiel 267 genannte Farbstoff entspricht der Formel

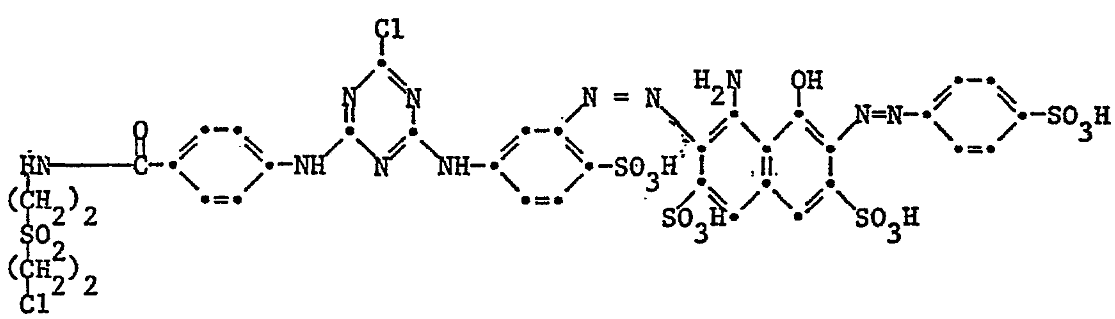

Beispiel 268: Zu 21,6 Teilen salzsauer diazotierter 3-Amino-acetanilid-4-sulfosäure werden bei 5°C 31,6 Teile einer Suspension von 1-Amino-8-hydroxynaphthalin-3,6-disulfonsäure in 300 Teilen Wasser gegeben. Man kuppelt über Nacht bei pH 1-2 und fügt anschliessend 17,3 Teile einer Suspension von salzsauer diazotiertem Anilin-4-sulfonsäure zu. Durch Zugabe von 17,8 Teilen Natriumcarbonat wird schwach sauer ausgekuppelt; anschliessend alkalisch 2 Stunden lang bei 80°C hydrolysiert. Das Chromophor wird isoliert und bei 0-2°C/pH 6-7; mit 14 Teilen Cyanurfluorid kondensiert. Danach gibt man 30 Teile 4-Aminobenzoesäure-N'-β(β'-chloräthylsulfonyl)äthylamid-hydrochlorid zu und kondensiert bei 0-20°C/pH 6-7 2 Stunden lang. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der in Beispiel 268 genannte Farbstoff entspricht der Formel

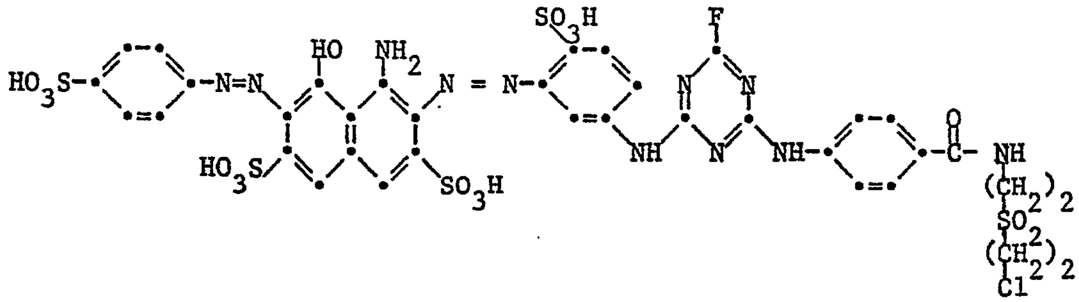

Analoge erfindungsgemässe Farbstoffe sind in Tabelle 7 zusammengefasst, wobei in Spalte I die zur sauren Kupplung verwendete Diazokomponente, in Spalte II die zur Kupplung in neutraler oder alkalischer Lösung verwendete Diazokomponente, in Spalte III der faserreaktive Rest T und in Spalte IV der auf Baumwolle erzielte Farbton angegeben sind.

Tabelle 7

| Bsp. | I | II | III | IV |
|---|---|---|---|---|
| 269 | 1,3-Phenylendiamin-4-sulfonsäure | 2-Naphthylamin-1,5-disulfonsäure | $T_1$ | rotstichig Marineblau |
| 270 | dito | 2-Chlor-4,6-disulfoanilin | $T_1$ | dito |
| 271 | dito | 2-Chlor-4-sulfoanilin | $T_1$ | dito |
| 272 | dito | 2-Methyl-4,6-disulfoanilin | $T_1$ | dito |
| 273 | dito | 3-(4',6'-Dichlortriazinyl)-amino-6-sulfoanilin | $T_1$ | dito |
| 274 | dito | 2-Naphthylamin-3,6,8-trisulfonsäure | $T_1$ | dito |
| 275 | dito | Anilin | $T_{12}$ | dito |
| 276 | dito | 4-Sulfamoyl-anilin | $T_1$ | dito |
| 277 | 1,4-Phenylendiamin-5-sulfonsäure | Anilin-4-sulfonsäure | $T_1$ | grünstichig Marineblau |
| 278 | 1,3-Phenylendiamin-2,4-disulfonsäure | dito | $T_{12}$ | dito |
| 279 | 1,4-Phenylendiamin-2,5-disulfonsäure | dito | $T_1$ | dito |

Beispiel 280: 15,8 Teile der Verbindung der Formel

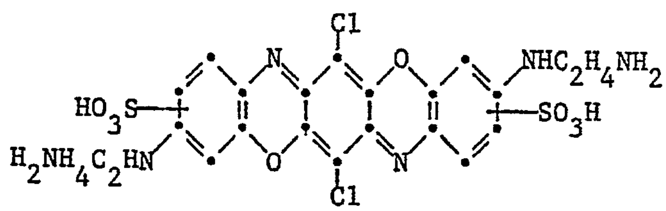

werden mit 1500 Teilen Wasser auf 45°C erwärmt, wobei mit Natronlauge pH 9 eingestellt wird. Dann kühlt man auf 0-5° ab und gibt, nachdem man den pH-Wert mit Salzsäure auf 7 herabgesetzt hat, eine feine Suspension von 9,7 Teilen Cyanurchlorid in 100 Teilen Eiswasser zu. Man rührt bei 0-5°C und hält mit Soda den pH-Wert zwischen 6,5 und 7, bis die Umsetzung beendet ist, was etwa 1 ¼ Stunden in Anspruch nimmt. Innerhalb von 10 Minuten lässt man nun eine neutrale Lösung von 8 Teilen 4-Aminobenzoesäure-N'-β(β'-chloräthylsulfonyl)äthylamid-hydrochlorid in 200 Teilen Wasser zutropfen. Man erhält die Temperatur auf 20-30°C und rührt unter Aufrechterhaltung von pH 6,5-7, bis die Umsetzung beendet ist. Nun wird auf 20°C abgekühlt, mit 400 Teilen Kaliumchlorid ausgesalzen, der ausgefallene Farbstoff abgesaugt und getrocknet. Er färbt Cellulosefasern in rotstichig-blauen Tönen mit guten Echtheitseigenschaften an und entspricht der Formel

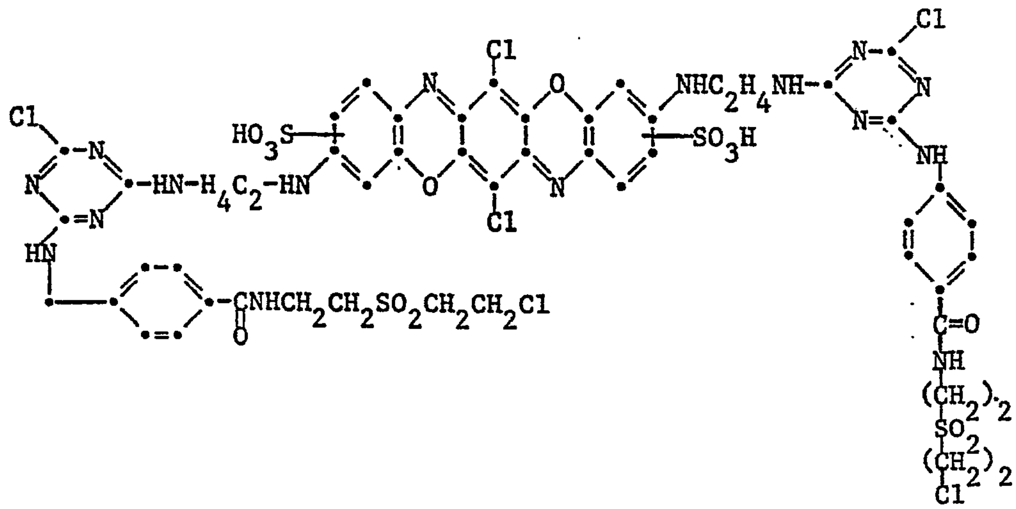

Beispiel 281: 15,8 Teile der Verbindung der Formel

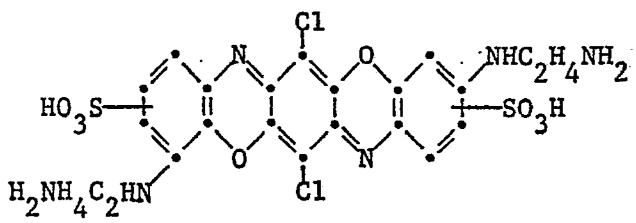

werden mit 1500 Teilen Wasser auf 45°C erwärmt, wobei mit Natronlauge pH 9 eingestellt wird. Dann kühlt man auf 0-2°C ab und gibt 8 Teile Cyanurfluorid zu. Man rührt bei 0-2°C und hält mit Soda den pH-Wert zwischen 6,5 und 7, bis die Umsetzung beendet ist, was etwa 1 ¼ Stunden in Anspruch nimmt. Innerhalb von 10 Minuten lässt man nun eine neutrale Lösung von 3 Teilen 4-Aminobenzoesäure-N'-β(β'-chloräthylsulfonyl)äthylamid-hydrochlorid in 200 Teilen Wasser zutropfen. Man erhöht die Temperatur auf 0-20°C und rührt unter Aufrechterhaltung von pH 6,5-7, bis die Umsetzung beendet ist. Nun wird mit 400 Teilen Kaliumchlorid ausgesalzen, der ausgefallene Farbstoff abgesaugt und getrocknet. Er färbt Cellulosefasern in rotstichig-blauen Tönen mit guten Echtheitseigenschaften an und entspricht der Formel

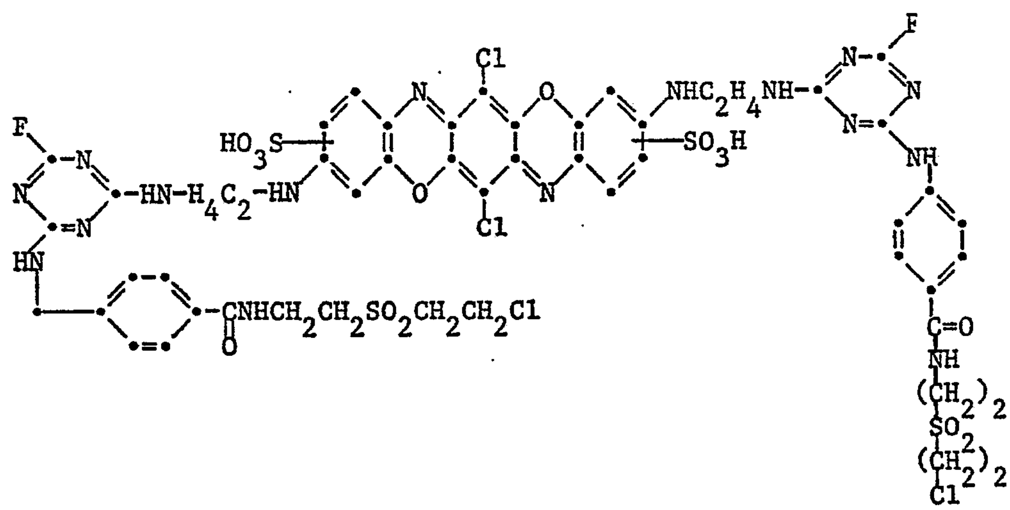

Beispiel 282: 23 Teile der Verbindung der ungefähren Formel

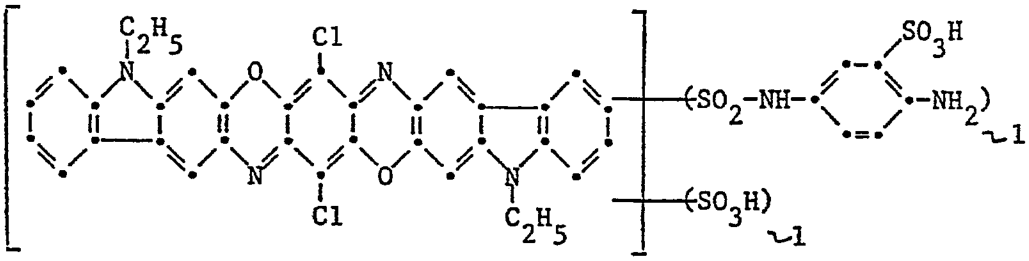

werden in 400 Teilen Wasser gelöst. Die Lösung läßt man bei 0–5°C zu einer feinen Suspension von 4,8 Teilen Cyanurchlorid in 50 Teilen Eiswasser tropfen. Man rührt bei 0–5°C, stellt mit Soda einen pH-Wert von 6–6,5 ein und hält dabei, bis die Umsetzung beendet ist. Dann gibt man eine neutrale Lösung von 4 Teilen 3-Aminobenzoesäure-N'-β(β'-chloräthylsulfonyl)-äthylamid-hydrochlorid in 200 Teilen Wasser zu und rührt bei 35–40°C, wobei mit Soda ein pH-Wert von 6,5–7 aufrechterhalten wird. Wenn der pH-Wert ohne Sodazugabe etwa 1 Stunde konstant bleibt, wird mit Natriumchlorid ausgesalzen und getrocknet. Der erhaltene Farbstoff färbt Cellulosefasern in rotstichig-blauen Tönen und entspricht der ungefähren Formel

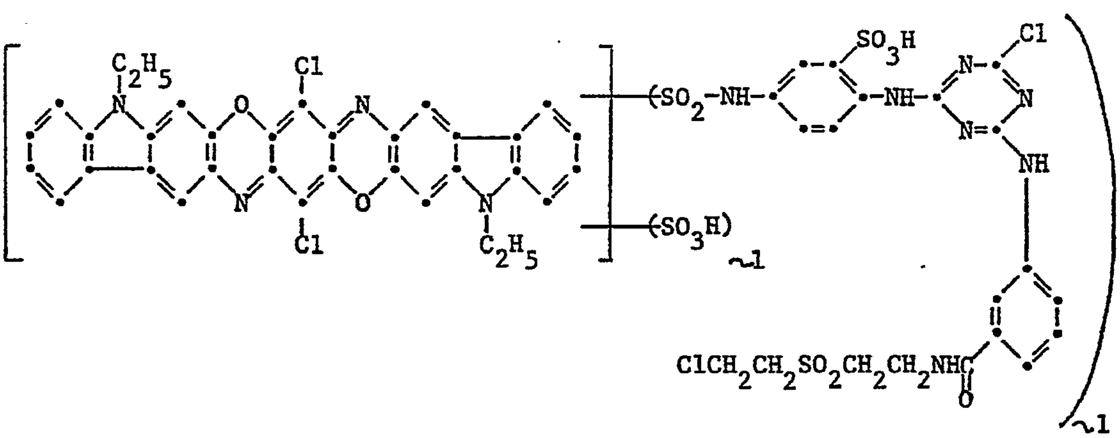

Beispiel 283: 23 Teile der Verbindung der ungefähren Formel

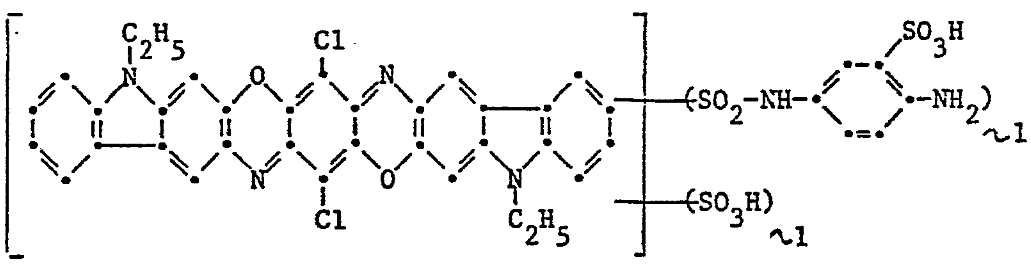

werden in 400 Teilen Wasser gelöst. In die Lösung läßt man bei 0–2°C 4 Teile Cyanurfluorid innert 15 Minuten tropfen. Man rührt bei 0–2°C, stellt mit Soda einen pH-Wert von 6–6,5 ein und hält dabei, bis die Umsetzung beendet ist. Dann gibt man eine neutrale Lösung von 4 Teilen 3-Aminobenzoesäure-N'-β(β'-chloräthylsulfonyl)-äthylamid-hydrochlorid in 200 Teilen Wasser zu und rührt bei 0–20°C, wobei mit Soda ein pH-Wert von 6,5–7 aufrechterhalten wird. Wenn der pH-Wert ohne Sodazugabe etwa 1 Stunde konstant bleibt, wird mit Natriumchlorid ausgesalzen und getrocknet. Der erhaltene Farbstoff färbt Cellulosefasern in rotstichig-blauen Tönen und entspricht der ungefähren Formel

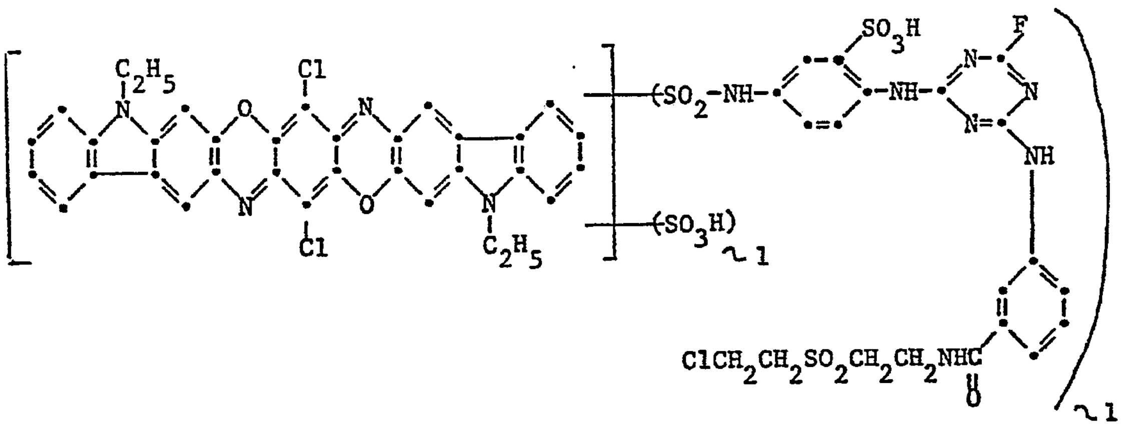

Die in der folgenden Tabelle aufgeführten Farbstoffe können analog hergestellt werden, der Rest

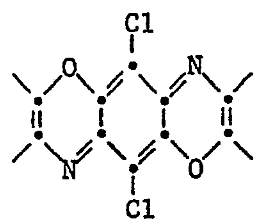

ist dabei mit

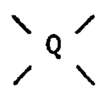

abgekürzt worden.

| Bsp. | Chromophor | T | Farbton |
|---|---|---|---|
| 284 | 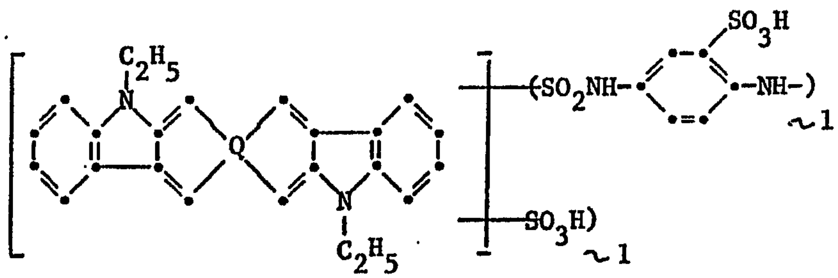 | $T_1$ | rotstichig blau |
| 285 | dito | $T_{12}$ | dito |
| 286 | 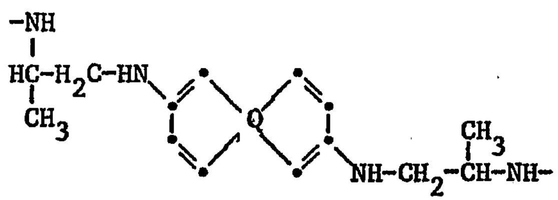 | $T_{14}$ | dito |
| 287 | dito | $T_6$ | dito |
| 288 | dito | $T_{13}$ | dito |
| 289 | 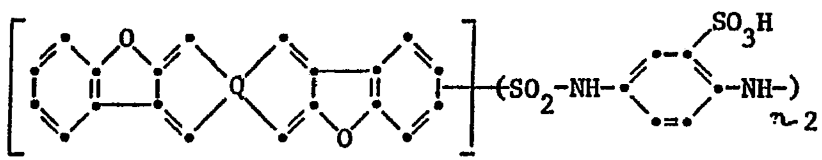 | $T_1$ | rot-violett |

| Bsp. | Chromophor | T | Farbton |
|---|---|---|---|
| 290 | 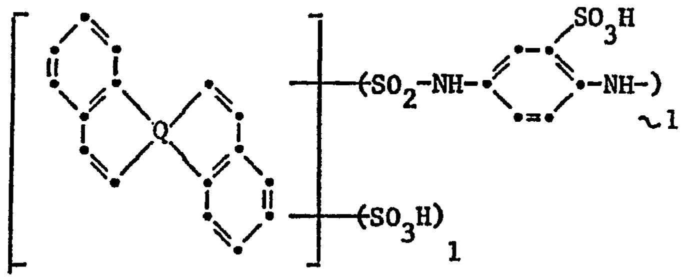 | $T_{12}$ | rot |
| 291 | 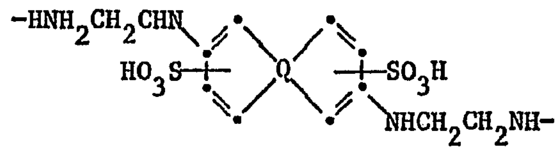 | $T_1$ | rotstichig blau |
| 292 | dito | $T_{13}$ | dito |
| 293 | 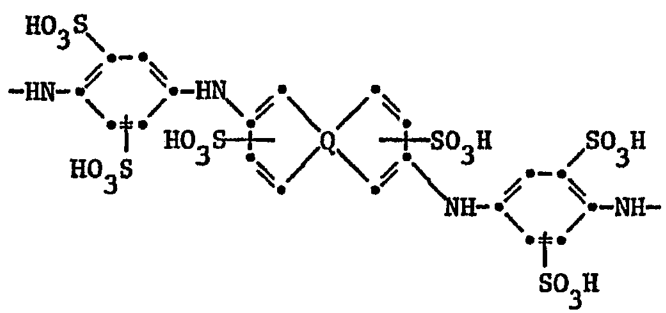 | $T_{12}$ | dito |

| Bsp. | Chromophor | T | Farbton |
|---|---|---|---|
| 294 | 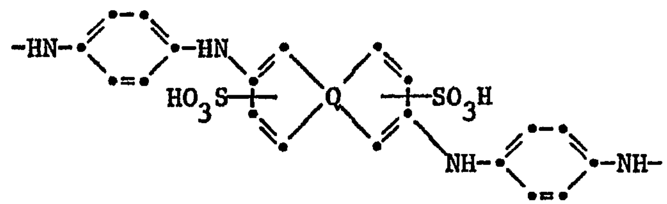 | $T_3$ | rotstichig blau |
| 295 | 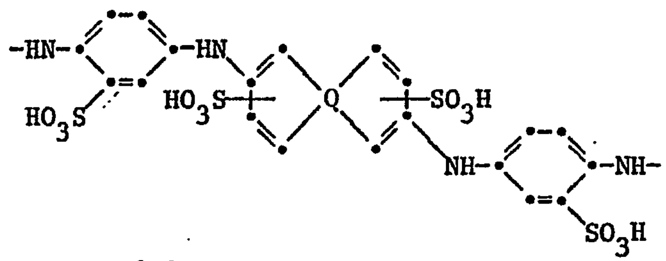 | $T_{12}$ | dito |
| 296 | 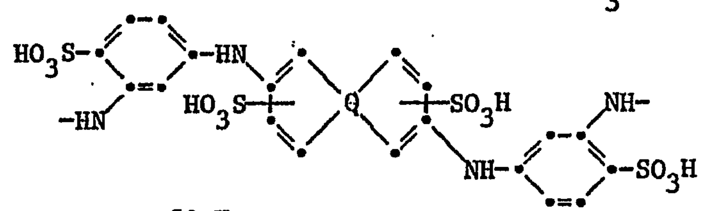 | $T_1$ | dito |
| 297 | 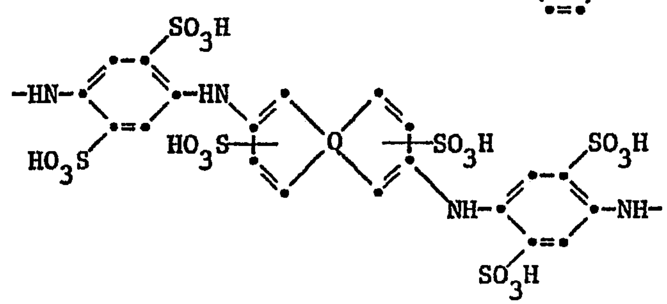 | $T_1$ | dito |

| Bsp. | Chromophor | T | Farbton |
|---|---|---|---|
| 298 | 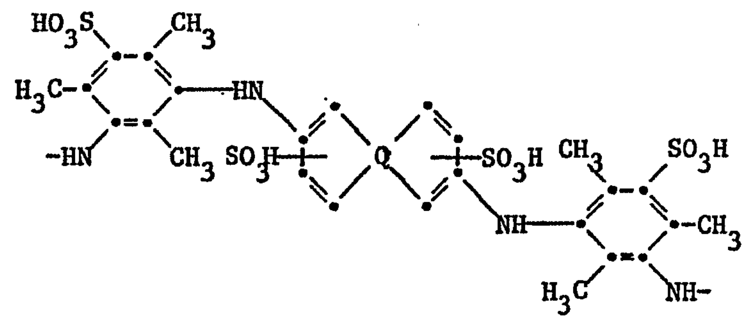 | $T_{12}$ | rotstichig blau |
| 299 | 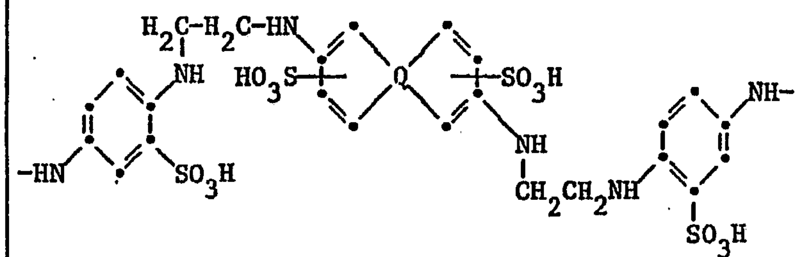 | $T_6$ | dito |
| 300 | 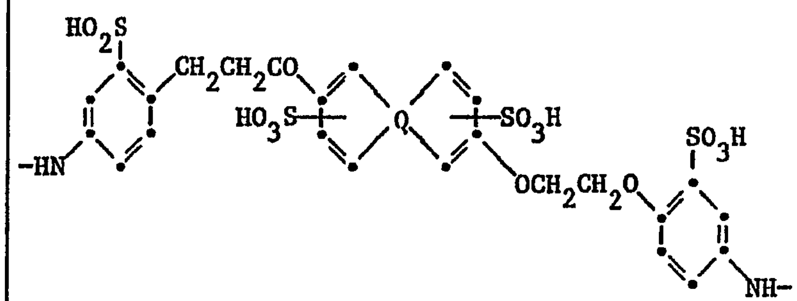 | $T_5$ | rot |

| Bsp. | Chromophor | T | Farbton |
|---|---|---|---|
| 301 | 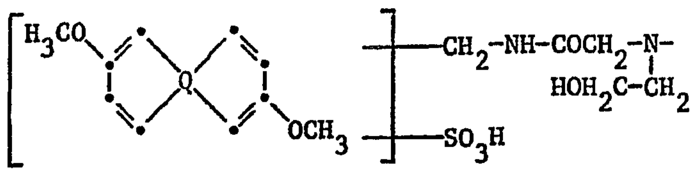 | $T_{14}$ | rot |
| 302 | 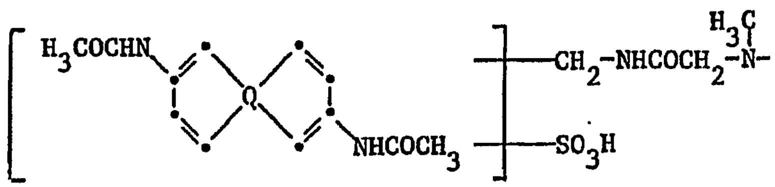 | $T_5$ | rot |
| 303 | 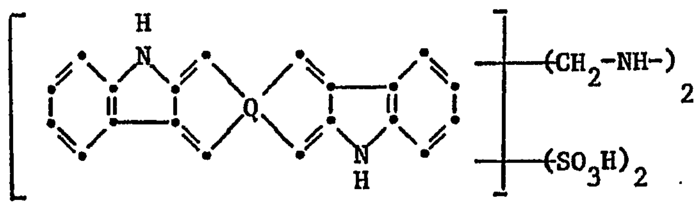 | $T_1$ | blau |
| 304 | 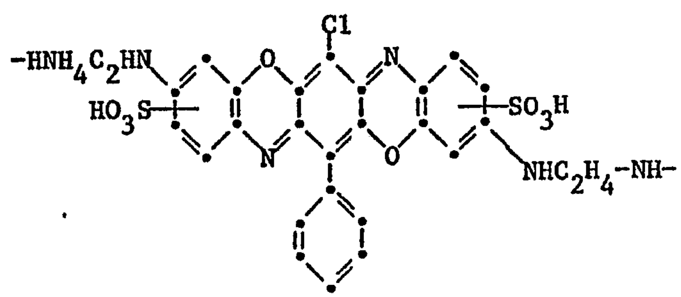 | $T_{12}$ | rotstichig blau |

| Bsp. | Chromophor | T | Farbton |
| --- | --- | --- | --- |
| 305 | 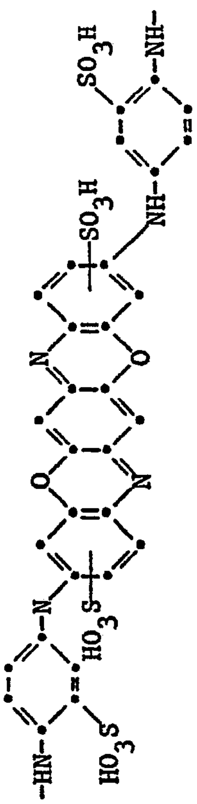 | $T_1$ | rotstichig blau |
| 306 | 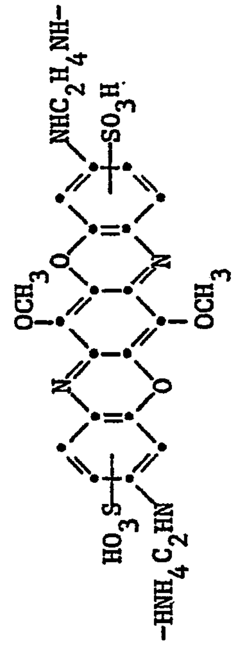 | $T_{12}$ | dito |
| 307 | 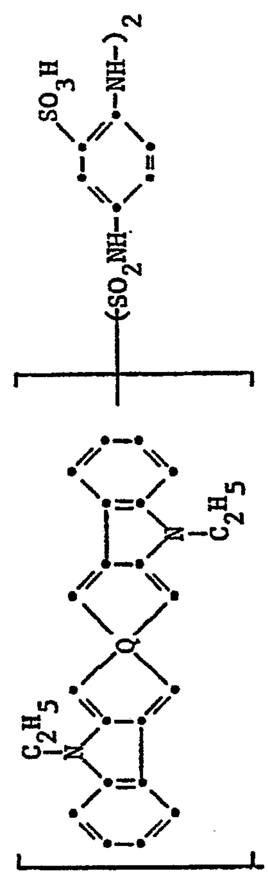 | $T_1$ | dito |

Beispiel 308: 19,7 Teile der Verbindung der Formel

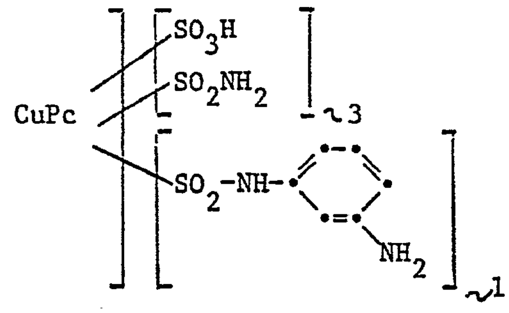

werden in einer Mischung aus 125 Teilen Eis und 125 Teilen Wasser homogen verrührt und mit Natronlauge auf pH 7 eingestellt. Bei einer Temperatur von 0-5°C gibt man nun eine feine Suspension von 4,4 Teilen Cyanurchlorid in 50 Teilen Eiswasser zu, wobei der pH-Wert mit Soda bei 5,5 bis 6 gehalten wird. Sobald die Umsetzung vollständig ist, lässt man eine neutrale Lösung von 4 Teilen 3-Aminobenzoesäure-N'-β(β'-Chloräthylsulfonyl)-äthylamid-hydrochlorid in 100 Teilen Wasser zutropfen. Man erhöht die Temperatur auf 20-30°C und rührt unter Aufrechterhaltung von pH 6,5-7, bis die Umsetzung vollständig ist. Dann wird auf Raumtemperatur abgekühlt, der Farbstoff mit Natriumchlorid ausgesalzen, abgesaugt und getrocknet. Er hat die ungefähre Formel

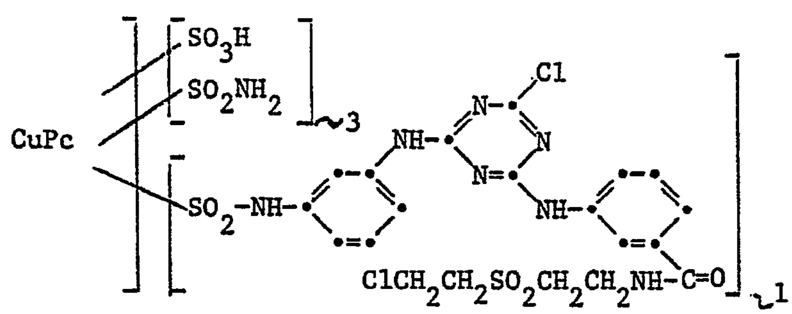

und färbt Cellulosematerial in türkisblauen Tönen von guten Echtheiten.

Beispiel 309: 19,7 Teile der Verbindung der Formel

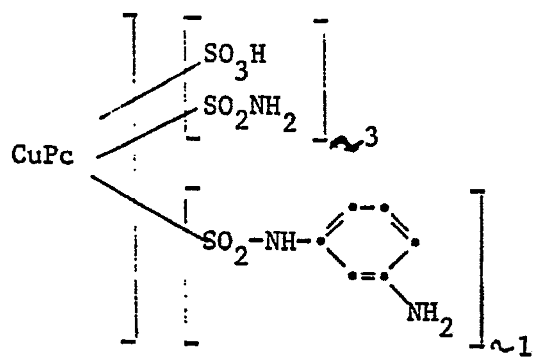

werden in einer Mischung aus 125 Teilen Eis und 125 Teilen Wasser homogen verrührt und mit Natronlauge auf pH 7 eingestellt. Bei einer Temperatur von 0-2°C gibt man nun 4 Teile Cyanurfluorid zu, wobei der pH-Wert mit Soda bei 5,5 bis 6 gehalten wird. Sobald die Umsetzung vollständig ist, lässt man eine neutrale Lösung von 4,5 Teilen 4-Aminobenzoesäure-N'-β(β'-Chloräthylsulfonyl)-äthylamid-hydrochlorid in 100 Teilen Wasser zutropfen. Man erhöht die Temperatur auf 0-30°C und rührt unter Aufrechterhaltung von pH 6,5-7, bis die Umsetzung vollständig ist. Dann wird auf Raumtemperatur abgekühlt, der Farbstoff mit Natriumchlorid ausgesalzen, abgesaugt und getrocknet. Er hat die ungefähre Formel

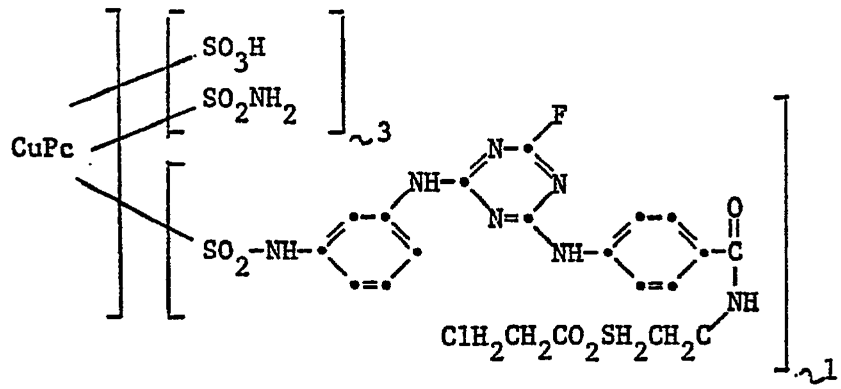

und färbt Cellulosematerial in türkisblauen Tönen von guten Echtheiten.

Beispiel 310: 58 Teile der Verbindung der ungefähren Formel

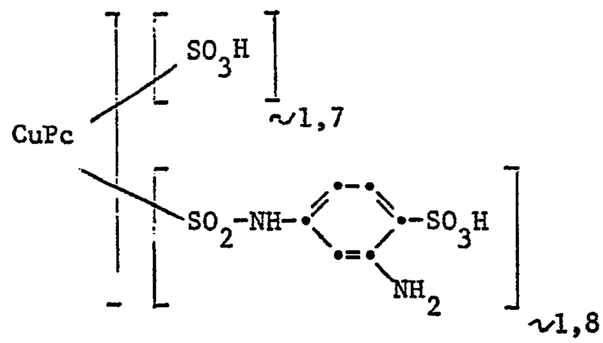

werden in einer Mischung aus 300 Teilen Wasser und 125 Teilen Eis homogen verrührt und mit Natronlauge auf pH 7 eingestellt, Bei 0-5°C gibt man nun einen feine Suspension von 16,6 Teilen Cyanurchlorid in 170 Teilen Eiswasser zu, wobei der pH-Wert mit 10%iger Natronlauge bei 5,3-5,5 gehalten wird. Sobald die Umsetzung vollständig ist, lässt man eine neutrale Lösung von 16 Teilen 4-Aminobenzoesäure-N'-β(β'-Chloräthylsulfonyl)-äthylamid-hydrochlorid in 250 Teilen Wasser zutropfen. Man erwärmt alsdann auf 20-30°C und hält 4 Stunden bei dieser Temperatur, wobei der pH-Wert mit Natriumhydrogencarbonat bei 6,5-7 gehalten wird. Anschliessend wird abgekühlt, mit Natriumchlorid ausgesalzen, der Farbstoff abgesaugt und getrocknet. Er entspricht der ungefähren Formel

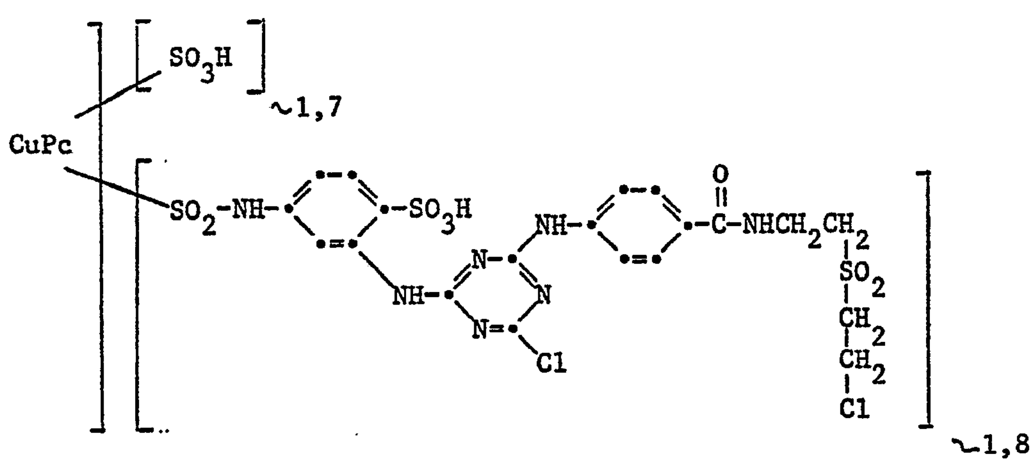

Beispiel 311: 58 Teile der Verbindung der ungefähren Formel

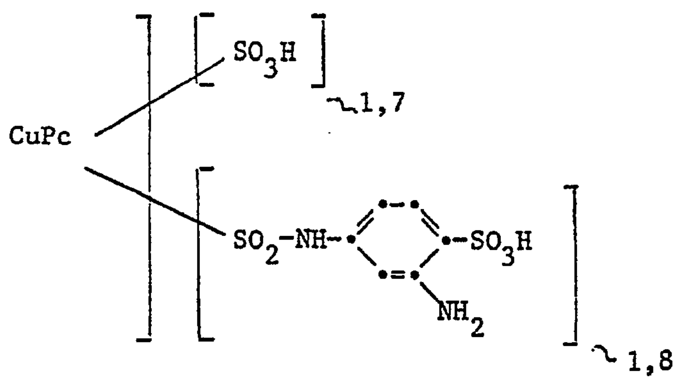

werden in einer Mischung aus 300 Teilen Wasser und 125 Teilen Eis homogen verrührt und mit Natronlauge auf pH 7 eingestellt. Bei 0-2°C gibt man 15 Teile Cyanurfluorid zu, wobei der pH-Wert mit 10%iger Natronlauge bei 5,3-5,5 gehalten wird. Sobald die Umsetzung vollständig ist, lässt man eine neutrale Lösung von 17 Teilen 3-Aminobenzoesäure-N'-β-(β'-chloräthylsulfonyl)-äthylamid-hydrochlorid in 350 Teilen Wasser zutropfen. Man erwärmt alsdann auf 0-30°C und hält 4 Stunden bei dieser Temperatur, wobei der pH-Wert mit Natriumhydrogencarbonat bei 6,5-7 gehalten wird. Anschliessend wird abgekühlt, mit Natriumchlorid ausgesalzen, der Farbstoff abgesaugt und getrocknet. Er entspricht der ungefähren Formel

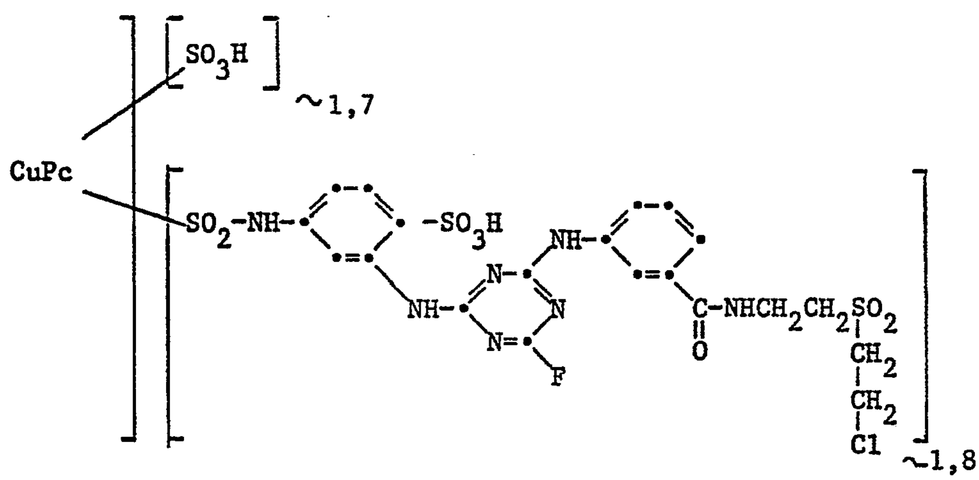

Auf analoge Weise lassen sich die in der folgenden Tabelle 8 aufgeführten Farbstoffe herstellen. Sie entsprechen der allgemeinen Formel

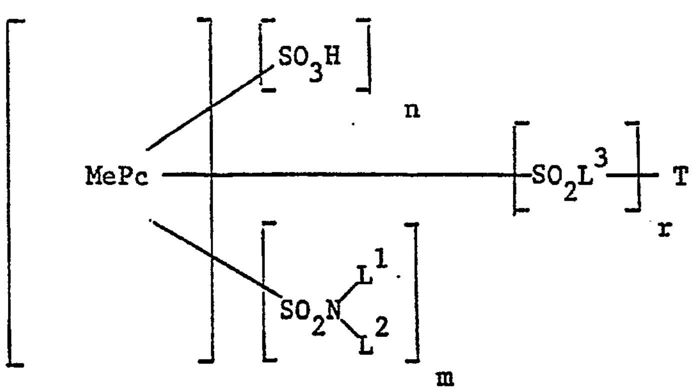

in der n und m Werte von 0-3 und r Werte von 1-4 bedeuten können.

Tabelle 8

| Bsp. | Me | $L^1$ | $L^2$ | $L^3$ | T | ungef. Werte | | | Farbton |
|---|---|---|---|---|---|---|---|---|---|
| | | | | | | n | m | r | |
| 312 | Cu | H | H | 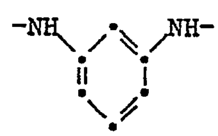 | $T_1$ | 2 | 1 | 1 | türkisblau |
| 313 | Cu | – | – | $-HNCH_2CH_2NH-$ | $T_{12}$ | 3 | 0 | 1 | dito |
| 314 | Cu | – | – | 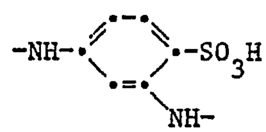 | $T_1$ | 1,7 | 0 | 1,8 | dito |
| 315 | Cu | – | – | 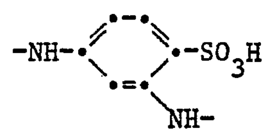 | $T_{12}$ | 3 | 0 | 1 | dito |
| 316 | Cu | H | H | 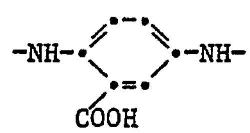 | $T_6$ | 2 | 1 | 1 | dito |
| 317 | Cu | H | H | 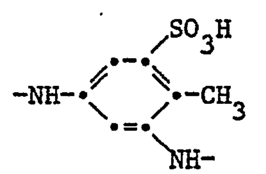 | $T_9$ | 1,6 | 1 | 1 | dito |
| 318 | Cu | H | H | 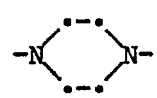 | $T_1$ | 2 | 1 | 1 | dito |

| Bsp. | Me | $L^1$ | $L^2$ | $L^3$ | T | ungef. Werte n | m | r | Farbton |
|---|---|---|---|---|---|---|---|---|---|
| 319 | Ni | - | - | 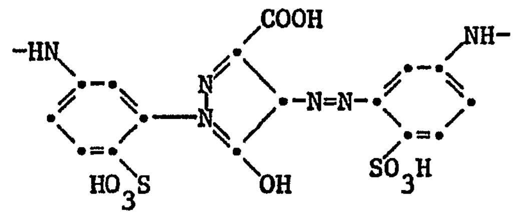 | $T_1$ | 3 | 0 | 1 | grün |
| 320 | Ni | - | - | 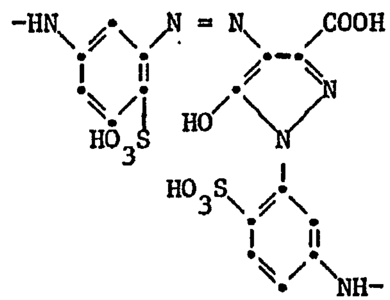 | $T_{10}$ | 2 | 0 | 1,5 | dito |
| 321 | Cu 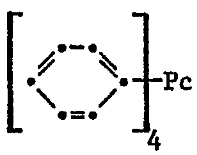 | | | $-NH-CH_2-CH_2-NH-$ | $T_{12}$ | 3-4 | 0 | 2-3 | dito |

| Bsp. | Me | $L^1$ | $L^2$ | $L^3$ | T | ungef. Werte n | m | r | Farbton |
|---|---|---|---|---|---|---|---|---|---|
| 322 | Ni | - | - | 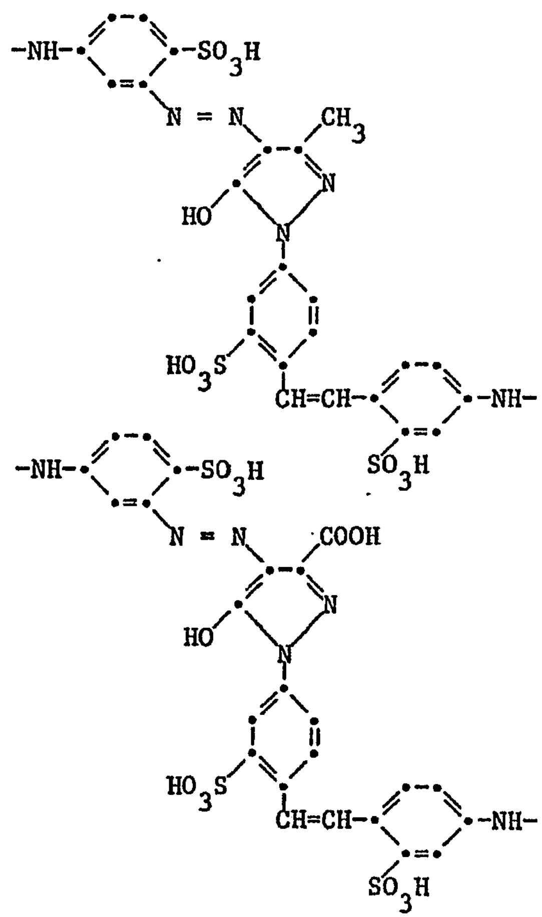 | $T_1$ | 3 | 0 | 1 | grün |
| 323 | Ni | - | - | | $T_{12}$ | 2 | 0 | 1,5 | grün |

Beispiel 324:

Eine Lösung von 37 Teilen 1-Amino-4-β-(β'-chloräthyl-sulfonyl)-äthylaminocarbonyl-benzol-2-sulfosäure in 350 Teilen Eiswasser wird bei 0–2°C und pH 6–6,5 mit 14 Teilen Cyanurfluorid umgesetzt. Sobald keine freien Aminogruppen mehr nachweisbar sind, werden 58 Teile des durch Kupplung von diazotierter 2-Aminonaphthalin-3,6,8-trisulfonsäure mit 3-Aminophenylharnstoff in essigsaurem Milien erhaltenen Aminoazofarbstoffs in 450 Teilen Wasser zugesetzt, und bei 0–25°C, pH 7,0 wird kondensiert bis chromatographisch oder durch HPLC kein Ausgangsfarbstoff mehr nachweisbar ist. Der entstandene Farbstoff der Formel

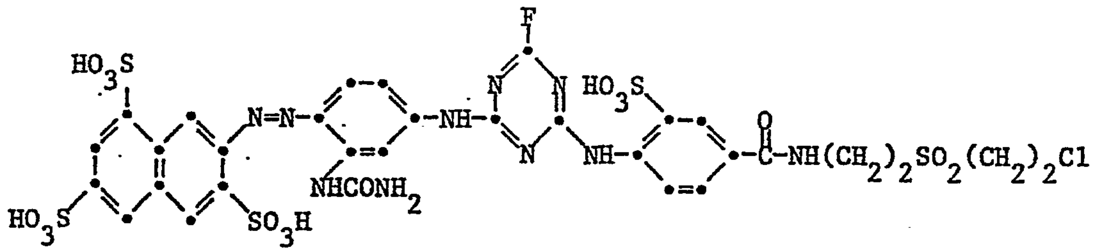

wird mit Kaliumchlorid ausgesalzen, abgesaugt, gewaschen und im Vakuum getrocknet. Er färbt Cellulosematerialien in sehr echten rotstichigen Gelbtönen.

Beispiel 325:

Eine Lösung von 37 Teilen 1-Amino-4-β-(β'-chloräthyl-sulfonyl)-äthylaminocarbonyl-benzol-2-sulfosäure in 400 Teilen Eiswasser wird bei 0–7°C und pH 6,5–7,0 mit 19 Teilen Cyanurchlorid umgesetzt. Sobald keine freien Aminogruppen mehr nachweisbar sind, werden 48 Teile des Farbstoffs der Formel

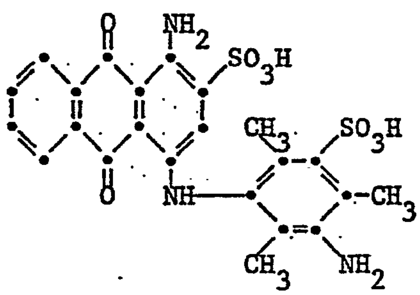

in 280 Teilen Wasser neutral gelöst, zugegeben, und bei 20–45°C, pH 7–7,5 wird kondensiert bis chromatographisch oder durch HPLC kein Ausgangsfarbstoff mehr nachweisbar ist.

Der entstandene Farbstoff der Formel

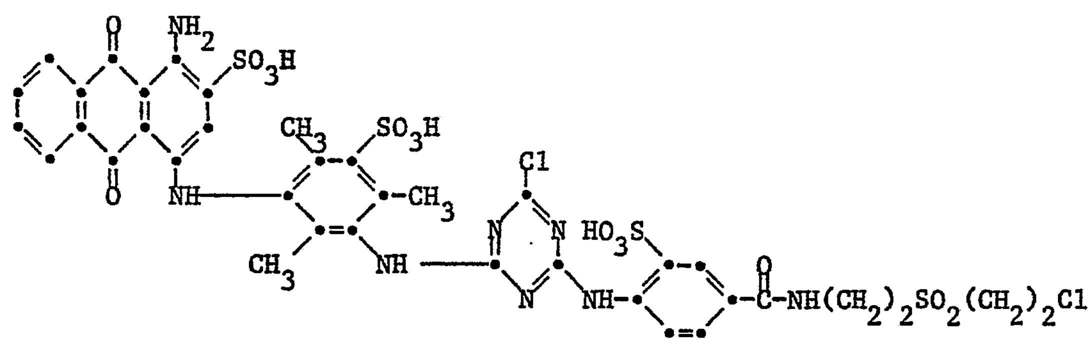

wird mit Natriumchlorid ausgesalzen, gewaschen und im Vakuum getrocknet. Er färbt Cellulosematerialien in sehr echten blauen Tönen.

Beispiel 326: 48 Teile des sekundären Kondensationsproduktes aus 1,3-Phenylendiamin-4-sulfonsäure, Cyanurchlorid und 4-Aminobenzoesäure-N-β(β'-chloräthylsulfonyl)äthylamid-hydrochlorid werden salzsauer diazotiert in essigsaurer Lösung auf eine Suspension von 30,8 Teilen 1-Amino-8-hydroxynaphthalin-3,6-disulfonsäure in 300 Teilen Wasser gekuppelt. Zu dem roten Monoazofarbstoff werden

anschliessend nochmals 48 Teiles des erwähnten sekundären Kondensationsproduktes gegeben und neutral zum Disazofarbstoff gekuppelt. Der Farbstoff wird durch Zugabe von Natriumchlorid abgeschieden und im Vakuum getrocknet. Er entspricht der Formel

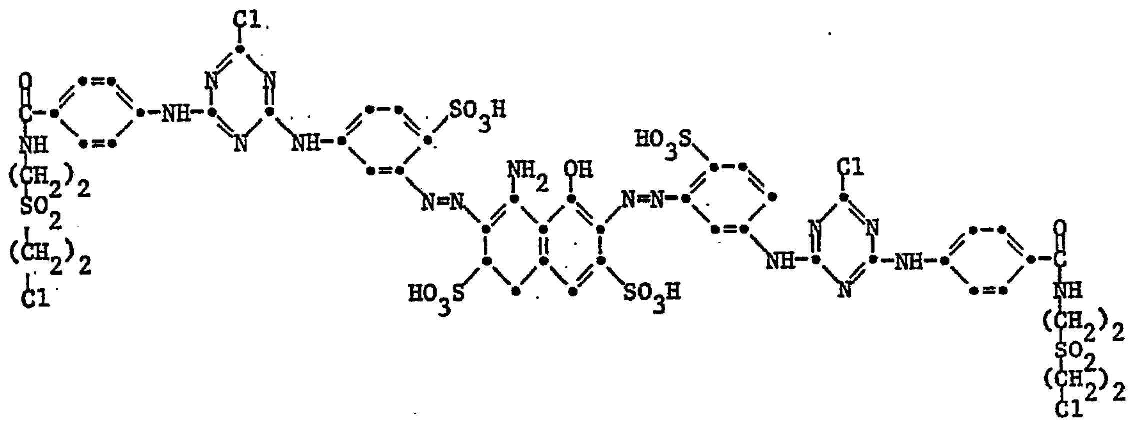

und färbt Cellulosematerialien in marineblauen Tönen mit sehr guten Echtheiten.

Weitere Farbstoffe, die nach den in den bisherigen Beispielen gegebenen Vorschriften hergestellt werden können, sind die Reaktivfarbstoffe der folgenden Formeln.

327 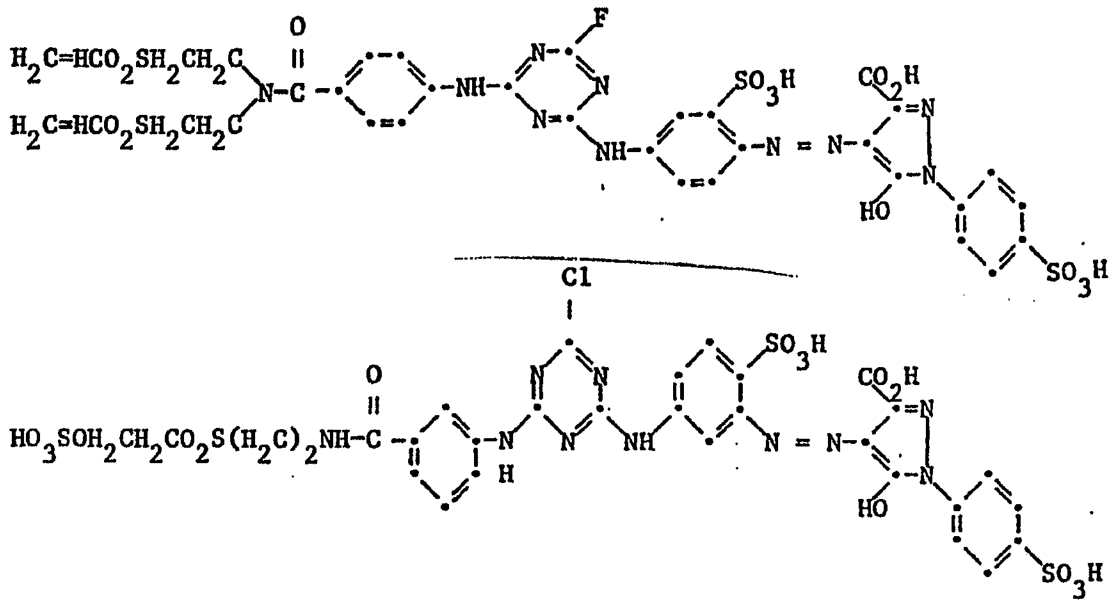 Gelb

328 grünstichig Gelb

329 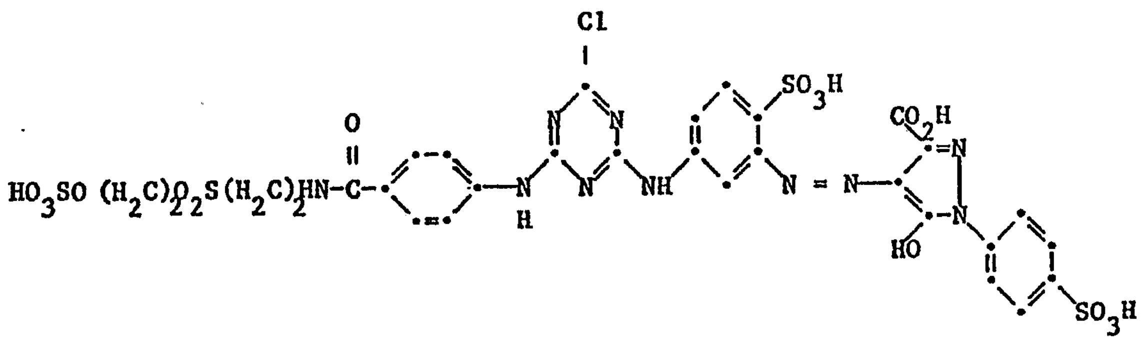 grünstichig Gelb

| | | |
|---|---|---|
| 330 | 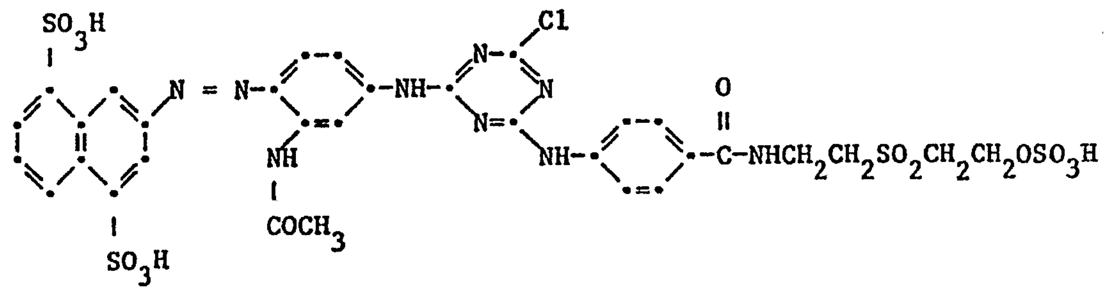 | Gelb |
| 331 | 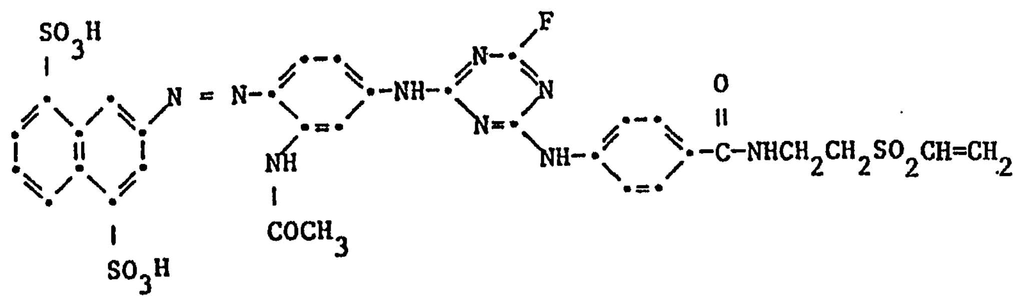 | Gelb |
| 332 | 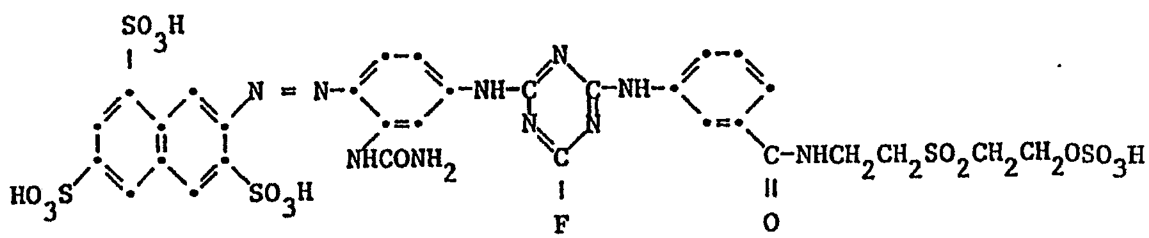 | Gelb |

| | | |
|---|---|---|
| 333 | 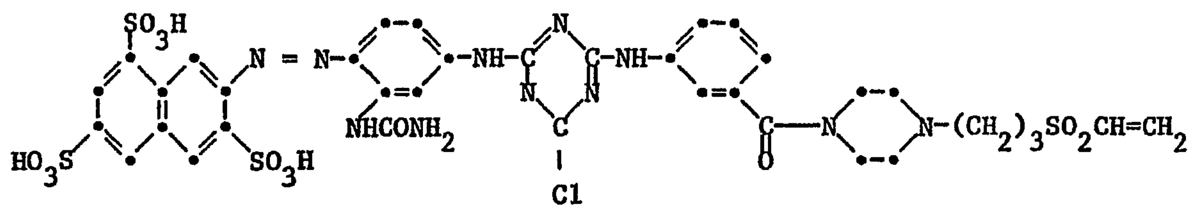 | Gelb |
| 334 | 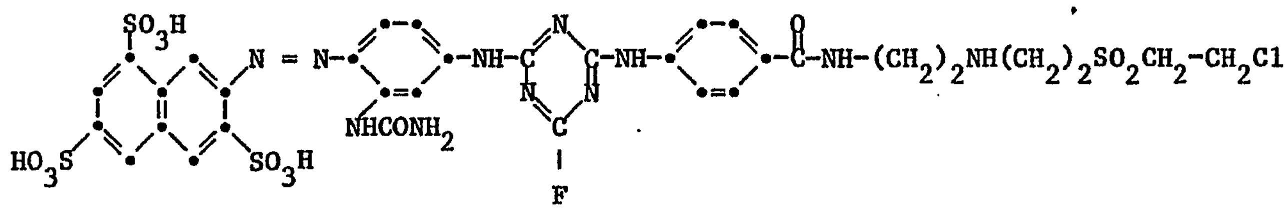 | Gelb |
| 335 | 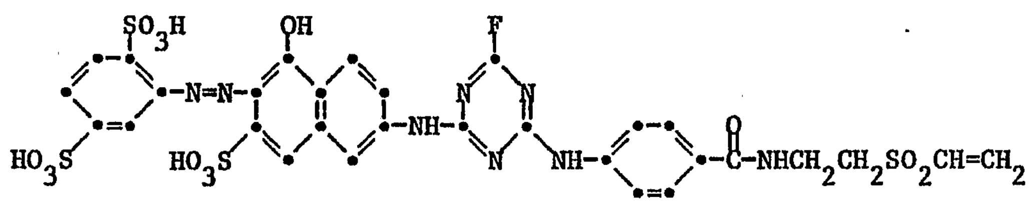 | Orange |

| | | |
|---|---|---|
| 336 | 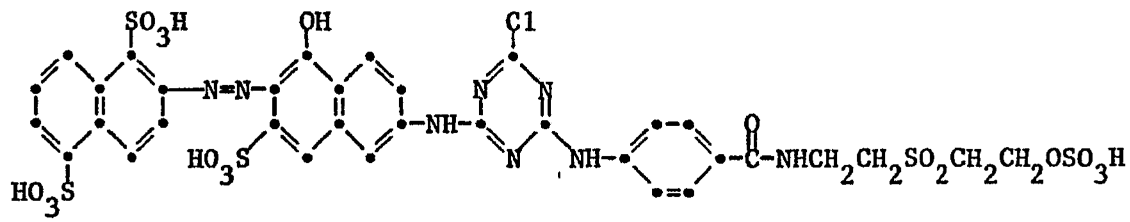 | Orange |
| 337 | 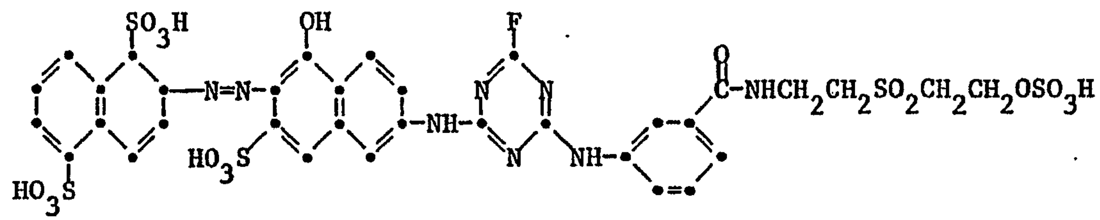 | Orange |
| 338 | 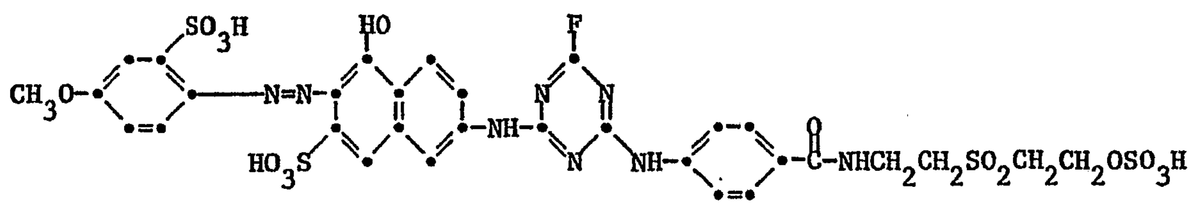 | Scharlach |

| | | |
|---|---|---|
| 339 | 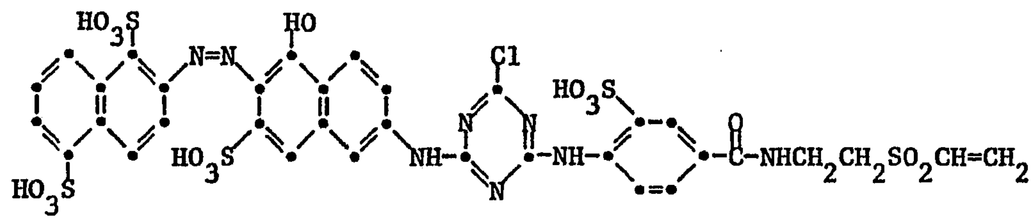 | Orange |
| 340 | 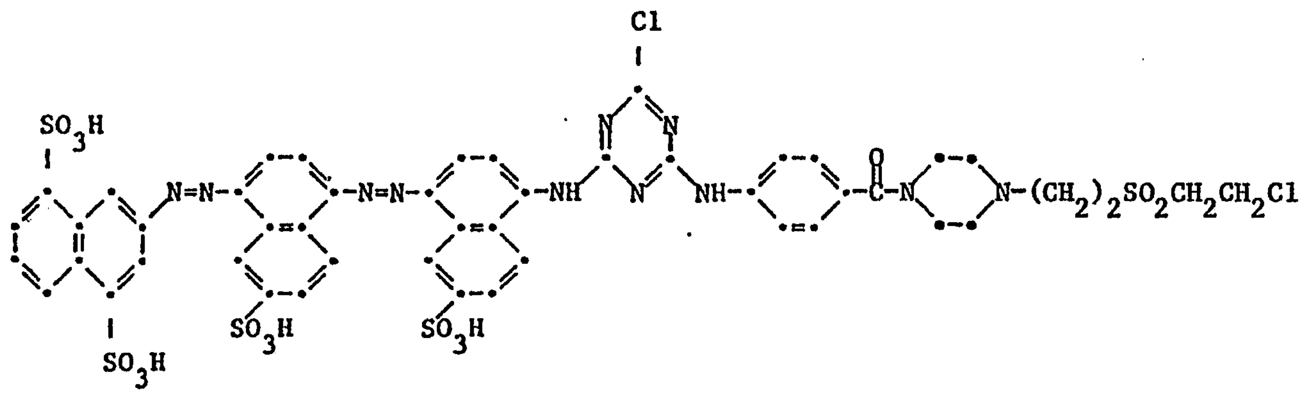 | Braun |
| 341 | 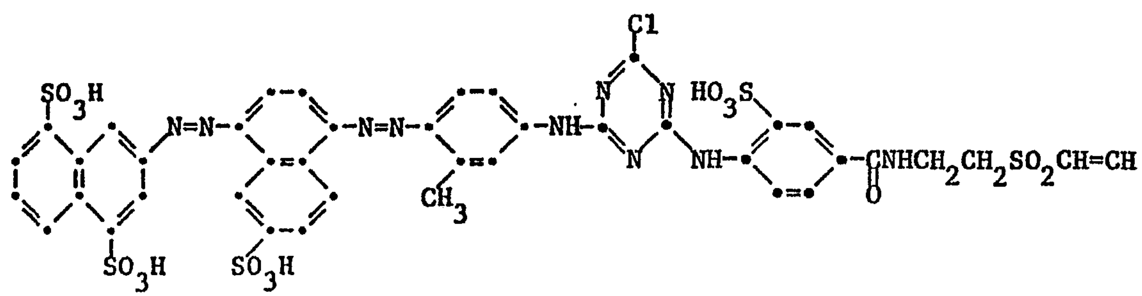 | Braun |

| | | |
|---|---|---|
| 342 | 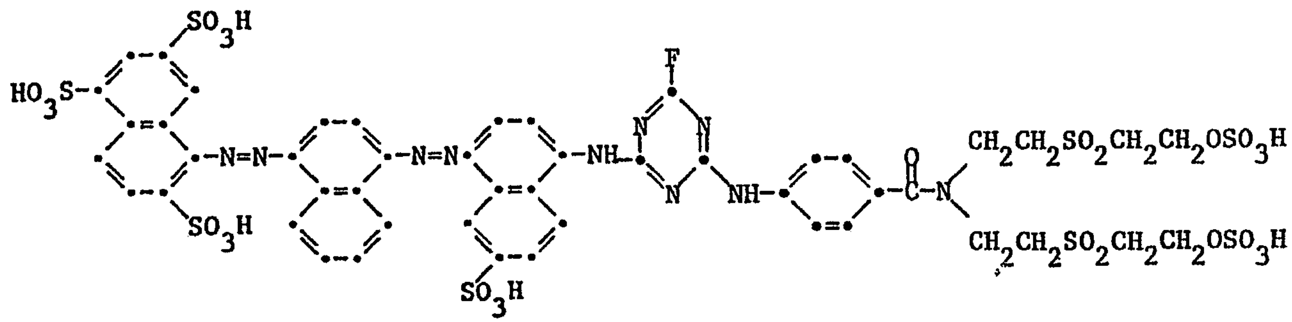 | Braun |
| 343 | 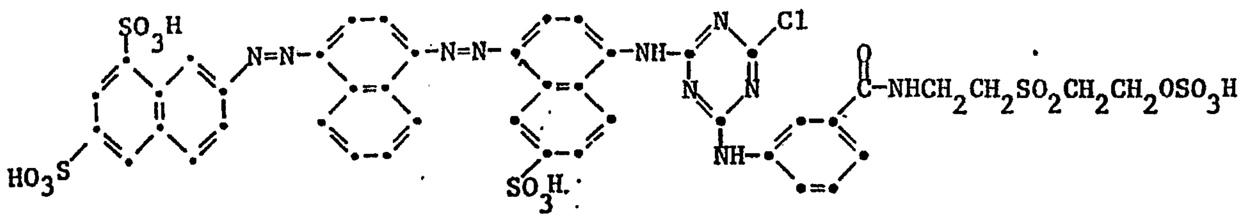 | Braun |
| 344 | 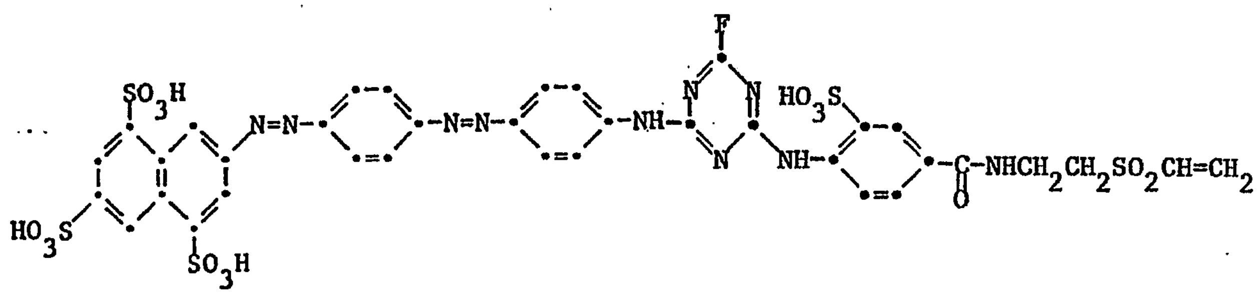 | Braun |

| | | |
|---|---|---|
| 345 | 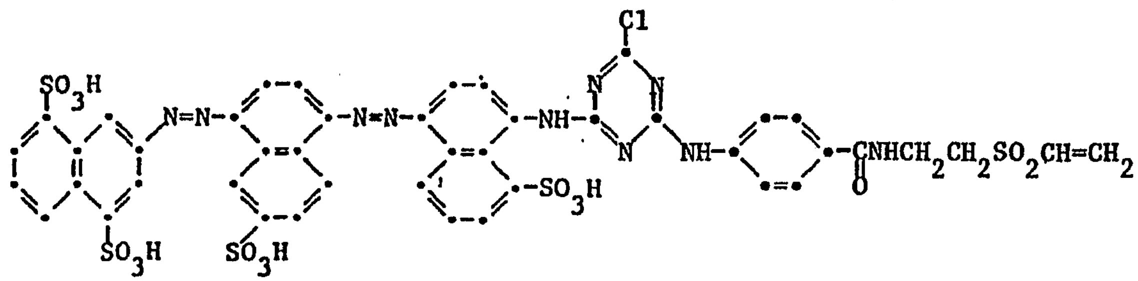 | Braun |
| 346 | 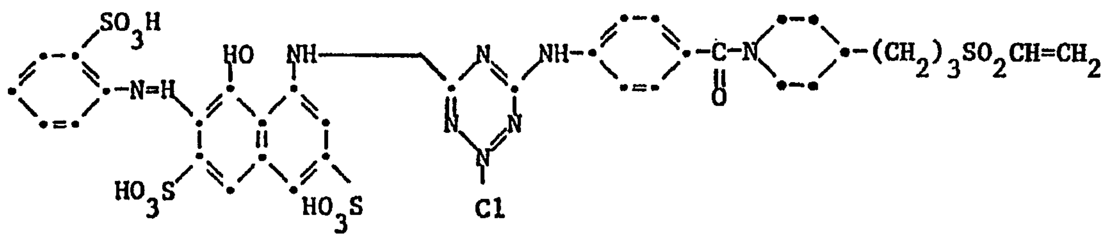 | gelbstichig Rot |
| 347 | 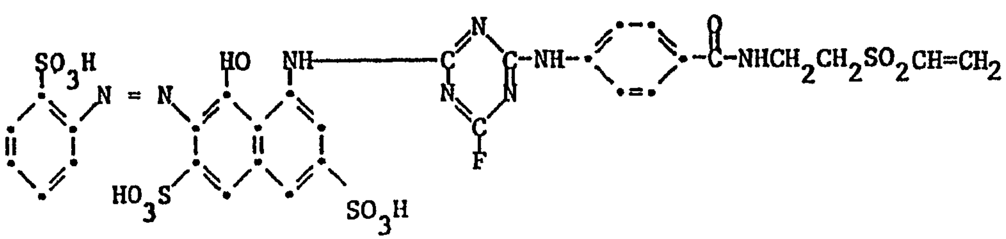 | gelbstichig Rot |

| | | |
|---|---|---|
| 348 | 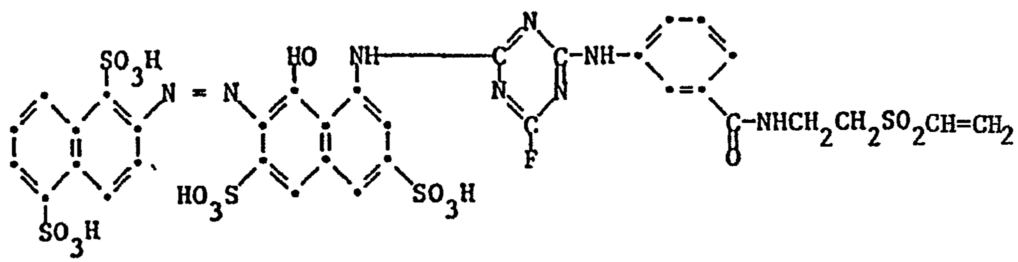 | Rot |
| 349 | 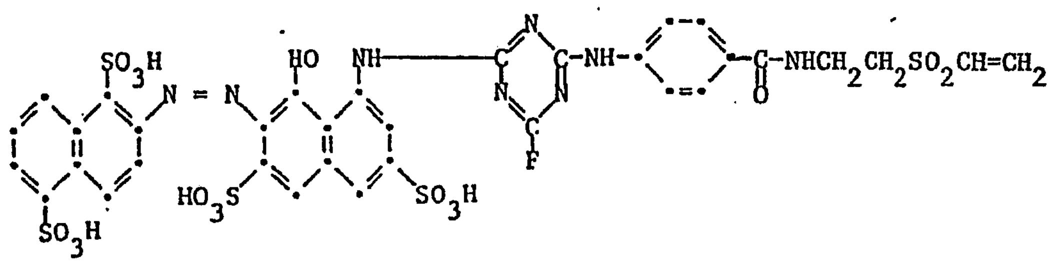 | Rot |
| 350 | 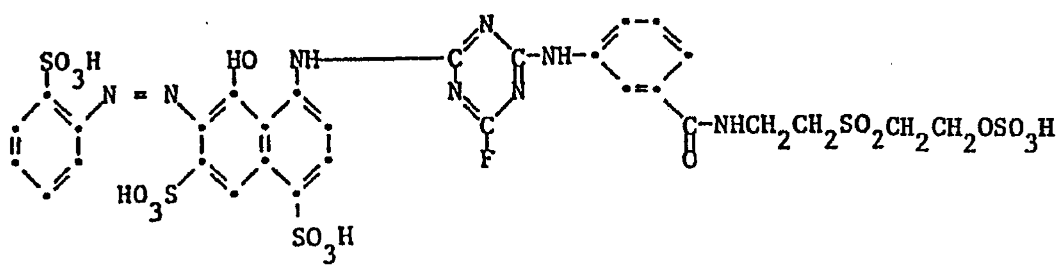 | Scharlach |

351 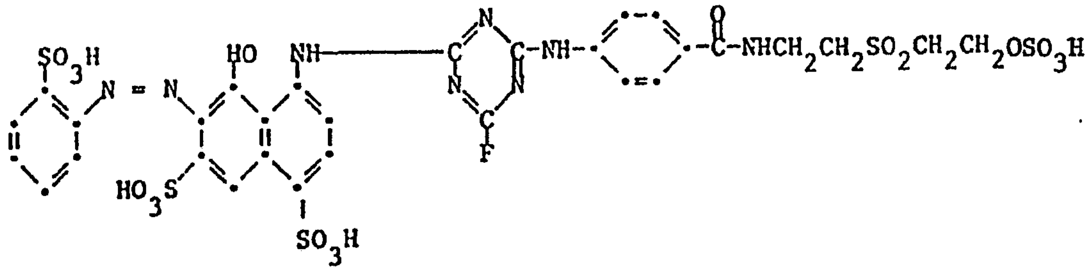 Scharlach

352 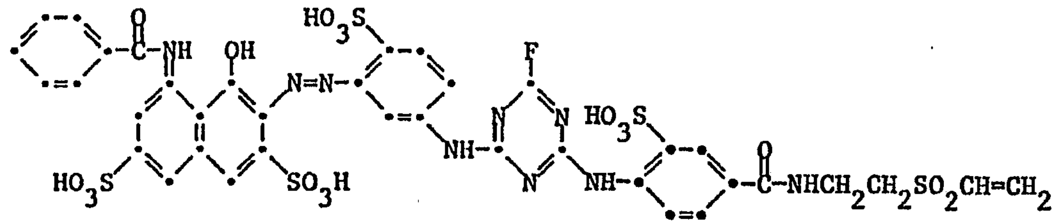 Rot

353 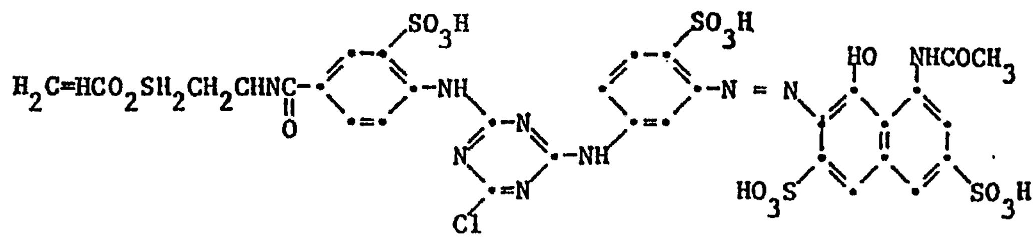 Rot

| | | |
|---|---|---|
| 354 | 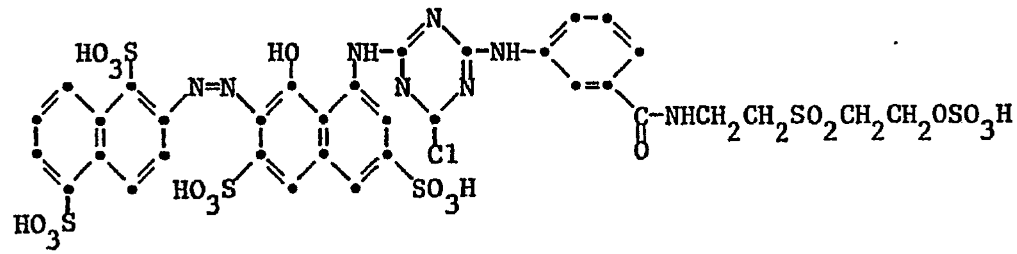 | Rot |
| 355 | 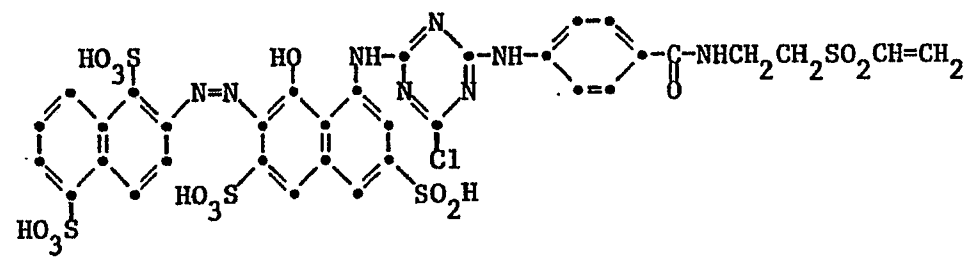 | Rot |
| 356 | 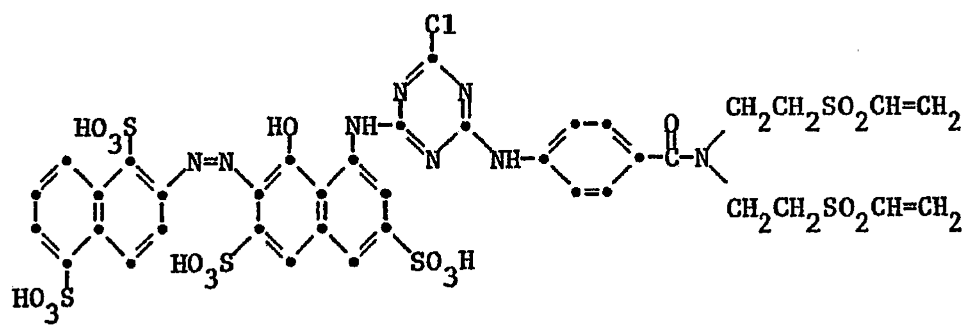 | Rot |

357

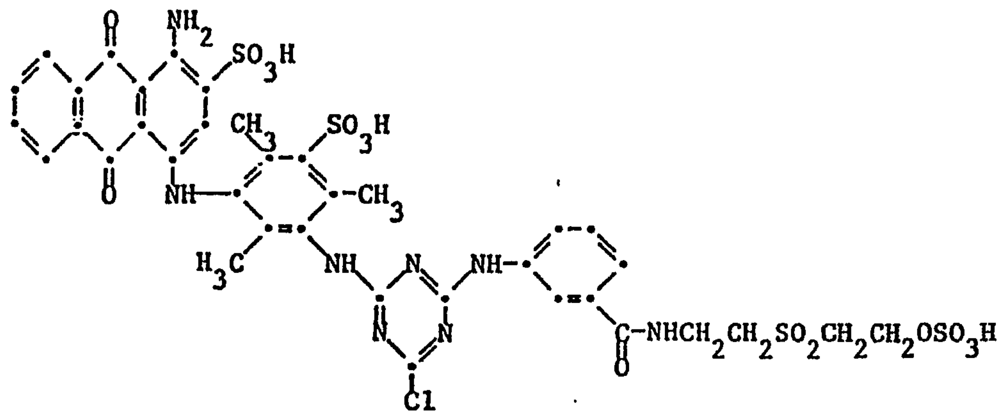

Blau

358

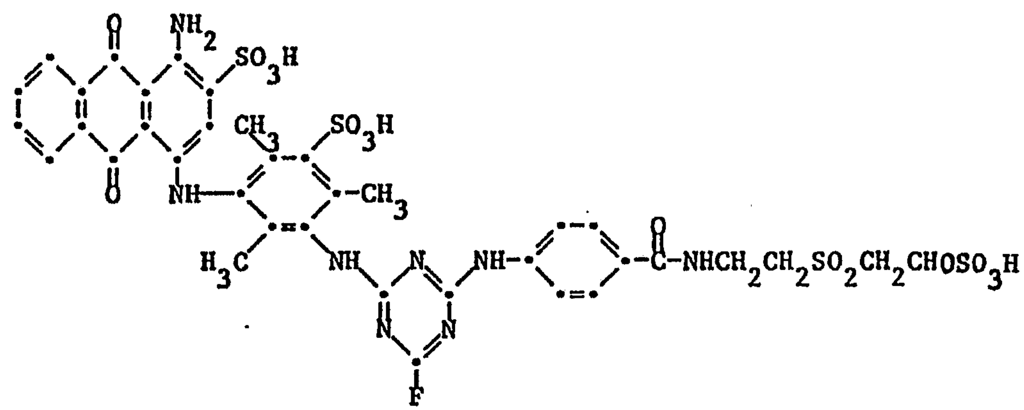

Blau

| | | |
|---|---|---|
| 359 | 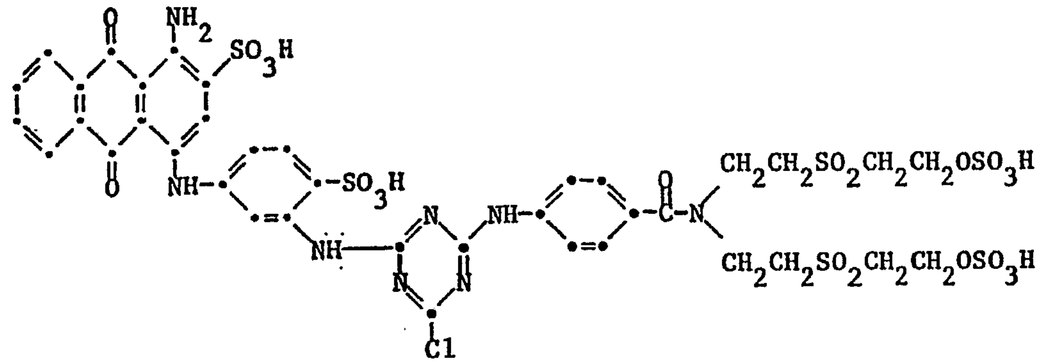 | Blau |
| 360 | 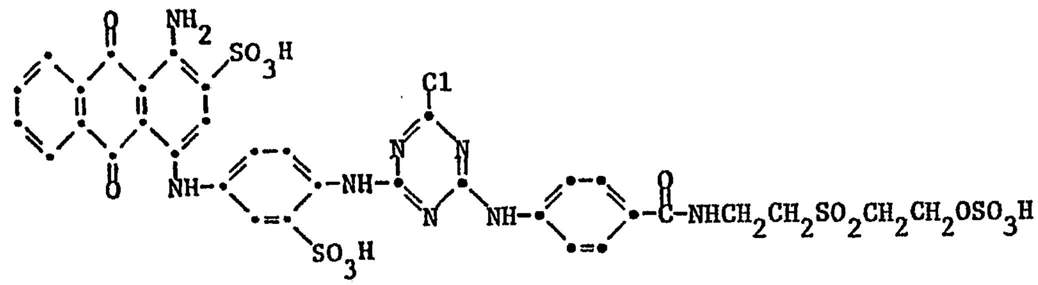 | Blau |
| 361 | 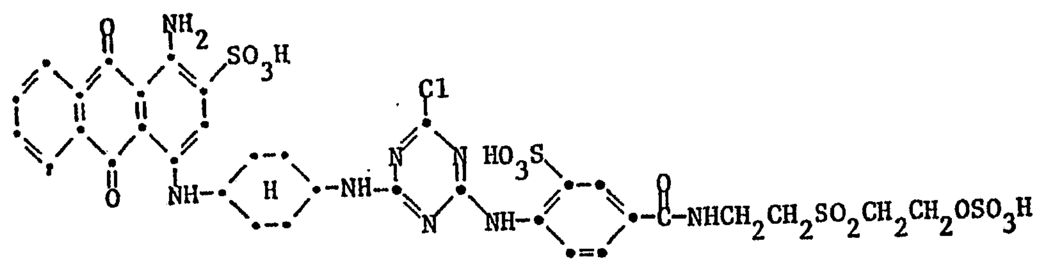 | Blau |

| | | |
|---|---|---|
| 362 | 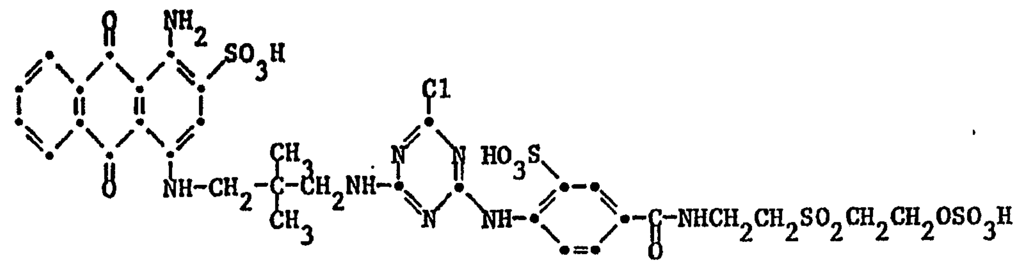 | Blau |
| 363 | 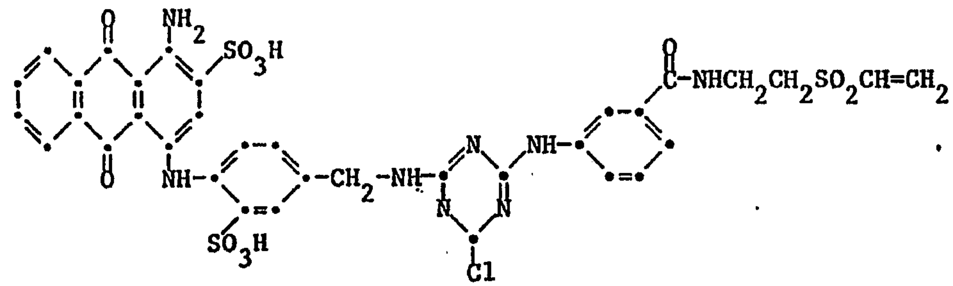 | Blau |
| 364 | 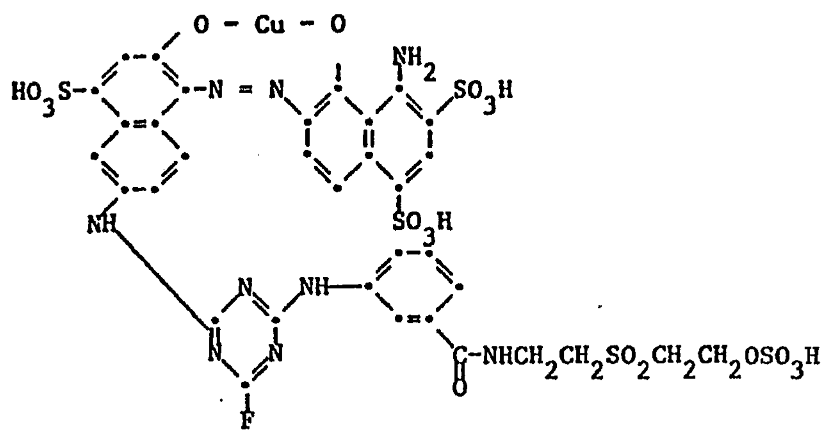 | Blau |

365 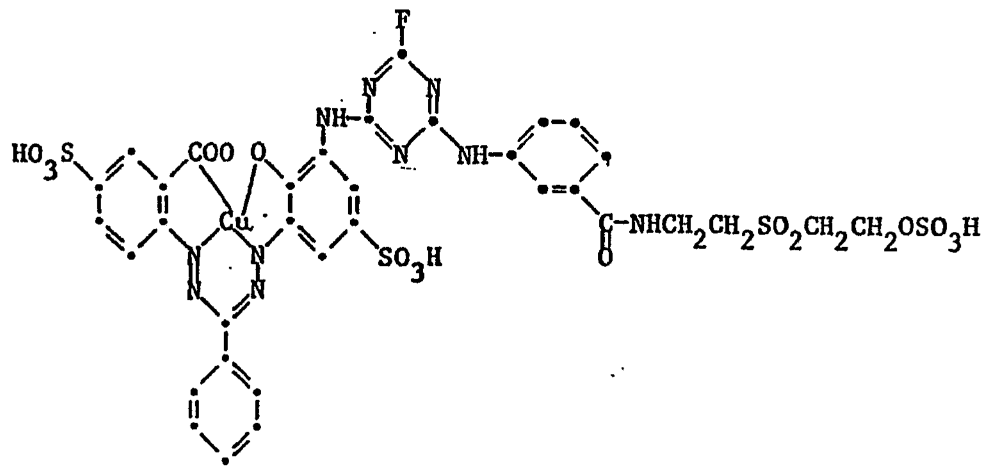 Blau

366 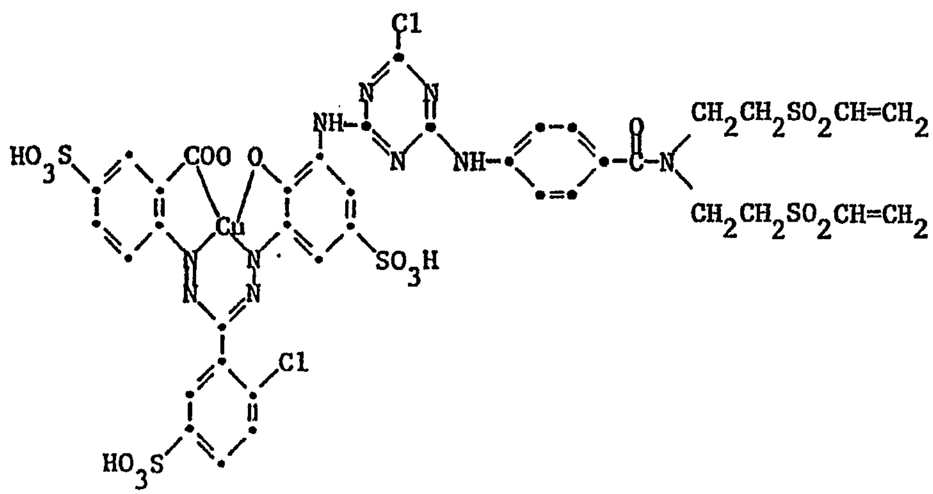 Blau

| | | |
|---|---|---|
| 367 | 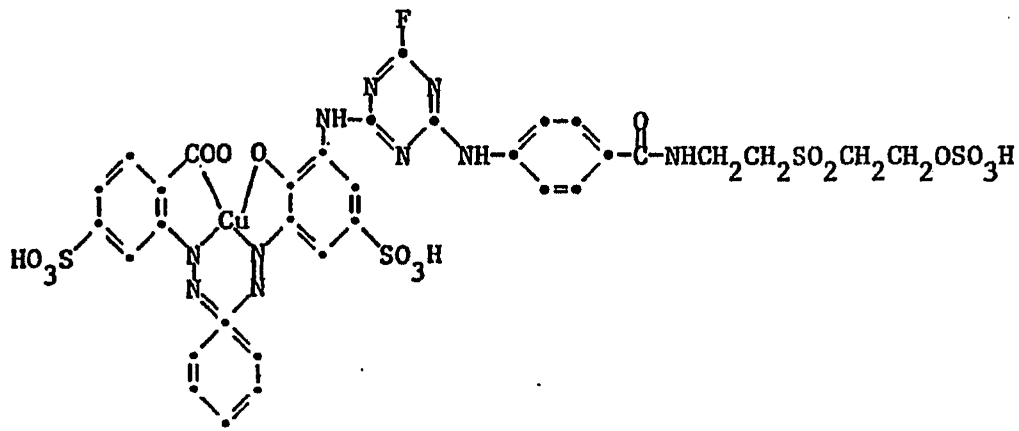 | Blau |
| 368 | 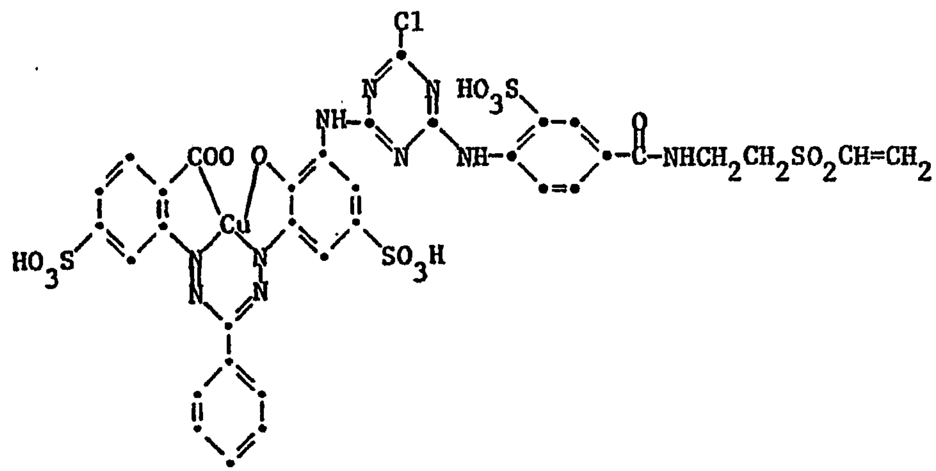 | Blau |

| | | |
|---|---|---|
| 369 | 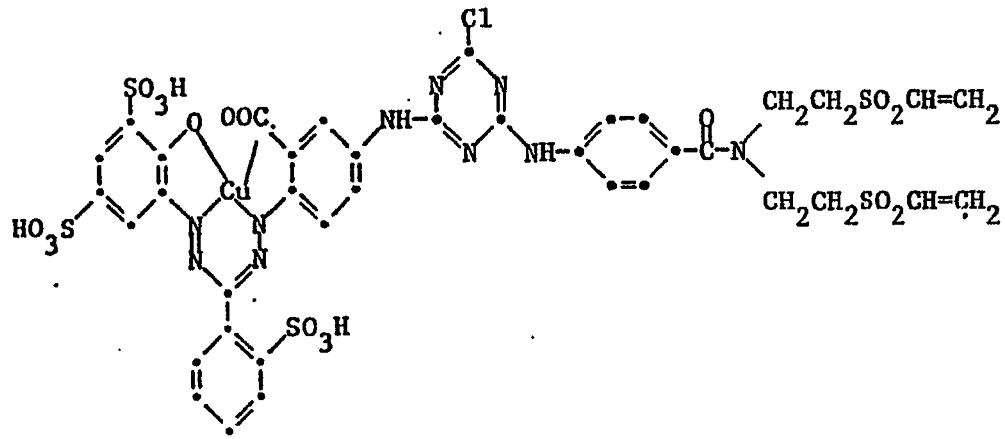 | Blau |
| 370 | 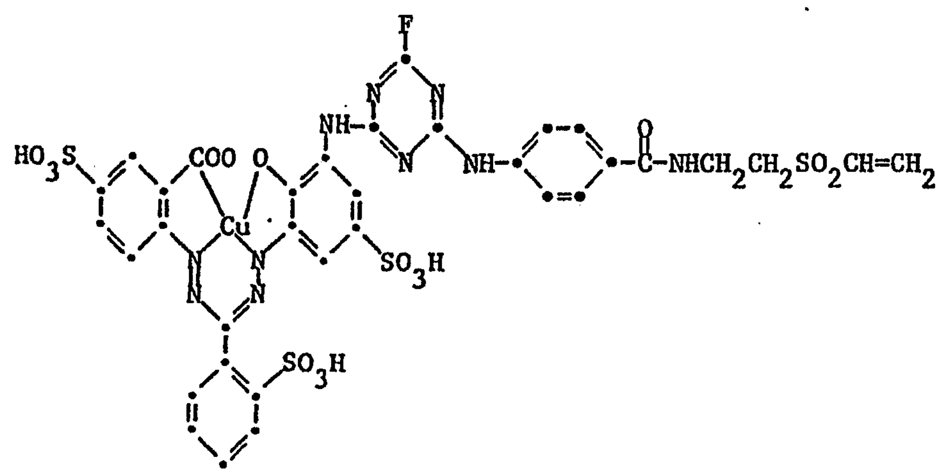 | Blau |

371 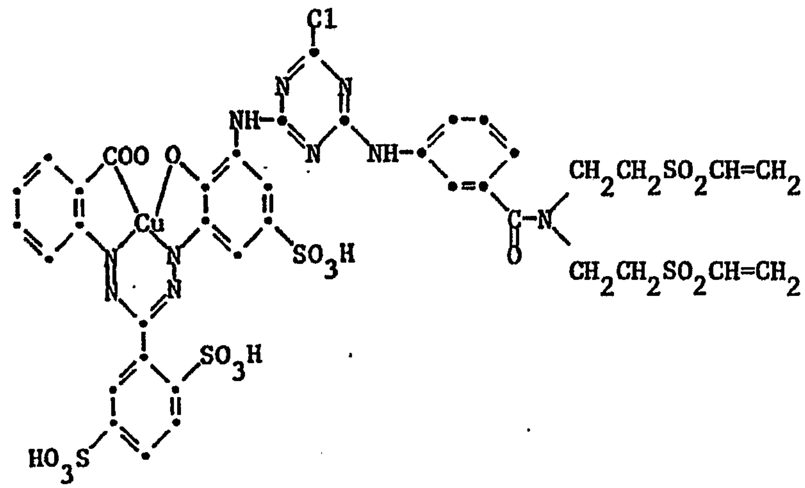 Blau

372 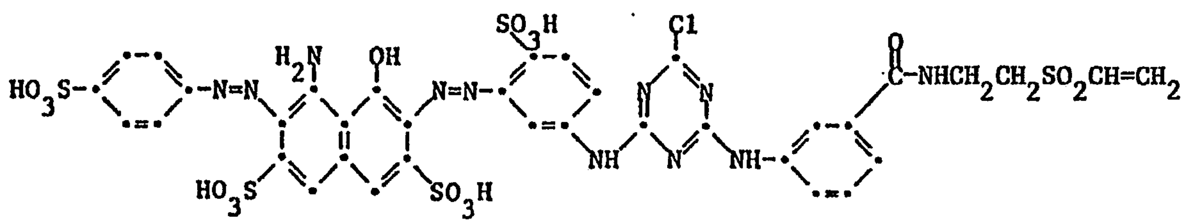 Marine Blau

| | | |
|---|---|---|
| 373 | 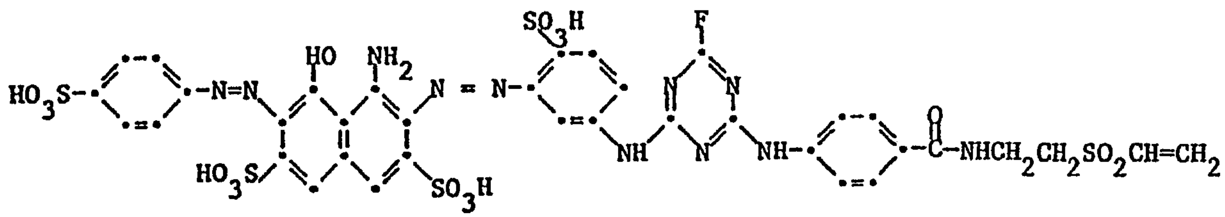 | Marine Blau |
| 374 | 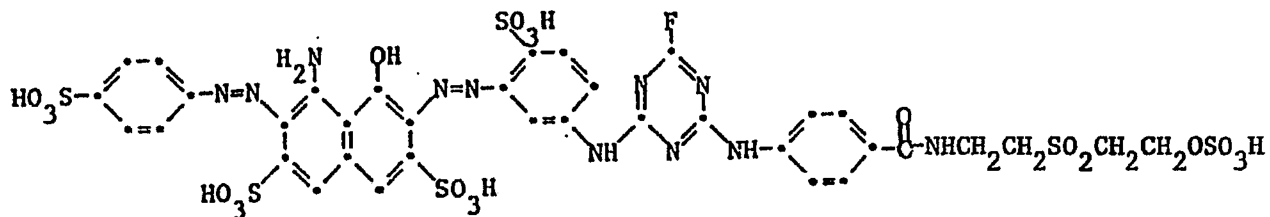 | Marine Blau |
| 375 | 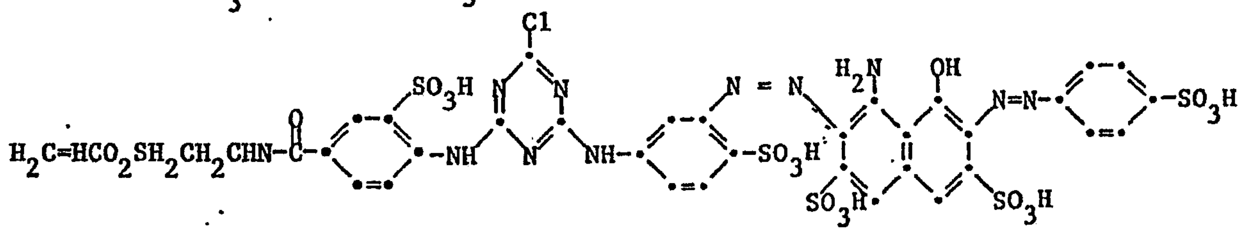 | Marine Blau |

376

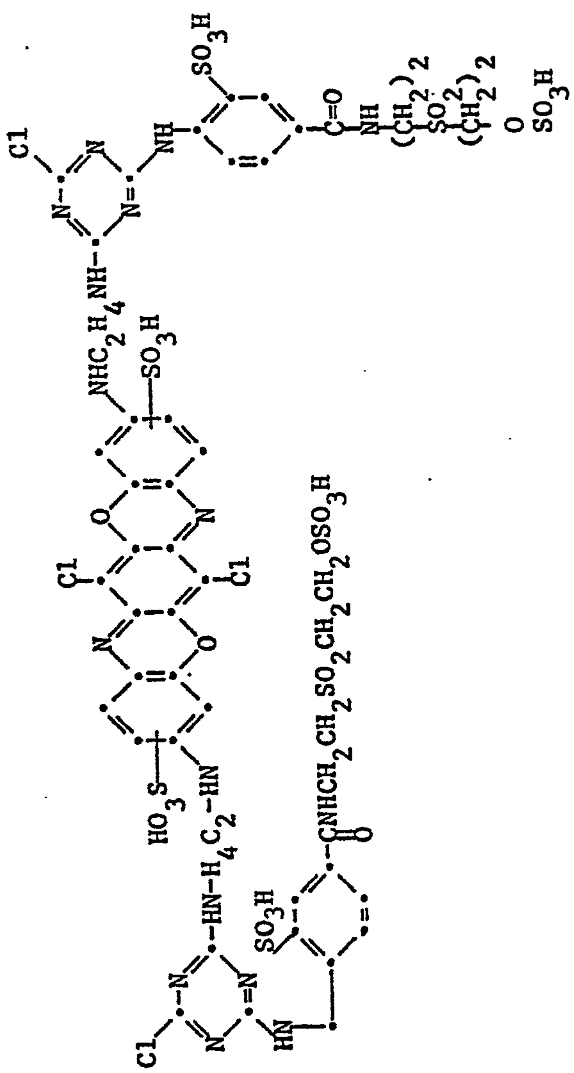

Blau

377

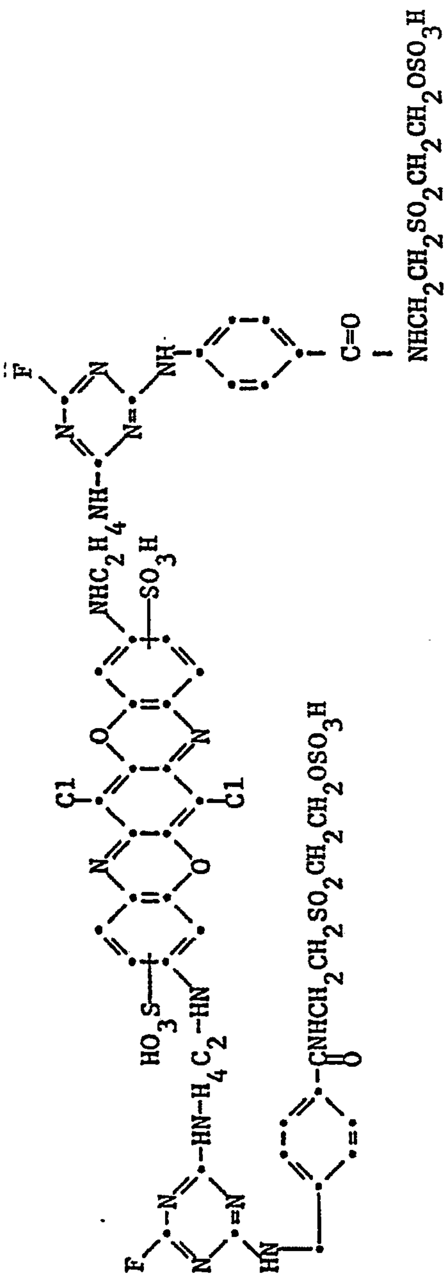

Blau

378

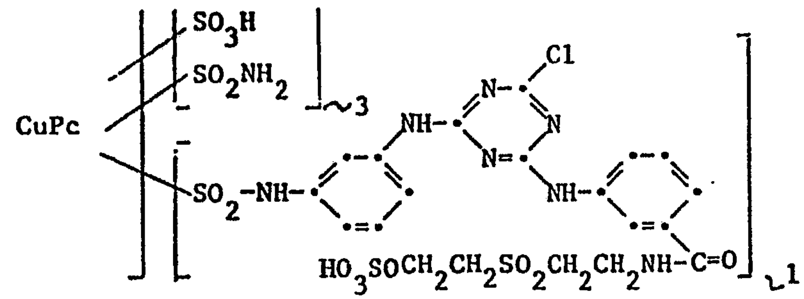

Türkis

379

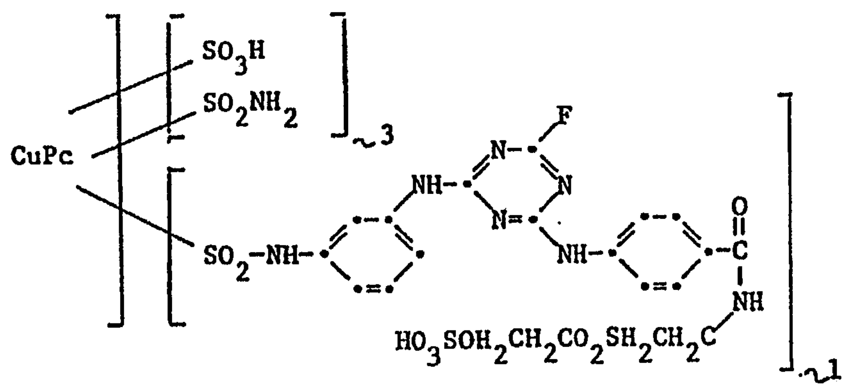

Türkis

380

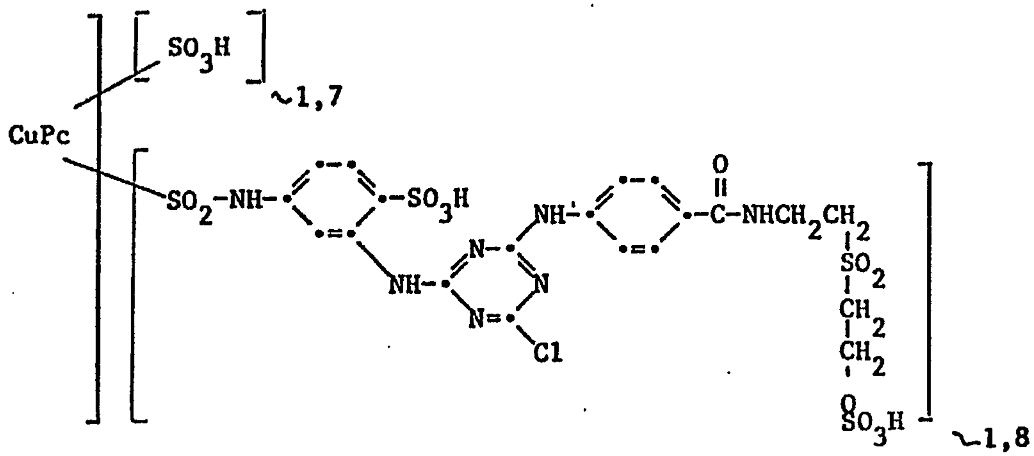

Türkis

381

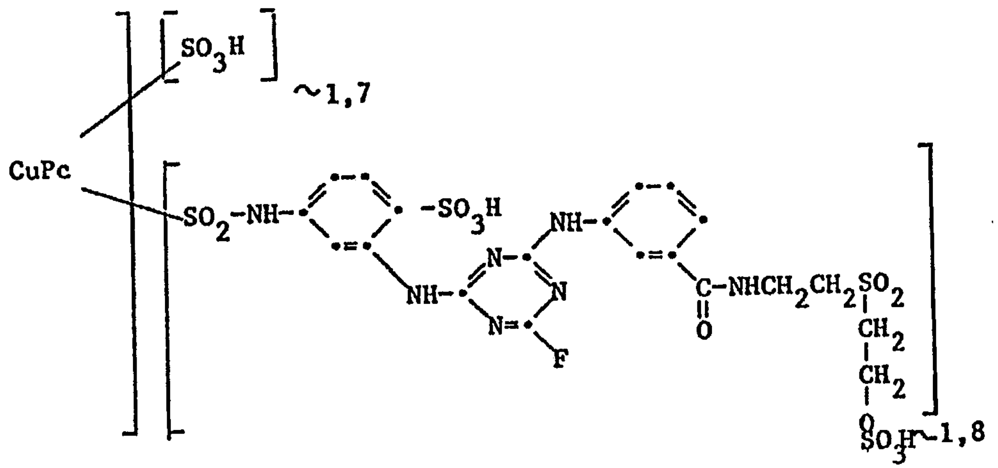

Türkis

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaulge aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung , enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel

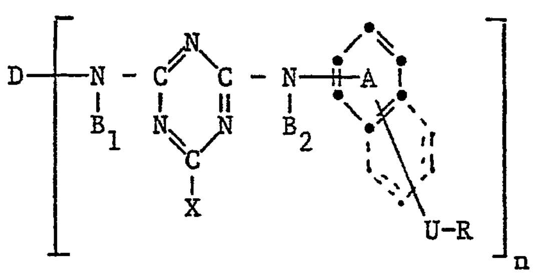

(1) ,

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $B_1$ und $B_2$ unabhängig voneinander Wasserstoff oder Alkyl mit 1 bis 4 Kohlenstoffatomen, das durch Carboxy, Sulfo, Cyan oder Hydroxy substituiert sein kann; X Fluor, Chlor, Brom, Sulfo, Alkylsulfonyl mit 1 bis 4 C-Atomen oder Phenylsulfonyl; U –CO– oder $-SO_2-$; R ein Rest der Formel

$$Z-SO_2-CH_2-\overset{\displaystyle Y}{\overset{|}{(alk)}}-\underset{\underset{\displaystyle V}{|}}{N}- \qquad (1a)$$

$$Z-SO_2-(CH_2)_m-O-(CH_2)_p-\underset{\underset{\displaystyle R_1}{|}}{N}- \qquad (1b)$$

$$Z-SO_2-(alk')-NH-(alk')-\underset{\underset{\displaystyle H}{|}}{N}- \qquad (1c)$$

oder 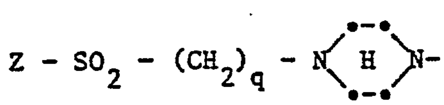 (1d) ;

Z Sulfatoäthyl, β-Thiosulfatoäthyl, β-Phosphatoäthyl, β-Acetoxyäthyl, β-Halogenäthyl oder Vinyl; alk ein Polymethylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy, Sulfo, Carbamoyl, N-Methyl-, N-Aethyl-, N,N-Dimethyl- oder N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- oder N,N-Diäthylsulfamoyl, Methylsulfonyl, Aethylsulfonyl, Propylsulfonyl, Alkoxygruppen mit 1 oder 2 C-Atomen, Halogen oder Hydroxy substituiert sein kann; oder ein Rest

$$Z-SO_2-CH_2-\overset{\displaystyle Y}{\overset{|}{(alk)}}-$$

worin Z, alk und Y die angegebenen Bedeutungen haben; $R_1$ Wasserstoff oder $C_{1-6}$-Alkyl; alk' unabhängig voneinander Polymethylenreste mit 2 bis 6 C-Atomen oder deren verzweigte Isomere; n = 1 oder 2, m = 1 bis 6, p = 1 bis 6 und q = 1 bis 6 ist; wobei falls U $-SO_2-$ ist, V nicht Wasserstoff sein darf; und der Benzol- bzw. Naphthalinrest A weitere Substituenten enthalten kann.

2. Reaktivfarbstoffe gemäss Anspruch 1, der Formel

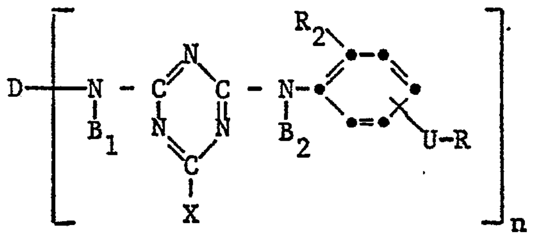

(2) ,

worin $R_2$ Wasserstoff, $C_{1-4}$-Alkyl, $C_{1-4}$-Alkoxy, Halogen, Hydroxy, Carboxy oder Sulfo ist; und D, $B_1$, $B_2$, X, U, R und n die in Anspruch 1 angegebenen Bedeutungen haben.

3. Reaktivfarbstoffe gemäss Anspruch 1, worin D der Rest eines Mono- oder Disazofarbstoffes ist.

4. Reaktivfarbstoffe gemäss Anspruch 1, worin D der Rest eines Metallkomplexazo- oder Formazanfarbstoffes ist.

5. Reaktivfarbstoffe gemäss Anspruch 1, worin D der Rest eines Anthrachinonfarbstoffes ist.

6. Reaktivfarbstoffe gemäss Anspruch 1, worin D der Rest eines Phthalocyaninfarbstoffes ist.

7. Reaktivfarbstoffe gemäss Anspruch 4, worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

8. Reaktivfarbstoffe gemäss Anspruch 3, worin D ein Mono- oder Disazofarbstoffrest der Formel

$D_1 - N = N - (M - N = N)_q - K -$ (3a),

$- D_1 - N = N - (M - N = N)_q - K$ (3b),

oder $- D_1 - N = N - (M - N = N)_q - K -$ (3c),

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; q = 0 oder 1 ist; und $D_1$, M und K zusammen mindestens zwei Sulfogruppen, vorzugsweise drei oder vier Sulfogruppen, enthalten.

9. Reaktivfarbstoffe gemäss Anspruch 3, worin D ein Disazofarbstoffrest der Formel

$D_1 - N = N - K - N = N - D_2 -$ (4a),

oder $- D_1 - N = N - K - N = N - D_2 -$ (4b),

$D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und $D_1$, $D_2$ und K zusammen mindestens zwei Sulfogruppen, vorzugsweise drei oder vier Sulfogruppen enthalten.

10. Reaktivfarbstoffe gemäß Anspruch 5, worin D der Rest eines Anthrachinonfarbstoffes der Formel

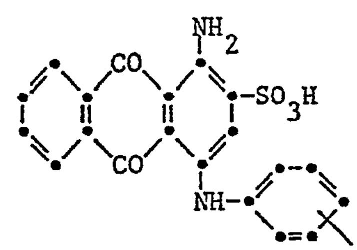

(5)

ist; wobei der Anthrachinonkern durch eine weitere Sulfogruppe, und der Phenylenrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

11. Reaktivfarbstoffe gemäß Anspruch 6, worin D der Rest eines Phthalocyaninfarbstoffes der Formel

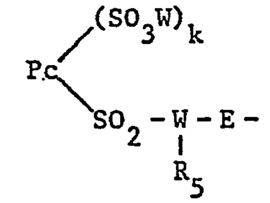

(6) ,

Pc der Rest eines Kupfer- oder Nickelphthalocyanins; W –OH und/oder $-NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

12. Reaktivfarbstoffe gemäss Anspruch 8, der Formel

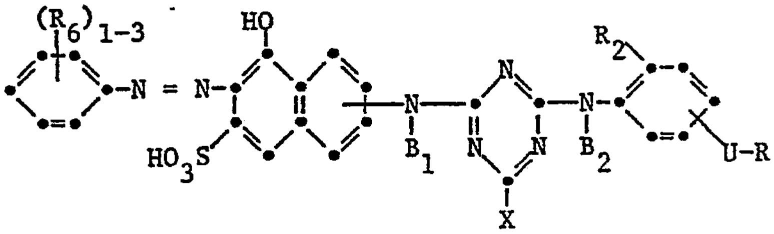

(7) ,

worin $R_6$ für 1 bis 3 Substituenten aus der Gruppe $C_{1-4}$-Alkyl, $C_{1-4}$-Alkoxy, Halogen, Carboxy und Sulfo steht; und $B_1$, $B_2$, X, U, R und $R_2$ die für Anspruch 8 geltenden Bedeutungen haben.

13. Reaktivfarbstoffe gemäss Anspruch 8, der Formel

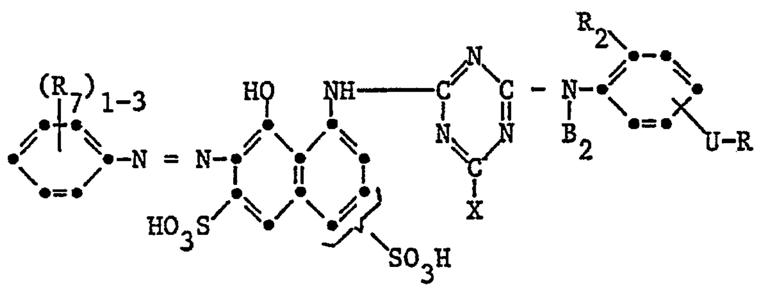

(8) ,

worin $R_7$ für 1 bis 3 Substituenten aus der Gruppe $C_{1-4}$-Alkyl, $C_{1-4}$-Alkoxy, Halogen, Carboxy und Sulfo steht; und $B_2$, X, U, R und $R_2$ die für Anspruch 8 geltenden Bedeutungen haben.

14. Reaktivfarbstoffe gemäss Anspruch 8, der Formel

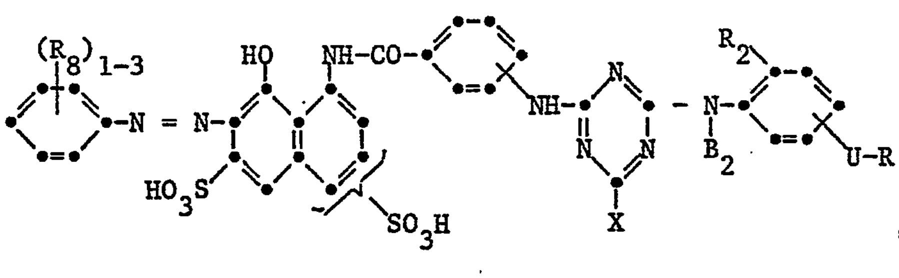

(9) ,

worin $R_8$ für 1 bis 3 Substituenten aus der Gruppe $C_{1-4}$-Alkyl, $C_{1-4}$-Alkoxy, Halogen, Carboxy und Sulfo steht; und $B_2$, X, U, R und $R_2$ die für Anspruch 8 geltenden Bedeutungen haben.

15. Reaktivfarbstoffe gemäss Anspruch 8, der Formel

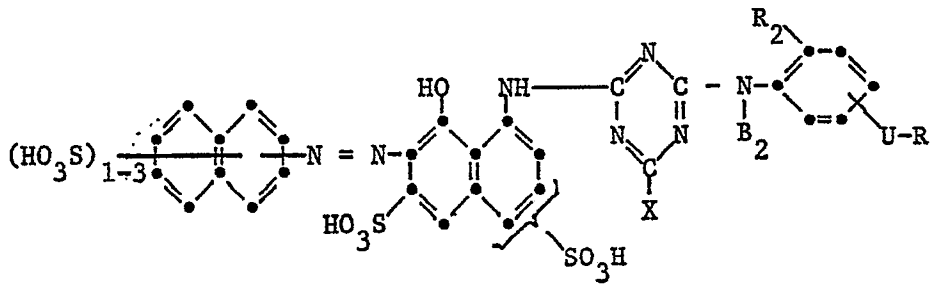

(10) ,

worin $B_2$, X, U, R und $R_2$ die für Anspruch 8 geltenden Bedeutungen haben.

16. Reaktivfarbstoffe gemäss Anspruch 8, der Formel

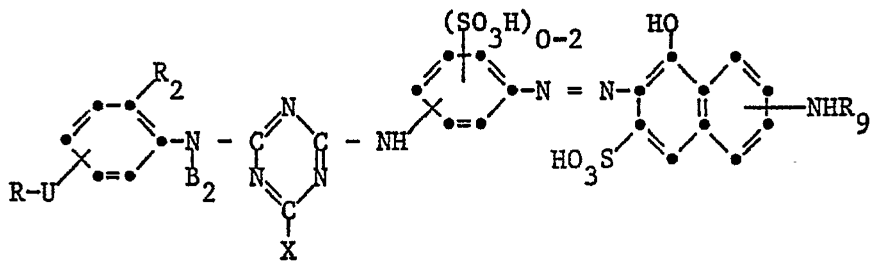

(11) ,

worin $R_9$ Wasserstoff oder $C_{1-4}$-Alkanoyl ist; und $B_2$, X, U, R und $R_2$ die für Anspruch 9 geltenden Bedeutungen haben.

17. Reaktivfarbstoffe gemäss Anspruch 8, der Formel

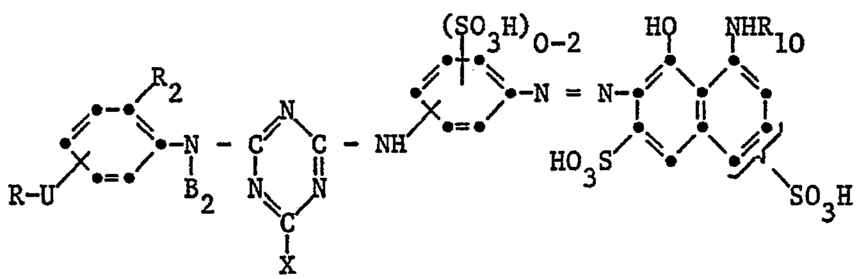

(12) ,

worin $R_{10}$ Wasserstoff, $C_{1-4}$-Alkanoyl oder Benzoyl ist; und $B_2$; X, U, R und $R_2$ die für Anspruch 8 geltenden Bedeutungen haben.

18. Reaktivfarbstoffe gemäss Anspruch 8, der Formel

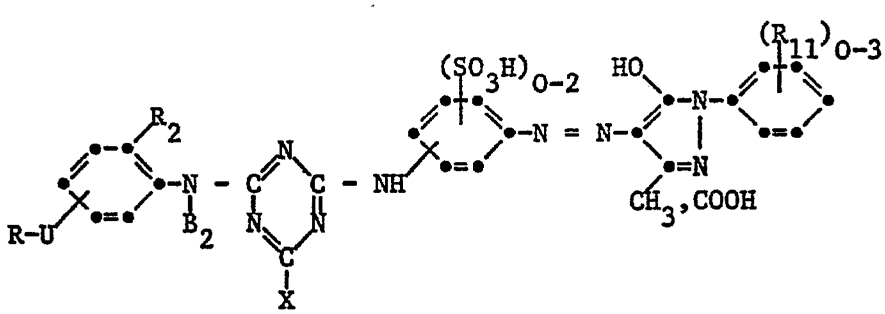

(13) ,

worin $R_{11}$ für 0 bis 3 Substituenten aus der Gruppe $C_{1-4}$-Alkyl, $C_{1-4}$-Alkoxy, Halogen, Carboxy und Sulfo steht; und $B_2$, X, U, R und $R_2$ die für Anspruch 8 geltenden Bedeutungen haben.

19. Reaktivfarbstoffe gemäss Anspruch 8, der Formel

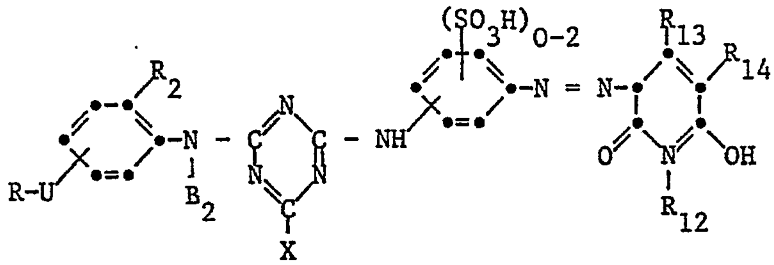

(14) ,

worin $R_{12}$ und $R_{13}$ unabhängig voneinander Wasserstoff, $C_{1-4}$-Alkyl oder Phenyl, und $R_{14}$ Wasserstoff, Cyano, Carbamoyl oder Sulfomethyl ist; und $B_2$, X, U, R und $R_2$ die für Anspruch 8 geltenden Bedeutungen haben.

20. Reaktivfarbstoffe gemäss Anspruch 9, der Formel

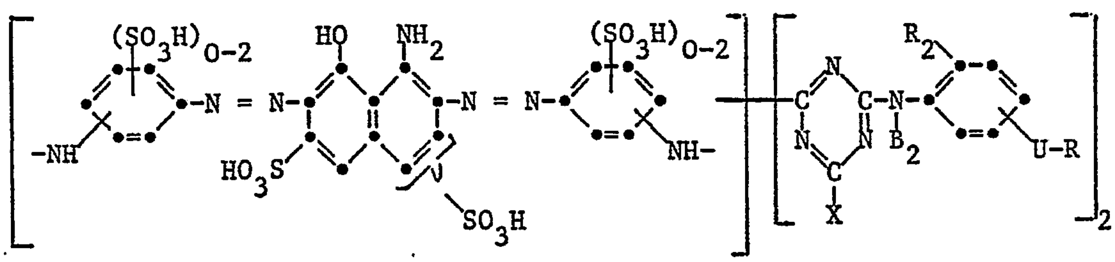

(15) ,

worin $B_2$, X, U, R und $R_2$ die für Patentanspruch 9 geltenden Bedeutungen haben.

21. Schwermetallkomplexe von Reaktivfarbstoffe gemäss Anspruch 1.

22. Reaktivfarbstoffe gemäss Anspruch 1, worin Z die β-Sulfatoäthyl-, β-Chloräthyl- oder Vinylgruppe ist.

23. Verfahren zur Herstellung von Reaktivfarbstoffen gemäss Anspruch 1, dadurch gekennzeichnet, dass man einen organischen Farbstoff der Formel

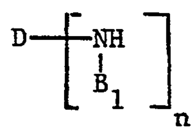

(16)

oder ein Farbstoffvorprodukt, mindestens ein Aequivalent eines s-Triazins der Formel

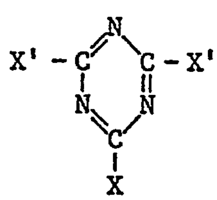

(17) ,

und mindestens ein Aequivalent eines Amins der Formel

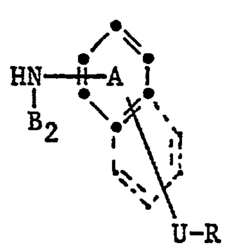

(18)

in beliebiger Folge zu einem Reaktivfarbstoff der Formel (1) umsetzt, wobei D, $B_1$, n, $B_2$, U, R und A die in Anspruch 1 angegebenen Bedeutungen haben, und X und X' unabhängig voneinander eine der in Anspruch 1 für X genannten Bedeutungen haben; oder, im Falle der Verwendung von Farbstoffvorprodukten, die erhaltenen Zwischenprodukte in die gewünschten Endfarbstoffe überführt.

24. Verfahren gemäss Anspruch 23, dadurch gekennzeichnet, dass man einen Farbstoff der Formel

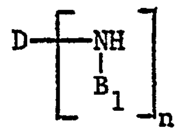

(16)

zunächst mit einem reaktionsfähigen Derivat des s-Triazins der Formel

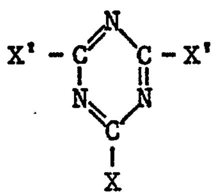

(17)

kondensiert, und die erhaltene Verbindung der Formel

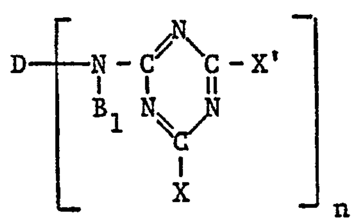

(19)

anschliessend mit einem Amin der Formel

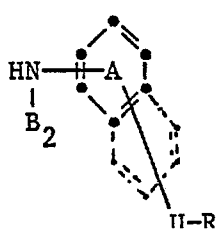

(18)

zu einem Reaktivfarbstoff der Formel (1) kondensiert.

25. Verfahren gemäss Anspruch 23, dadurch gekennzeichnet, dass man eine Komponente des Farbstoffs der Formel (1), die einen Rest der Formel

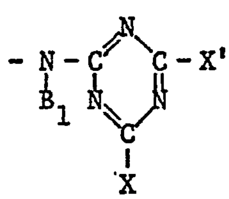

(20)

enthält, worin $B_1$, X und X' die in Anspruch 1 angegebenen Bedeutungen haben, mit einer zur Herstellung des Farbstoffs benötigten zweiten Komponente, die gegebenenfalls einen Rest der Formel (20) enthält, umsetzt, und den so erhaltenen Farbstoff der Formel

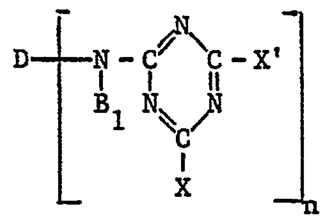

(19)

mit einem Amin der Formel

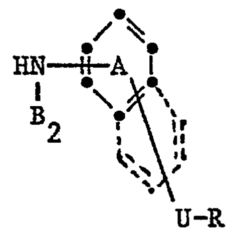

(18)

kondensiert.

26. Verwendung der Reaktivfarbstoffe gemäss Anspruch 1, zum Färben oder Bedrucken von cellulosehaltigen Fasermaterialien.

27. Verwendung gemäss Anspruch 26, zum Färben oder Bedrucken von Baumwolle.

## Claims

1. A reactive dye of the formula

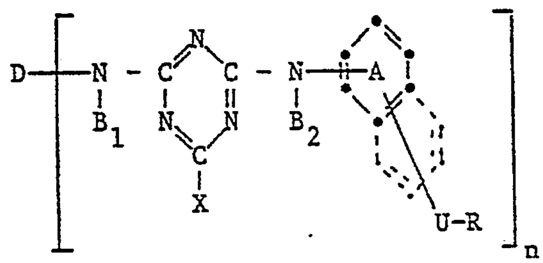

(1)

in which D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye; $B_1$ and $B_2$ independently of each other are hydrogen or alkyl having 1 to 4 carbon atoms, which can be substituted by carboxyl, sulfo, cyano or hydroxyl; X is fluorine, chlorine, bromine, sulfo, alkylsulfonyl having 1 to 4 C atoms or phenylsulfonyl; U is –CO– or –$SO_2$–; R is a radical of the formula

$$Z-SO_2-CH_2-\overset{Y}{\overset{|}{(alk)}}-\underset{V}{\underset{|}{N}}- \qquad (1a)$$

$$Z-SO_2-(CH_2)_m-O-(CH_2)_p-\underset{R_1}{\underset{|}{N}}- \qquad (1b)$$

$$Z-SO_2-(alk')-NH-(alk')-\underset{H}{\underset{|}{N}}- \qquad (1c)$$

or

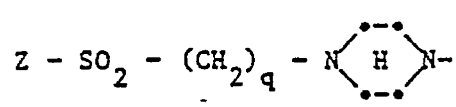

(1d) ;

Z is sulfatoethyl, β-thiosulfatoethyl, β-phosphatoethyl, β-acetoxyethyl, β-halogenoethyl or vinyl; alk is a

polymethylene radical having 1 to 6 C atoms or its branched isomers; Y is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical $-SO_2-$ Z in which Z is defined as above;

V is hydrogen or an alkyl radical having 1 to 4 C atoms which can be substituted by carboxyl, sulfo, carbamoyl, N-methyl-, N-ethyl-, N,N-dimethyl- or N,N-diethylcarbamoyl, cyano, acetyl, propionyl, butyryl, methoxycarbonyl, ethoxycarbonyl, propyloxycarbonyl, sulfamoyl, N-methyl-, N-ethyl-, N,N-dimethyl- or N,N-diethylsulfamoyl, methylsulfonyl, ethylsulfonyl, propylsulfonyl, alkoxy groups having 1 or 2 C atoms, halogen or hydroxyl;

or a radical

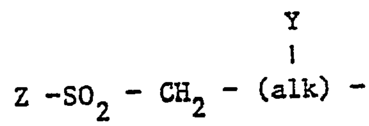

in which Z, alk and Y are as defined above; $R_1$ is hydrogen or $C_{1-6}$alkyl; alk', independently of each other, are polymethylene radicals having 2 to 6 C atoms or their branched isomers; n is 1 or 2, m is 1 to 6, p is 1 to 6 and q is 1 to 6; where, when U is $-SO_2-$, V must not be hydrogen; and the benzene or naphthalene radical A contain further substituents.

2. A reactive dye according to claim 1, of the formula

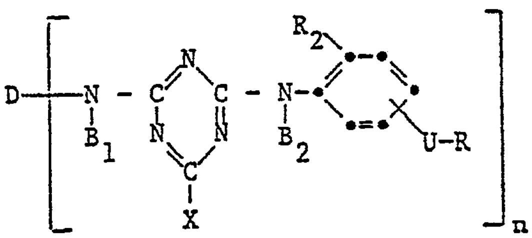

(2)

in which $R_2$ is hydrogen, $C_{1-4}$alkyl, $C_{1-4}$alkoxy, halogen, hydroxyl, carboxyl or sulfo; and D, $B_1$, $B_2$, X, U, R and n are as defined in claim 1.

3. A reactive dye according to claim 1, wherein D is the radical of a monoazo or disazo dye.

4. A reactive dye according to claim 1, wherein D is the radical of a metal complex azo or formazan dye.

5. A reactive dye according to claim 1, wherein D is the radical of an anthraquinone dye.

6. A reactive dye according to claim 1, wherein D is the radical of a phthalocyanine dye.

7. A reactive dye according to claim 4, wherein D is the radical of a 1:1 copper complex azo dye of the benzene or naphthalene series and the copper atom is bonded on each side to a metallizable group in the position relative to the azo bridge.

8. A reactive dye according to claim 3, wherein D is a monoazo or disazo dye radical of the formula

$D_1-N=N-(M-N=N)_q-K-$ (3a),

$-D_1-N=N-(M-N=N)_q-K$ (3b),

$-D_1-N=N-(M-N=N)_q-K-$ (3c),

or

of a metal complex derived therefrom; $D_1$ is the radical of a diazo component of the benzene or naphthalene series, M is the radical of a middle component of the benzene or naphthalene series, and K is the radical of a coupling component of the benzene, naphthalene, pyrazolone, 6-hydroxypyrid-2-one or acetoacetarylamide series, where $D_1$, M and K can carry substituents customary with azo dyes, in particular hydroxyl, amino, methyl, ethyl, methoxy or ethoxy groups, substituted or unsubstituted alkanoylamino groups having 1 to 4 C atoms, substituted or unsubstituted benzoylamino groups or halogen atoms; q is 0 or 1; and $D_1$, M and K together contain at least two sulfo groups, preferably three of four sulfo groups.

9. A reactive dye according to claim 3, wherein D is a disazo dye radical of the formula

$D_1-N=N-K-N=N-D_2-$ (4a),

or $-D_1-N=N-K-N=N-D_2$ (4b),

$D_1$ and $D_2$ are independently of each other the radical of a diazo component of the benzene or naphthalene series, K is the radical of a coupling component of the naphthalene series; where $D_1$, $D_2$ and K can carry substituents customary with azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms; and $D_1$, $D_2$ and K together contain at least two sulfo groups, preferably three or four sulfo groups.

10. A reactive dye according to claim 5, wherein D is the radical of an anthraquinone dye of the formula

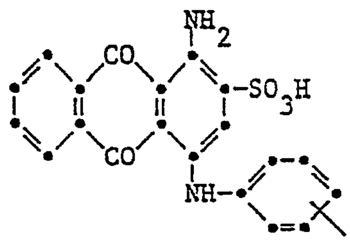

(5)

where the anthraquinone nucles can be substituted by further sulfo group and the phenylene radical by alkyl having 1 to 4 C atoms, alkoxy having 1 to 4 C atoms, halogen, carboxyl or sulfo, and the dye preferably contains at least 2 sulfo groups.

11. A reactive dye according to claim 6, wherein D is the radical of a phthalocyanine dye of the formula

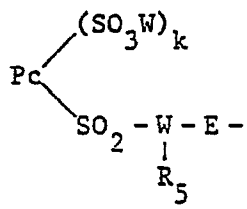

(6)

Pc is the radical of a copper or nickel phthalocyanine; W is –OH and/or $-NR_3R_4$; $R_3$ and $R_4$ are independently of one another hydrogen or alkyl having 1 to 4 carbon atoms, which can be substituted by hydroxyl or sulfo; $R_5$ is hydrogen or alkyl having 1 to 4 carbon atoms; E is a phenylene radical, which can be substituted by alkyl having 1 to 4 C atoms, halogen, carboxyl or sulfo; or an alkylene radical having 2 to 6 C atoms, preferably a sulphophenylene or ethylene radical; and k is 1 to 3.

12. A reactive dye according to claim 8, of the formula

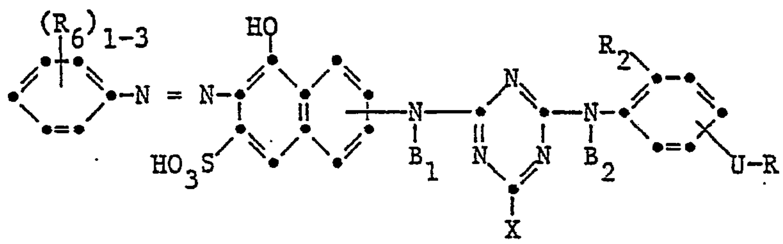

(7)

in which $R_6$ is 1 to 3 substituents from the group $C_{1-4}$alkyl, $C_{1-4}$alkoxy, halogen, carboxyl and sulfo; and $B_1$, $B_2$, X, U, R and $R_2$ are as defined for claim 8.

13. A reactive dye according to claim 8, of the formula

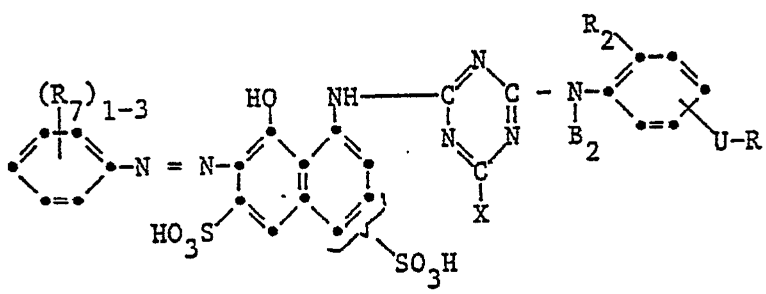

(8)

in which $R_7$ is 1 to 3 substituents from the group $C_{1-4}$alkyl, $C_{1-4}$alkoxy, halogen, carboxyl or sulfo; and $B_2$, X, U, R and $R_2$ are as defined for claim 8.

14. A reactive dye according to claim 8, of the formula

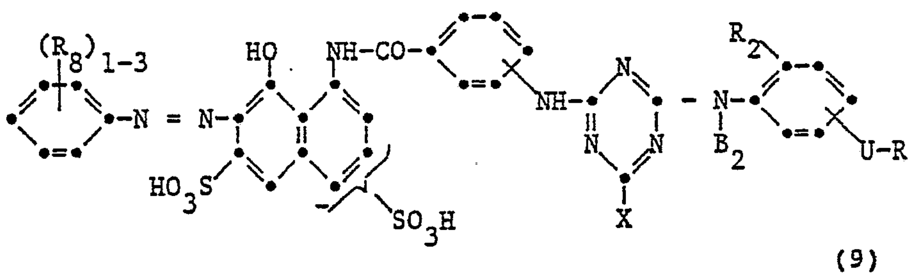

(9)

in which $R_8$ is 1 to 3 substituents of the group $C_{1-4}$alkyl, $C_{1-4}$alkoxy, halogen, carboxyl and sulfo; and $B_2$, X, U, R and $R_2$ are as defined for claim 8.

15. A reactive dye according to claim 8, of the formula

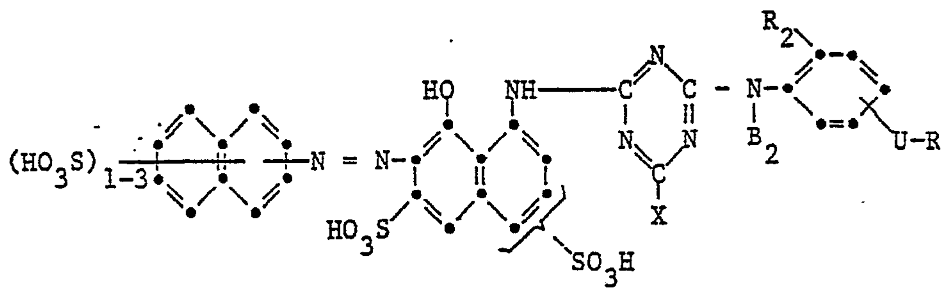

(10)

in which $B_2$, X, U, R and $R_2$ are as defined for claim 8.

16. A reactive dye according to claim 8, of the formula

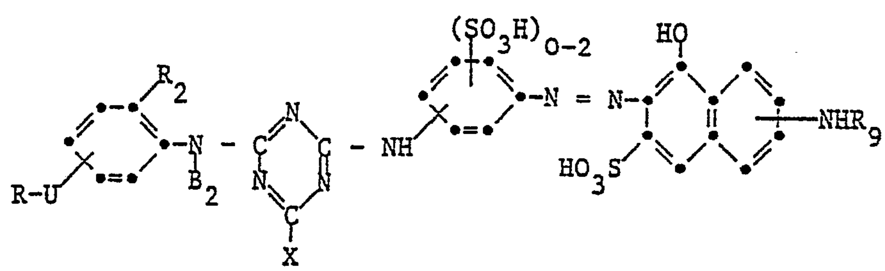

(11)

in which $R_9$ is hydrogen or $C_{1-4}$alkanoyl; and $B_2$, X, U, R and $R_2$ are as defined for claim 9.

17. A reactive dye according to claim 8, of the formula

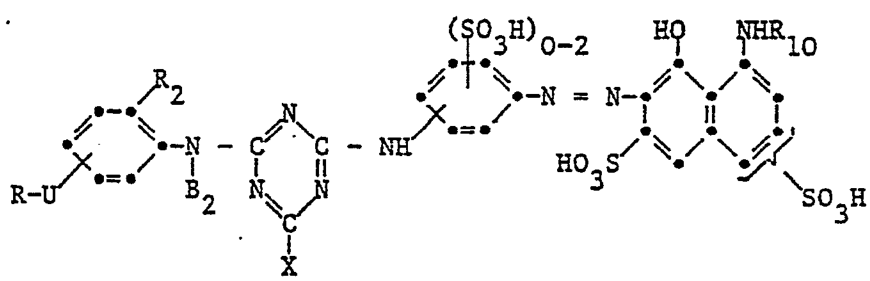

(12)

in which $R_{10}$ is hydrogen, $C_{1-4}$alkanoyl or benzoyl; and $B_2$, X, U, R and $R_2$ are as defined for claim 8.

18. A reactive dye according to claim 8, of the formula

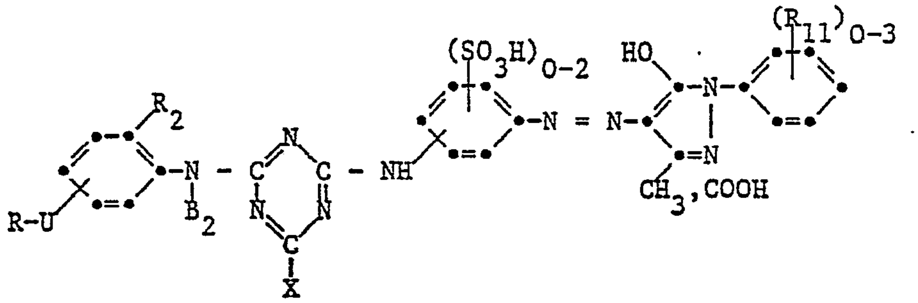

(13)

in which $R_{11}$ is 0 to 3 substituents from the group $C_{1-4}$alkyl, $C_{1-4}$alkoxy, halogen, carboxyl and sulfo; and $B_2$, X, U, R and $R_2$ are as defined for claim 8.

19. A reactive dye according to claim 8, of the formula

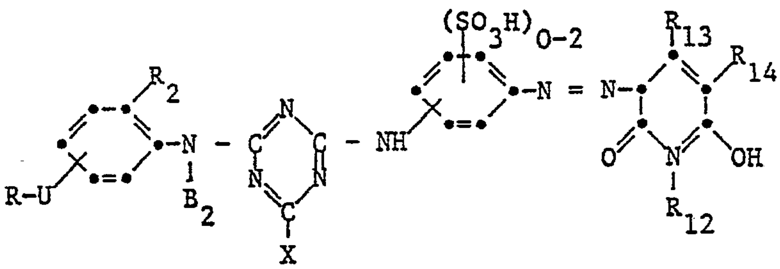

(14)

in which $R_{12}$ and $R_{13}$ are independently of each other hydrogen, $C_{1-4}$alkyl or phenyl, and $R_{14}$ is hydrogen, cyano, carbamoyl or sulfomethyl; and $B_2$, X, U, R and $R_2$ are as defined for claim 8.

20. A reactive dye according to claim 9, of the formula

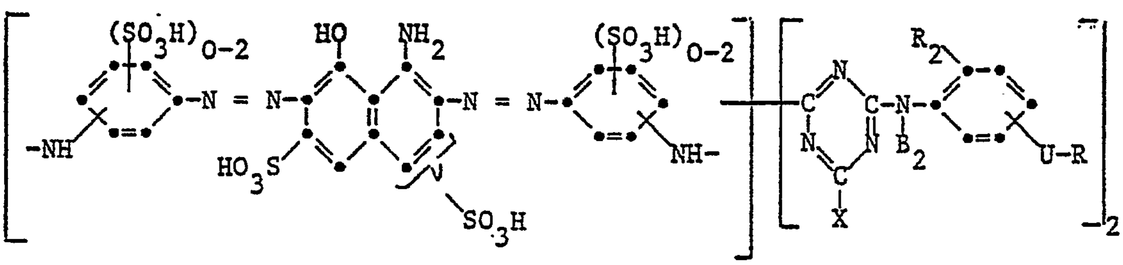

(15)

in which $B_2$, X, U, R and $R_2$ are as defined for patent claim 9.

21. A heavy metal complex of a reactive dye according to claim 1.

22. A reactive dye according to claim 1, wherein Z is the β-sulfatoethyl, β-chloroethyl or vinyl group.

23. A process for preparing a reactive dye according to claim 1, which comprises reacting an organic dye of the formula

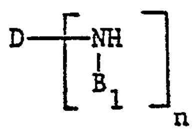

(16)

or a dye precursor, at least one equivalent of an s-triazine of the formula

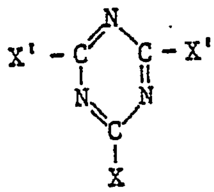

(17)

and at least one equivalent of an amine of the formula

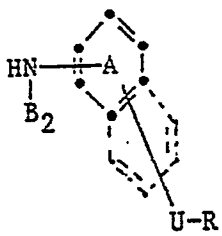

(18)

in any order to give a reactive dye of the formula (1), D, $B_1$, n, $B_2$, U, R and A being as defined in claim 1 and X and X' independently of each other being defined in the same way as X in claim 1; or, in the case of using a dye precursor, converting the resulting intermediate into the desired end dye.

24. A process according to claim 23, wherein a dye of the formula

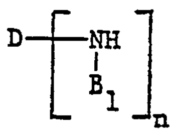

(16)

is condensed first with a reactive derivative of the s-triazine of the formula

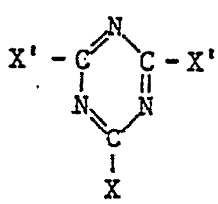

(17)

and the resulting compound of the formula

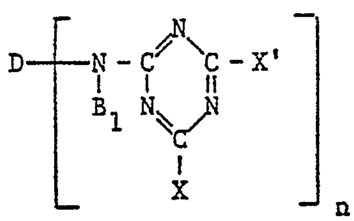

(19)

is subsequently condensed with an amine of the formula

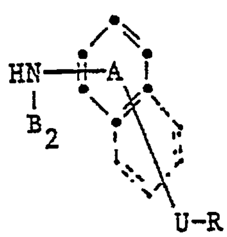

(18)

to give a reactive dye of the formula (1).

25. A process according to claim 23, wherein such a component of the dye of the formula (1) as contains a radical of the formula

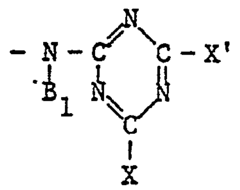

(20)

in which $B_1$, X and X' are as defined in claim 1, is reacted with a second component which is required for preparing the dye and can, if desired, also contain a radical of the formula (20) and the resulting dye of the formula

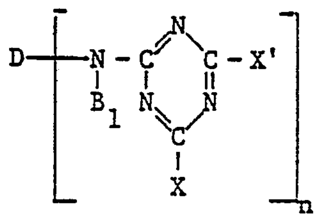

(19)

is condensed with an amine of the formula

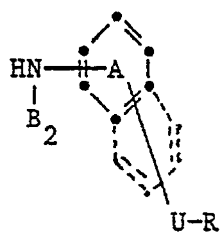

26. Use of a reactive dye according to claim 1, for dyeing or printing cellulose-containing fiber materials.

27. Use according to claim 26, for dyeing or printing cotton.

## Revendications

1. Colorants réactifs de formule

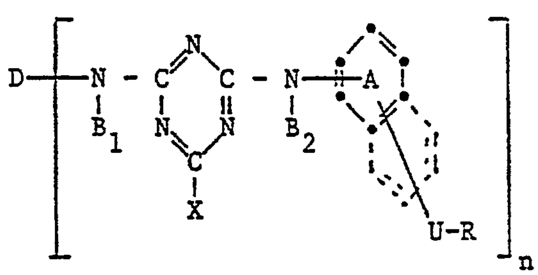

(1) ,

dans laquelle

D est le résidu d'un colorant monoazoïque, polyazoïque, azoïque à complexe métallique, anthraquinonique, de phtalocyanine, de formazan, d'azométhine, de dioxazine, de phénazine, stylbènique, de triphénylméthane, xanthènique, de thioxanthone, nitroarylique, naphtoquinonique, pyrènequinonique, ou perylènetétracarbimidique; $B_1$ et $B_2$, indépendamment l'un de l'autre, sont chacun un hydrogène ou un radical alkyle ayant de 1 à 4 atomes de carbone et pouvant être substitué par un ou plusieurs groupes carboxy, sulfo, cyano ou hydroxy; X est le fluor, le chlore, le brome, le radical sulfo, un radical alkylsulfonyle ayant de 1 à 4 atomes de carbone ou phénylsulfonyle; U est $-CO-$ ou $-SO_2-$; R est un radical de formule

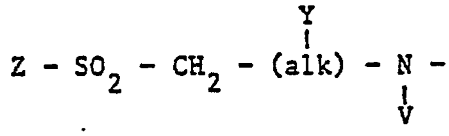 (1a)

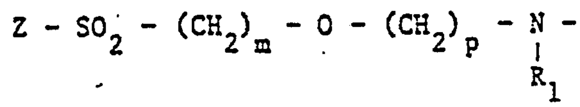 (1b)

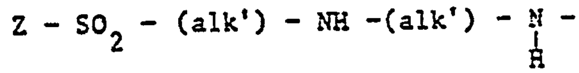 (1c)

ou

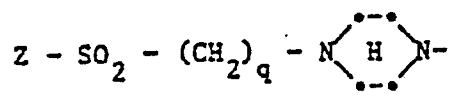 (1d) ;

Z est le radical sulfatoéthyle, β-thiosulfatoéthyle, β-phosphatoéthyle, β-acétoxyéthyle, β-halogénoéthyle ou vinyle; alk désigne un radical polyméthylène ayant de 1 à 6 atomes de carbone ou ses isomères ramifiés; Y est un hydrogène, chlore, brome, fluor, hydroxy, le radical sulfato, un radical acyloxy ayant de 1 à 4 atomes de carbone, le radical cyano, carboxy, un radical alcoxycarbonyle ayant de 1 à 5 atomes de carbone, le radical carbamoyle, ou encore un radical $-SO_2-Z$ dans lequel Z a les significations données ci-dessus;

V est hydrogène ou un radical alkyle ayant de 1 à 4 atomes de carbone, pouvant être substitué par un ou plusieurs groupes carboxyle, sulfo, carbamoyle, N-méthyl-, N-éthyl-, N,N-diméthyl- ou N,N-diéthylcarbamoyle, cyano, acétyle, propionyle, butyryle, méthoxycarbonyle, éthoxycarbonyle, propyloxycarbonyle, sulfamoyle, N-méthyl-, N-éthyl-, N,N-diméthyl- ou N,N-diéthyl-sulfamoyle, méthylsulfonyle, éthylsulfonyle, propylsulfonyle, alcoxy ayant 1 ou 2 atomes de carbone, halogène ou hydroxy; ou un radical

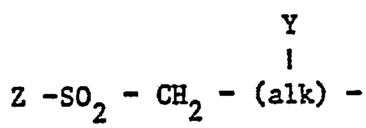

dans lequel Z, alk et Y ont les significations données ci-dessus; R' est hydrogène ou un radical alkyle en $C_1-C_6$; les radicaux alk', indépendamment les uns des autres, sont des radicaux polyméthylène ayant de 2 à 6 atomes de carbone ou leurs isomères ramifiés; $n = 1$ ou 2, $m = 1$ à 6, $p = 1$ à 6 et $q = 1$ à 6; et, si U est $-SO_2-$, V ne peut être hydrogène; et le radical benzène ou naphtalène A peut contenir des substituants supplémentaires.

2. Colorants réactifs selon la revendication 1, ayant la formule suivante

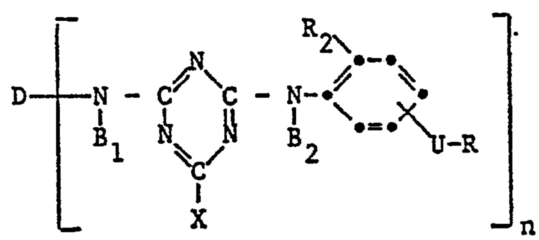 (2) ,

dans laquelle $R_2$ est hydrogène, un radical alkyle en $C_{1-4}$, alcoxy en $C_{1-4}$, halogène, hydroxy, carboxy ou sulfo; et D, $B_1$, $B_2$, X, U, R et n ont les significations données dans la revendication 1.

3. Colorants réactifs selon la revendication 1, dans lesquels D est le résidu d'un colorant monoazoïque ou disazoïque.

4. Colorants réactifs selon la revendication 1, dans lesquels D est le résidu d'un colorant azoïque à complexe métallique ou un colorant de formazan.

5. Colorants réactifs selon la revendication 1, dans lesquels D est le résidu d'un colorant anthraquinonique.

6. Colorants réactifs selon la revendication 1, dans lesquels D est le résidu d'un colorant de phtalocyanine.

7. Colorants réactifs selon la revendication 4, dans lesquels D est le résidu d'un colorant azoïque à complexe de cuivre 1:1 de la série du benzène ou du naphtalène, et chaque atome de cuivre est lié à un groupe métallisable, des deux côtés en position ortho par rapport au pont azoïque.

8. Colorants réactifs selon la revendication 3, dans lesquels D est un résidu d'un colorant monoazoïque ou disazoïque de formule

$D_1 - N = N - (M - N\ N)_q - K -$ (3a),

$- D_1 - N = N - (M - N)_q - K -$ (3b),

ou $- D_1 - N = N - (M - N = N)_q - K -$ (3c),

ou un complexe métallique qui en dérive; $D_1$ est le résidu d'un composant diazo de la série du benzène ou du naphtalène, M est le résidu d'un composant moyen de la série du benzène ou du naphtalène, et K est le résidu d'un composant de copulation de la série du benzène, du naphtalène, de la pyrazolone, de la 6-hydroxypyridine-(2) ou de l'acétoacétarylamide, où $D_1$, M et K peuvent porter des substituants courants dans les colorants azoïques, en particulier des groupes hydroxy, amino, méthyle, éthyle, méthoxy ou éthoxy, des groupes alcanoylamino éventuellement substitués ayant de 2 à 4 atomes de carbone, des groupe benzoylamino éventuellement substitués ou des atomes d'halogène; q = 0 ou 1; et $D_1$, M et K contiennent ensemble au moins deux groupes sulfo, de préférence trois ou quatre groupes sulfo.

9. Colorants réactifs selon la revendication 3, dans lesquels D est un résidu de colorant disazoïque de formule

$D_1 - N = N - K - N = N - D_2 -$ (4a),

ou $- D_1 - N = N - K - N = N - D_2 -$ (4b),

$D_1$ et $D_2$, indépendamment l'un de l'autre, sont chacun le résidu d'un composant diazo de la série du benzène ou du naphtalène et K est le résidu d'un composant de copulation de la série du naphtalène; où $D_1$, $D_2$ et K peuvent porter des substituants habituels dans les colorants azoïques, en particulier des groupes hydroxy, amino, méthyle, éthyle, méthoxy ou éthoxy, des groupes alcanoylamino éventuellement substitués ayant de 2 à 4 atomes de carbone, des groupes benzoylamino éventuellement substitués ou des atomes d'halogène; et $D_1$, $D_2$ et K contiennent ensemble au moins deux groupes sulfo, de préférence trois ou quatre groupes sulfo.

10. Colorants réactifs selon la revendication 5, dans lesquels D est le résidu d'un colorant anthraquinone de formule

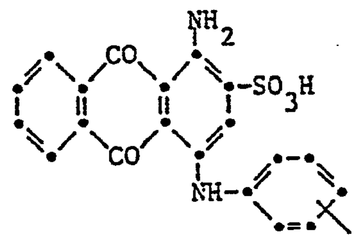

(5)

où le noyau anthraquinonique peut être substitué par un groupe sulfo complémentaire, et le radical phénylène par un groupe alkyle ayant de 1 à 4 atomes de carbone, alcoxy ayant de 1 à 4 atomes de carbone, un halogène ou le radical carboxy ou sulfo, et le colorant contient de préférence au moins deux groupes sulfo.

11. Colorants réactifs selon la revendication 6, dans lesquels D est le résidu d'un colorant phtalocyanine de formule

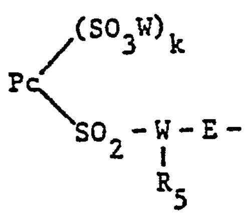

(6) ,

dans laquelle Pc est le résidu d'une phtalocyanine de cuivre ou de nickel; W est $-OH$ et/ou $-NR_3R_4$; $R_3$ et $R_4$, indépendamment l'un de l'autre, sont chacun un hydrogène ou un radical alkyle ayant de 1 à 4 atomes de carbone, pouvant être substitués par hydroxy ou sulfo; $R_5$ est hydrogène ou un radical alkyle ayant de 1 à 4 atomes de carbone; E est un radical phénylène, qui peut être substitué par un ou plusieurs radicaux alkyle ayant de 1 à 4 atomes de carbone, halogène, carboxy ou sulfo; ou encore un radical alkylène ayant de 2 à 6 atomes de carbone, de préférence un radical sulfophénylène ou éthylène; et k = 1 à 3.

12. Colorants réactifs selon la revendication 8, de formule

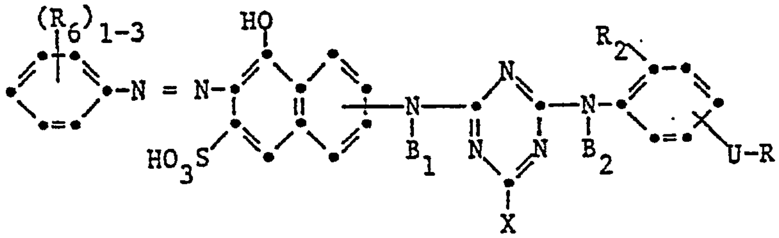

(7) ,

dans laquelle $R_6$ représente 1 à 3 substituants de l'ensemble comprenant les groupes alkyle en $C_{1-4}$, alcoxy en $C_{1-4}$, halogène, carboxy et sulfo; et $B_1$, $B_2$, X, U, R et $R_2$ ont les significations données dans la revendication 8.

13. Colorants réactifs selon la revendication 8, de formule

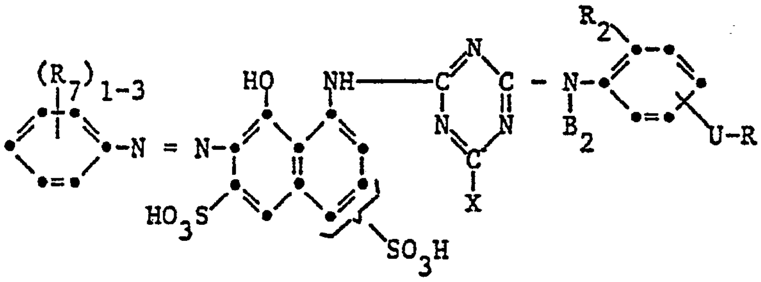

(8) ,

dans laquelle $R_7$ représente 1 à 3 substituants de l'ensemble comprenant les groupes alkyle en $C_{1-4}$, alcoxy en $C_{1-4}$, halogène, carboxy et sulfo; et $B_2$, X, U, R et $R_2$ ont les significations données dans la revendication 8.

14. Colorants réactifs selon la revendication 8, de formule

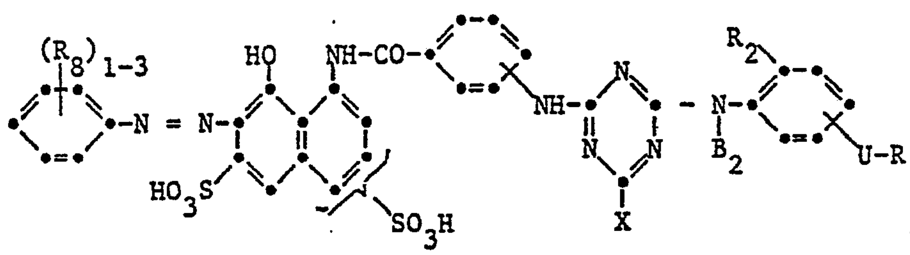

(9) ,

dans laquelle $R_8$ représente 1 à 3 substituants de l'ensemble comprenant les groupes alkyle en $C_{1-4}$, alcoxy en $C_{1-4}$, halogène, carboxy et sulfo; et $B_2$, X, U, R et $R_2$ ont les significations données dans la revendication 8.

15. Colorants réactifs selon la revendication 8, de formule

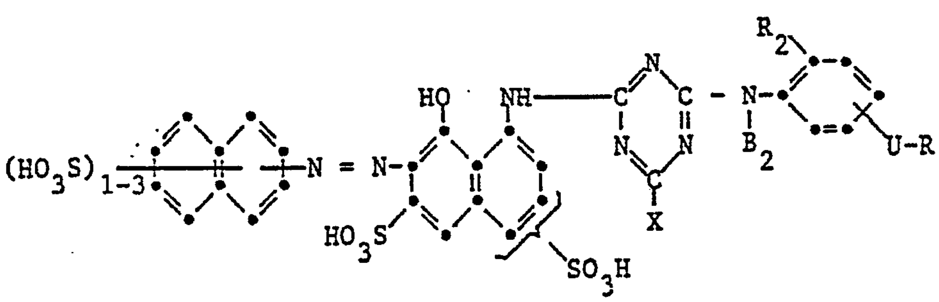

(10) ,

dans laquelle $B_2$, X, U, R et $R_2$ ont les significations données dans la revendication 8.

16. Colorants réactifs selon la revendication 8, de formule

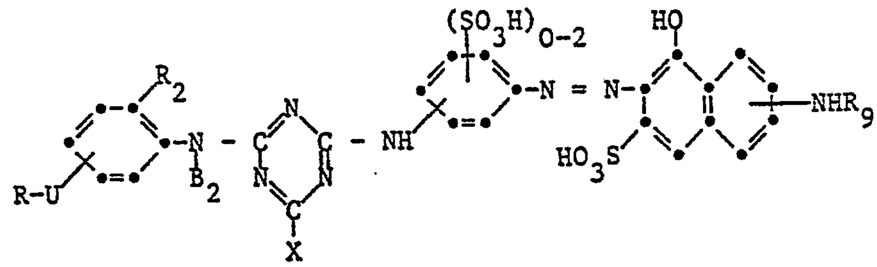

(11) ,

dans laquelle $R_9$ est hydrogène ou un radical alcanoyle en $C_{1-4}$; et $B_2$, X, U, R et $R_2$ ont les significations données dans la revendication 9.

17. Colorants réactifs selon la revendication 8, de formule

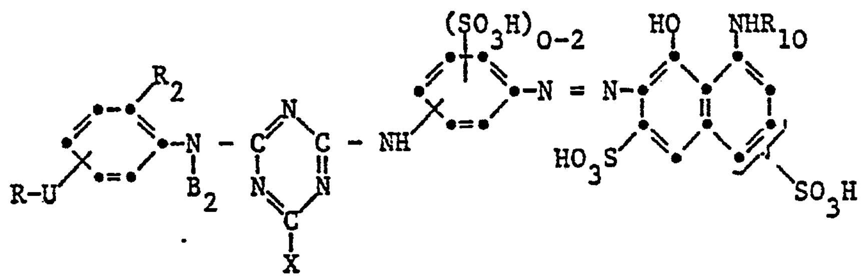

(12) ,

dans laquelle $R_{10}$ est un hydrogène, un radical alcanoyle en $C_{1-4}$ ou le radical benzoyle; et $B_2$, X, U, R et $R_2$ ont les significations données dans la revendication 8.

18. Colorants réactifs selon la revendication 8, de formule

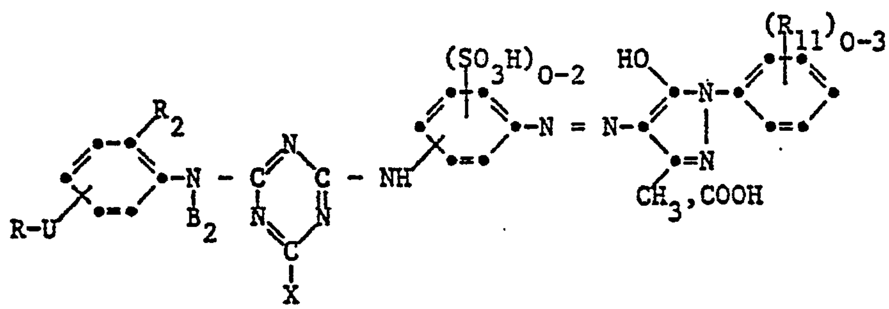

(13) ,

dans laquelle $R_{11}$ représente 0 à 3 substituants de l'ensemble comprenant les groupes alkyle en $C_{1-4}$, alcoxy en $C_{1-4}$, halogène, carboxy et sulfo; et $B_2$, X, U, R et $R_2$ ont les significations données dans la revendication 8.

19. Colorants réactifs selon la revendication 8, de formule

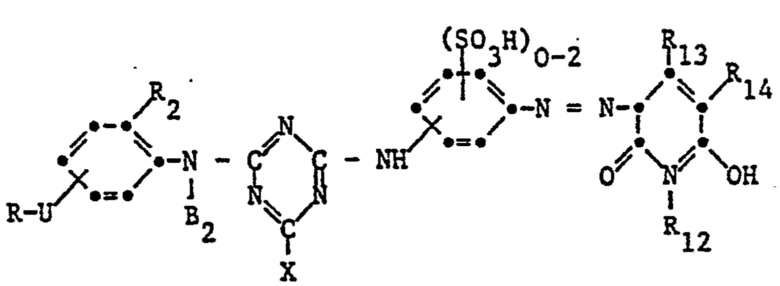

(14) ,

dans laquelle $R_{12}$ et $R_{13}$, indépendamment l'un de l'autre, sont chacun hydrogène, un radical alkyle en $C_{1-4}$, ou le radical phényle, et $R_{14}$ est hydrogène ou le radical cyano, carbamoyle ou sulfométhyle; et $B_2$, X, U, R et $R_2$ ont les significations données dans la revendication 8.

20. Colorants réactifs selon la revendication 9, de formule

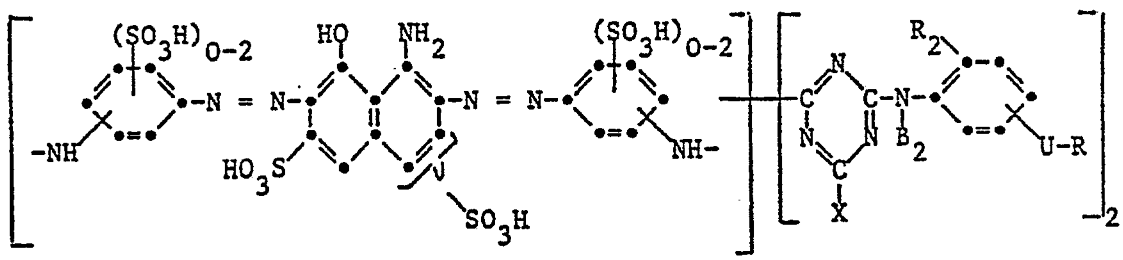

(15) ,

dans laquelle B2, X, U, R et R2 ont les significations données dans la revendication 9.

21. Complexes de métaux lourds de colorants réactifs selon la revendication 1.

22. Colorants réactifs selon la revendication 1, où Z est le groupe β-sulfatoéthyle, β-chloroéthyle ou vinyle.

23. Procédé pour la préparation de colorants réactifs selon la revendication 1, caractérisé en ce qu'on fait réagir un colorant organique de formule

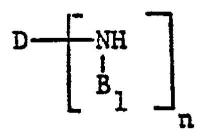

(16)

ou un précurseur de colorant, au moins un équivalent d'une s-triazine de formule

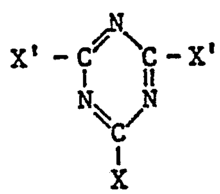

(17) ,

et au moins un équivalent d'une amine de formule

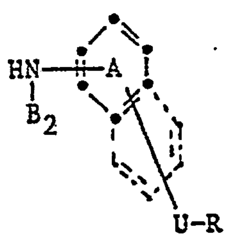

(18)

dans un ordre quelconque, pour donner un colorant réactif de formule (1), où D, $B_1$, U, $B_2$, n, R et A ont les significations données pour la formule (1) et X et X', indépendamment l'un de l'autre, ont chacun l'une des significations données pour X à propos de la formule (1); ou encore, si l'on utilise des précurseurs de colorants, on convertit les produits intermédiaires obtenus en les colorants finals recherchés.

24. Procédé selon la revendication 23, caractérisé en ce qu'on condense d'abord un colorant de formule

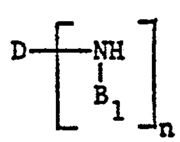

(16)

avec un dérivé réactif de la s-triazine de formule

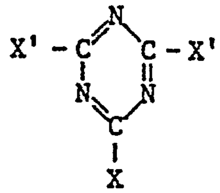

(17)

puis qu'on condense le composé obtenu, de formule

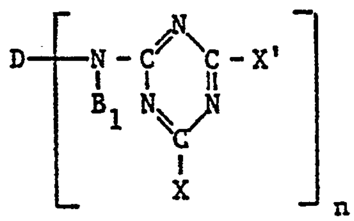

(19)

avec une amine de formule

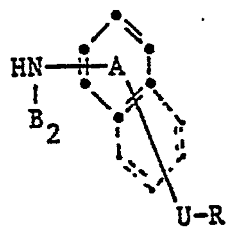

(18)

pour obtenir un colorant réactif de formule (1).

25. Procédé selon la revendication 23, caractérisé en ce qu'on fait réagir un composant du colorant de formule (1), qui contient un résidu de formule

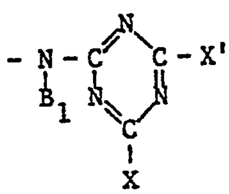

(20)

dans laquelle $B_1$, X et X' ont les significations données dans la revendication 1, avec un deuxième composant, nécessaire à la préparation du colorant, et contenant éventuellement un résidu de formule (20), et qu'on condense le colorant ainsi obtenu, de formule

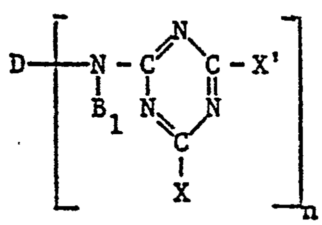

(19)

avec une amine de formule

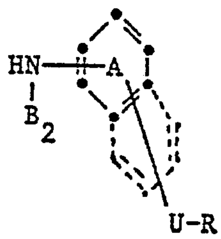

(18)

26. Utilisation des colorants réactifs selon la revendication 1 pour la teinture ou l'impression de matières fibreuses cellulosiques.

27. Utilisation selon la revendication 26 pour la teinture ou l'impression de coton.